(19) Europäisches Patentamt
European Patent Office
Office européen des brevets

(11) EP 3 466 519 A1

(12) **EUROPEAN PATENT APPLICATION**
published in accordance with Art. 153(4) EPC

(43) Date of publication:
**10.04.2019 Bulletin 2019/15**

(21) Application number: **16904525.9**

(22) Date of filing: **07.06.2016**

(51) Int Cl.:
***B01D 39/10*** *(2006.01)*

(86) International application number:
**PCT/ES2016/070425**

(87) International publication number:
**WO 2017/212079 (14.12.2017 Gazette 2017/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
- **Technokontrol Global, Ltd**
  **London EC1V 4PY (GB)**
- **Cañada Sierra, Laura**
  **17800 Olot Gerona (ES)**

(72) Inventor: **CAÑADA SIERRA, Laura**
**17800 Olot Gerona (ES)**

(74) Representative: **González López-Menchero, Álvaro Luis**
**Protectia Patentes y Marcas, S.L.**
**C/ Arte 21, 2°A**
**28033 Madrid (ES)**

(54) **ALLOYED BODY IN A LAMINAR OR OTHER FORMAT, WHICH ELIMINATES ALL TYPES OF VAPORISATION AND EMISSION**

(57) The invention relates to an alloyed body in a laminar or other format, which eliminates all types of vaporisation and emission, the body forming cloths of perforated material that are provided by at least one are having a plurality of polygonal openings, at least one of said polygonal openings being irregular with respect to at least one continuous polygonal opening. According to the invention, the cloths have a surface area per unit of volume that is approximately 3,500 times the contact surface of any flammable fluids contacted, the alloyed body having a heat conduction capacity of at least approximately 0.020 cal/cm-s. The inner peripheral length of at least one of the openings differs from the peripheral length of at least one contiguous opening. The alloyed body can also have a spheroidal or cylindrical shape.

10
T
4
12
14
12
12
12
12
5
14
14
14
5
P
P
4
12
14
14
12
14
12
P
P
P
P

Figure 3

EP 3 466 519 A1

## Description

Alloyed body in a laminar or other format, which eliminates all types of vaporisation and emission

## DESCRIPTION OF THE INVENTION

Suppressor, reducer, filter, protector of all types of vaporisation of energy components-emissions, volatile hydrocarbons, liquids, gases, emissions of any class or type of pollutants or non-pollutants, including waves of any type or shape, especially electromagnetic waves.

The present invention relates to sheets for inhibiting the propagation of high-speed scattered waves, vapours from flammable fluids, the purpose of which is to configure sheets of perforated material, which is provided by at least one arc having a plurality of polygonal openings, and at least one of said polygonal openings is irregular with respect to at least one continuous polygonal opening, and which have a surface area per unit of volume that is approximately 3,500 times the contact surface of the flammable fluids in a container and which have a heat conduction capacity of at least approximately 0.020 cal/cm-s.

It should be indicated that, preferably, the inner peripheral length of one of the openings differs from the inner peripheral length of at least one contiguous opening, and furthermore, the invention preferably has a compression field no greater than 7%.

Thus, a sheet of perforated material that produces a configuration that is resistant to settling and becoming compact is achieved, helping to eliminate, reduce, filter the vapourisation of polluting or non-polluting hydrocarbons, gases or liquids in a closed container, pipes, gas pipelines, pipelines, gas bottles, chimneys, exhaust pipes, fuel tanks, tanker trunks, ships, planes, railway wagons for transporting petrochemical hydrocarbons containing polluting or non-polluting flammable fluids, chemical products, gases or liquids to particularly inhibit, reduce, eliminate, filter hydrocarbons.

In this invention a thermal sheet made of heat conducting material is used, which preferably has the aforementioned physical properties.

They act as a suppressor, reducer, filter, protector of all types of vapourisation of energy components, volatile hydrocarbons, liquids, gases, emissions of any class or type of pollutants or non-pollutants, including waves of any type or shape, especially electromagnetic waves.

### Field of the invention

This invention is applicable within the industry dedicated to manufacturing items, systems, technologies and/or manufacturing systems to be used as a suppressor, reducer, filter, accelerator of the filling rate of all types of liquids, gases, vapourisation of energy components, volatile hydrocarbons, liquids and gases of any type or class maintained, stored, transported in vessels, closed containers, pipes, gas pipelines, deposits, and in particular to inhibit, reduce, eliminate, filter the vapourisation-emissions of any type including those of liquids and gases due to expansion, heating, movement, emission, discharge of any type of liquid, gas, hydrocarbon, crude oil, solvent, alcohol, biodiesel, ketone, methane, butane, propane, pentane, hexane, octane, gasoline, alcohol, fuel, kerosene, ether, and all types of solvents, paints and toluene, as well as vapours due to any other cause.

By using this invention in a format to be filled inside a "valve / filter" that is adapted for its use in the filling / infeed / discharge heads in pipes, ducts, pipelines, exhaust pipes / emissions / chimneys for its use, expulsion, emission, evacuation, transportation, infeed, discharge of liquids, gases, hydrocarbons or polluting or non-polluting fumes, pumping stations, gas pipelines, oil pipelines, infeed / discharge of bottles / cylinders of gas, hydrocarbon storage tanks, gas stations, discharge/infeed terminals, oil platforms or chemical product plants, deposits, vessels including emissions / evacuation / expulsion of fumes, vapours, gases in or for all types of motors driven with any type of present or future energy, an acceleration / increase of 20% - 45% of the discharge / infeed / evacuation / filling rate of the liquids, gases or hydrocarbons is achieved as compared to any common or present discharge / infeed / filling system without the necessary help of mechanical injectors / compressors. Nevertheless, any additional injection / compression system can also be used if so desired, where the invention would function with the same benefit in the increase of the rate from 20% to 45%.

The invention in this case is installed in the infeed / discharge / filling valves / heads of said installation types previously and subsequently described in this invention, especially in tanker trucks, tanker ships, deposits, pipes, planes in order to increase the infeed / discharge / filling rate and save the infeed / discharge / filling time with cost savings, reduced time, greater amortisation of the systems or transportation means, increased safety by being exposed to high-risk areas for less time, such as fuel infeed / discharge terminals, ports, airports, and with the savings in the loss of vapourisation of said liquids, gases and especially hydrocarbons.

The cloth of the suppressor, reducer, dissipator, filter, infeed / filling / discharge accelerator valve for all types of gases, liquids, hydrocarbons, fumes, polluting and non-polluting emissions that is introduced into the filling heads of all types of pipes, gas pipelines, oil pipelines, pipelines, hoses independently increases the filling, infeed, discharge rate and the following formula is applied to explain the technical viability and innovation of the invention with its corresponding technical and physical explanation.

$$Re = V_s D / v. \text{ (Formula no. 1)}$$

// Re = Reynolds number - Vs = Characteristic rate of the fluid - v = kinematic viscosity of the fluid.//

The flow is laminar throughout the entire pipe until reaching the filling point where the filling valve described in the invention is located; the laminar flow of the fluid is transformed into a turbulent flow, thereby increasing the Reynolds number.

This benefit from the increase in the rate occurs when using the invention at this point by means of its installation in a valve, casing, body, base, gasket, system specifically manufactured from any material needed for the correct, effective and safe installation thereof in order to ensure the increase in discharge / infeed / filling with an increase in the rate between 20% and 45% according to the type of liquid, gas, hydrocarbons that must be transported, discharged, infed or filled.

In addition to achieving this increase in the rate by means of the discharge / infeed valve without the required use of forced injection / compression systems, the invention achieves the complete neutralisation of static discharges of any type caused naturally, environmentally, accidentally or intentionally, which can cause explosions or fire in the discharge / infeed / filling points, such as refineries, discharge terminals, ports, airports, gas stations, tanker trunks, etc.

The invention, given the manufacturing system thereof and the type of alloys also used inside the valve, makes it so that any type of explosion, fire, spark, hot spot is reduced, eliminated, dissipated at these specific infeed/discharge/filling points in all types of vessels, deposits, hydrocarbon infeed terminals, refineries, storage of petrochemical products, etc.

The invention achieves protection against the growth of algae in the stored liquids and anti-rust protection in the vessels made from metal, the invention being installed in new installations without signs of rust or algae or the physical and/or chemical stop in the growth of algae or rust if implemented in installations that are already operating or affected by rust or algae. The invention can be installed in all types of vessels, discharge systems, oil pipelines, gas pipelines, cisterns, deposits, refineries, terminals or pumping systems of hydrocarbons, gases or liquids of any type in order to ensure this additional or individual protection.

## STATE OF THE ART

The present invention relates to the overall problem of the vapourisation-emissions of gases, hydrocarbons, polluting and non-polluting emissions from energy production and generation industries, especially those that cause environmental damage and financial losses that affect all inhabitants of the planet.

The alloy body can have physical shapes in different formats and sizes, although the usual shape is in the form of mesh, spheres, pellets, cylinders. However, the alloy body can adapt its design based on each particular use, thus being more effective, resistant and applicable.

Based on the format and design, the size of the alloy body and the technical composition and formulation of the metals that make up the alloy body make it so that different types of alloys with different properties and characteristics that can improve or worsen the effectiveness and operation thereof are obtained.

It is also important to use the proper format for each type of deposit, cylinder or object to be protected, since the operation of introducing alloys shall be carried out with one form or another, based on the accessibility of the deposit. The sphere form is easier to install in deposits, tanks or vessels with restricted or limited access, such as the case of a deposit of an automobile, a motorcycle, deposits without physical access for an installer from the outside. It is easier and more efficient to introduce the mesh format in installations with open access, in production, with openings, doors or without having physically closed said tanks, thereby facilitating the access of technical installers of the installation, such as the engineer team.

For the proper functioning, efficiency, durability, operability and safety of the alloys used in each installation, storage site, since they have so many applications and a wide variety of sites where they can be installed, other factors must be considered, such as location, exposure to weather elements such as temperature, humidity, salinity, the state of the installations, the degree of rust, the degree of algae growth, the composition of the hydrocarbons of the deposit, etc.

They can generate risks and possible operative incidents during the life of said installations, but by using our alloys, they solve said risks and incidents. Whether they are used in places where there is a significant amount of compression, such as their use in tanks of liquified gas, bottles of butane, cylinders, LPG, CNC, CNG, places such as ship tanks, fuel transportation means, or whether they are used in other places where different factors are also important, such as the reduction of the "water hammer" effect in order to protect the physical integrity of the tanks protected by the structural stress of said tanks in which the fuel, such as diesel, entails a greater risk to fixed tanks wherein their exposure to weather elements, such as contact with the saline humidity of maritime ports, are other factors to consider, and our alloy is used, which is an effective and proven technology for solving said risks and possible operative incidents during the life of said installations.

Not to mention the complete elimination of the risk of explosions and the maximum reduction of vapourisation levels which with said alloys is not only a solution for the risk level of storing said fuels, hydrocarbons, chemical products or liquified gases under pressure, but it also is and has values that are already tested and verified by international testing institutions, which have already proven that the reduction of vapourisation levels is very high when using said alloys, and thus it is not only a technology for safety, prevention of accidents or operative incidents in these high risk sectors, or to protect critical infrastructures until the emissions of the most polluting components of hydrocarbons are reduced, at the same time reducing pollution-emission levels such as that of CO, CO2, SO2, SO3, SO4, NOX, for the use of the alloys in said storage areas of said hydrocarbons and/or fuels.

By using the alloy body we manage to drastically reduce, eliminate, filter the vapourisation-emissions of gases, fumes by up to 98% of any loss / polluting emissions to the atmosphere. Said vapourisation has very important consequences on an economic level since most containers, deposits, means of transportation, refineries have recognised losses that are incorporated into their business plans, from 10% to 20%-30% in the worst cases, given the losses of vapourisation-emissions of the most volatile, damaging components that have greater energy power in the chain of the hydrocarbons. Poor conditions, the low maintenance of said deposits, petrochemical installations and especially those for generating energy by means of the use of fossil hydrocarbons are some of the causes of the significant vapourisation-emissions of these industries. The losses are greater in countries where temperatures and the weather, heat, environmental humidity facilitate said vapourisation and said gas emissions of the hydrocarbons or chemical products stored or transported by means of tanker trucks, tanker ships, pipes / ducts, oil pipelines, gas pipelines, not limiting the means of transport as a transportation business or self-driven business. These losses by vapourisation cause economic losses worth millions of euros due to having to have explored, extracted, manufactured, transformed, transported said hydrocarbons, gases and the derivatives thereof which have already led to a high economic cost of generation and exploitation, said losses are then transferred from the industries to the final customers, with the highest prices of the final fuel, due to having to amortise and compensate for these losses / investment in the industries and especially in petrochemical industries. The same occurs with the storage of the strategic reserves of each country or region where these losses have to be continually replaced / refilled with more hydrocarbons due to the continuous vapourisation of said strategic or emergency storage.

Said vapourisation-emissions of hydrocarbons, gases, vapourisation of chemical products also cause highly significant environmental damage, where not only is the economic factor important, but so is the quality of our air/atmosphere, where these emissions cause physical, ecological, environmental harm to us, as well as irreversible damage to all living beings and especially to the food chain in agriculture, fishing, livestock, water, etc. These emissions are then directly or indirectly ingested by living beings and affect the atmospheric layer. These polluting emissions especially cause damage to the ozone layer and create areas with a high concentration of pollution, "acid rain". For example, in countries such as Nigeria and in very populated cities, such as Mexico City and the capital of china. Damages from the use of contaminated foods/liquids lead to high expenditure in treatments, drugs, the loss of life quality, a decrease in life expectancy and global environment.

The use of fuels that pollute less and are more efficient is a principle already marked by all international treaties and countries; therefore it is able to offer safe and efficient technology and use in all logistics, transportation, industrialisation, energy sectors so require it in order to achieve a cleaner world and thus ensure that future generations can enjoy this planet in conditions equal to or better than the current conditions.

It is possible that the greatest risk of using gases, liquified gases, hydrogen, LPG, CNG, CNC, compressed air in the automation, aviation, logistics sectors, etc. is the risk of explosion due to operational reasons, accidental poor combustion, attacks, etc. Knowing beforehand that a cylinder of gas of a vehicle with 50 kilos of gas leads to a shock wave of at least 200-500 kilos of dynamite (TNT), we must inform users that the technology and use of said fuels is excellent for the environment, but there is alternative or operational safety such as the one presented in this invention since there is fear of suffering not only the possible damages from an accident, but also the strong likelihood of death due to the explosion of said tanks that are refilled with these fuels without additional protection by means of the use of our alloys. With the use of our alloys, there is no risk of explosion, as well as other highly beneficial technical factors, such as extending the operational life of the deposits due to stopping corrosion, the growth of algae, structural stress, stopping static infeed, electromagnetic pulses of a military, human or natural origin (solar pulses), condensation.

Another important factor is the reduction of the thickness of said tanks to 1.7 mm or less, which reduces the weight; thus, the use thereof is also feasible in the aeronautical sector for which there are environmental reports that indicate that it causes 8% to 15% of the world's pollution according to each polluting component emitted.

Therefore, it is not only a safety solution, but also an environmental solution with significant value for the fight against global pollution.

Another major problem of deposits, tanks, vessels that store liquified gases or hydrocarbons under pressure, including hydrogen and compressed air, is that reducing the thickness of the tanks to equal to or less than 1.7 mm can lead to the possibility that the tanks explode when the pressure exceeds 2 bars; however, with the use of our alloys in said storage areas, reduction of the thickness of said tanks is compatible with the storage of gases at a pressure greater than 100 bars; therefore, a solution can be provided for storing any type of hydrocarbon, including those with greater compression, such as liquified gases.

The aviation sector can already use these more ecological fuels, such as LPG, CNG in the deposits thereof and they are more than feasible, since they will also have other added benefits, such as the reduction of fuel expenses which entails savings of at least between 50%-65% of the cost of kerosenes, Jet-A1. Therefore, there is the possibility of being able to fly greater distances since it is a gas that is much lighter than kerosene, at least 50% lighter, and at the same time more cargo and/or passengers can be transported. Another significant benefit is that the technology of transforming the engines of existing planes is easily adaptable, transformation that therefore is not a negative factor, but by being a clean fuel, the maintenance, repair and life of said engines is much cheaper since the fuel that is used is less damaging; therefore, by providing our technology for highly safe storage without the risk of explosion or deflagration, there would be no excuse for adapting and improving the levels of pollution, not to mention the cost savings of companies and governments due to the savings in the expenditure on environmental sanctions or carbon credits that entail thousands of millions of euros globally every year.

The world of hydrocarbons, by having a very important strategic, political, and economic value, makes it so that these natural resources in many countries, especially emerging or developing countries, which are becoming or are already producers and exporters of fuels, hydrocarbons, chemical products, have a problem that is also found in areas, territories, regions and countries where there are normally high levels of crime, illegal activities of the population, interests of the competition to carry out acts of sabotage, and also geopolitical conflicts on a national, state and regional level, where both economic and religious terrorism cause great damage to all installations that encourage the progress and stability of said countries. Said damage can be caused in an unforeseen way, such as from static, lightning from an electrical storm. It can also be caused by natural damage such as forest fires or floods due to the weather of a country, and other types of damage can be those caused accidentally, such as a traffic accident or the improper use, poor maintenance of an installation such as a refinery or a petrochemical plant. All of these aspects described previously are situations in which we can use our alloy body, its technology, its applications to reduce, eliminate the risk levels at these described points as much as possible. In the case of acts of sabotage or terrorism, the intentions of said people surpass unforeseen accidents, since there is a strategic, ideological plan to destroy the economic means of the country, and even to extort national and foreign operators, and even the government, in order to gain a political, religious and/or economic presence in said country. For said terrorists, saboteurs or pirates, the use of weapons, ammunition, or kidnapping are means for preventing the transportation of hydrocarbons, the extraction of said natural resources, the subsequent transformation or exportation thereof by means of all types of attacks. Therefore, by using our alloy body in different types and formats, we can reduce, eliminate the damage caused by said armed attacks/terrorists as much as possible, due to having invented highly safe protection, systems, technologies that are easy to install, have a great protective capacity and operative use for goods, means of personal and civil transportation, or authorities that may be been directly or indirectly affected by any intentional terrorist attack, piracy or sabotage.

It is important to protect not only said points/installations described previously, but also the consequences of these frequent criminal acts and acts of vandalism, such as the breakage and robbery of fuels which in addition to causing thousands of deaths annually due to fires and explosions of the hydrocarbon ducts, cause losses of millions of euros, this without including or assessing the irreversible environmental damage.

In the case that any type of tank, deposit, vessel, cylinder, portable fuel can, hydrocarbon barrel, cistern, transportation means for hydrocarbons and gases, ship, plane fuel tank suffers any attack with conventional / incendiary ammunition, said penetration in these types of vessels would not explode due to the impact of the ammunition, including the unforeseen or accidental penetration of any instrument, machinery, object, that could successfully penetrate the external layer of said vessels described previously. Said unforeseen, accidental or deliberate penetration, in which penetration is achieved by passing through the layers or outer layers of said vessels, prevents said vessels from exploding due to the dissipation, reduction, elimination, vapourisation capacity of all types of waves that said vessel undergoes since it contains the alloy body.

The alloy body contains exceptional properties such that said penetrations described previously can be sealed, closed, blocked, welded, even with the fuel or gases inside said vessels, the possibility of deflagration not existing. Therefore, any terrorist attack or sabotage carried out by means of conventional / incendiary ammunition can be immediately, effectively and safely repaired by the operators and welders, repairing said breakage or penetration, thus ensuring that said fixed vessel / tank / deposit or tanker truck, cistern tank, railway transportation of fuels are operative in the minimum time possible, thus reducing accidents or attacks of any type to capital goods, transportation, strategic installations, including petrochemical installations and gas pipelines / oil pipelines and all types of pipes and ducts, preventing the economic and environmental disasters caused by dumping said fuels into the environment.

## BACKGROUND OF THE INVENTION

The applicant is currently unaware of the existence of any other similar invention, other than our patent P201330057; for this reason, we submit it as an improvement to said patent and in turn we incorporate new innovative technologies, technologies for safety, the environment, productivity and safety for cylinders, deposits, bottles, canisters, vessels, receptacles, aerosols of all types of hydrocarbons and gases. A technology to be used as a suppressor, filter, reducer of all types of vapourisation-emissions of energy components, volatile hydrocarbons, liquids and gases of any type of class and especially for flammable fluids, hydrocarbons, polluting and non-polluting gases, chemical products, having confirmed their success in significantly reducing these benign / malignant vapours / vapourisations and/or the filtration of polluting or non-polluting gases with economic and environmental savings due to losses or damage caused by atmospheric vapourisation, environmental losses, weather losses, technical losses, or due to the maintenance, use, deterioration thereof of any type or shape of the vessels, tanks, transportation of said hydrocarbons, gases or liquids. Including the use of the invention for the increase, acceleration of the discharge / filling / infeed rate of gases, liquids, hydrocarbons without any type of external or internal danger with the same technology and by means of the production of said invention economically and with 100% recyclable materials. Blockage, reduction, elimination, removal, absorption, rebound of waves, electromagnetic emissions, radio frequencies, thermal or heat emissions in a textile / blanket format and to be used and accessed by all levels of society for the protection and safety of the person and their property.

## DESCRIPTION OF THE INVENTION

### Components of the invention:

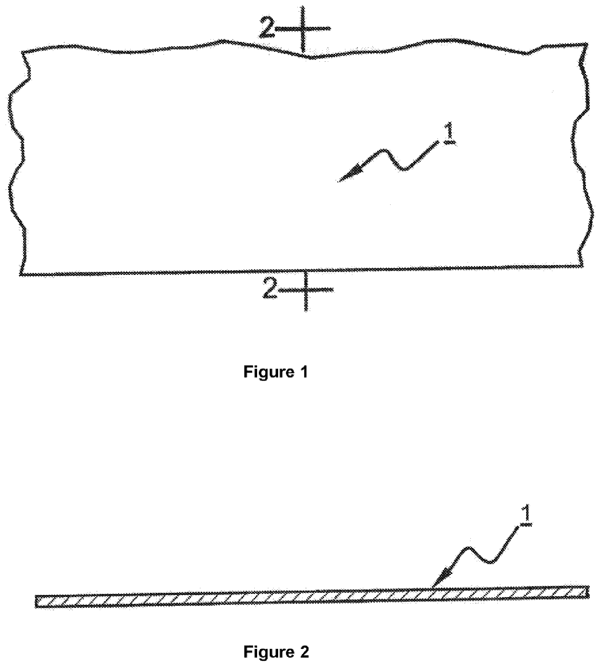

Following the figures cited above, it can be seen how the sheets for eliminating, reducing, filtering vapours of the flammable fluids, hydrocarbons, gases, polluting or non-polluting liquids, and specifically in relation to Figures 1 and 2, use a sheet made of heat conducting material, that preferably has the physical properties indicated previously, the sheet having a generally flat configuration with a thickness that ranges from 0.01 mm to approximately 0.1 mm, preferably from approximately 0.02 mm to approximately 0.06 mm, or from approximately 0.02 mm to approximately 0.05 mm.

The alloy body in the form of a sheet, mesh, net, spheres of the material of the invention must be manufactured from a material with good conductivity for the purpose of eliminating, reducing any type of wave, increasing the filling rate of the tanks, properly filtering the polluting fumes-emissions according to the final application thereof. The alloy body reduces losses due to vapourisation which are an economic loss as well as a major loss due to the vapourisation of the properties of fuels, wherein those with the most energy are those that evaporate first and are normally more harmful and polluting for the environment and extremely damaging physically, in terms of health and environmentally for humans, plants and animals of our planet. This particularly relates to how easy it is for this benign or malignant vapourisation to contaminate, penetrate and enter the atmosphere, which is the greatest polluting energy value. This pollution, specifically that which is produced by the emissions of hydrocarbons or polluting emissions of energy transformation / energy production plants (thermal plants) or industrial plants (foundries / chemical plants / refineries) is the worst for our atmosphere, ecosystems, as it directly affects air, maritime, land areas, national regions, continental regions and global regions.

The heat conductivity must be at least approximately 0.020 cal/cm-seg., especially for materials that have a specific density of approximately 2.8 g/cm3 to approximately 19.5 g/cm3, and preferably from approximately 0.020 to approximately 0.95 cal/cm-seg., especially for materials that have a specific density of approximately 2.8 g/cm3 to approximately 19.5 g/cm3.

The nominal heat conductivity is approximately 2.36 Watt/cm-degrees (Kelvin) to 273 T.K. (Kelvin degrees) for aluminium.

The following materials can be used as allowed prospects or as raw materials depending on the application. Namely:

- Silver 4.28 Watt/cm-degrees (Kelvin) to 273 T.K.
- Gold 3.2018 Watt/cm-degrees (Kelvin) to 273 T.K.
- Copper 4.1 Watt/cm-degrees (Kelvin) to 273 T.K.,
- Niobium, Nb, 41,
- Inconel 600, 625, 690, 718, 751, 792, 939
- Nickel, Ni, 28
- Nimonic 90, 100, 105, 115
- Chromium Cr, 24
- Molybdenum, Mo, 42
- Molybdenum ($MoS_2$)
- Hafnium, Hf, 72 -Hafnium Oxide ($HfO_2$)
- Vermiculite (Mg,Fe,Al) 3 (Al Si) 4 O 10 (O H2) 4(H2O)
- Monel, 400, 401, 404, K-500, R-405 And polymer material.

For a material density, for example, of 2.7 g/cm3 (Aluminium); 10.5 g/cm3 (Silver), 19.3 g/cm3 (Gold), 8.92 g/cm3 (Copper), 7.86 g/cm3 (stainless steel) or 0.9 to 1.5 g/cm3 (polymer material).

It is desirable that the material sheet be relatively, chemically inert to the contents of the container that are closed or open, encapsulated, moulded or in casings for the installation/fastening/application thereof during the useful life of the container and/or the residence period of the contents in the container.

The materials should be common and/or special metals allowed, such as Monel, Inconel, Niobium, Vermiculite, Nickel, Copper, Silver, Gold, Hafnium, Ninomico, Aluminium, Titanium, Silicon, Magnesium, carbon fibre, silicons of a natural and synthetic origin, resins of natural and synthetic origin, Pandalloy, Magnox, Titanal, Silumin, Hiduminium, Zirconium, Alelad, Scandium, Goltan, Niobium, Beryllium, Molybdenum, Tin, Uranium, Platinum, Phosphate minerals, Potassium minerals, metallurgical Carbon, Lithium, Neodymium, Lanthanum, Europium, Wolfram, Bismuth, Granite, Stainless steel, or non-metals, such as plastic or polymer materials. There being the possibility of being able to use the manufacturing means of this invention to also be able to manufacture other types of designs, formats, alloys, based on products of all types, including organic and inorganic products. Being able to produce meshes, nets, spheres of products originating from nanotechnology, graphene, composites, plastics, cloths, textiles, powders of any origin and especially of a mineral origin and residues to create said products so that they are applicable to any type of existing industry or sector or to exist.

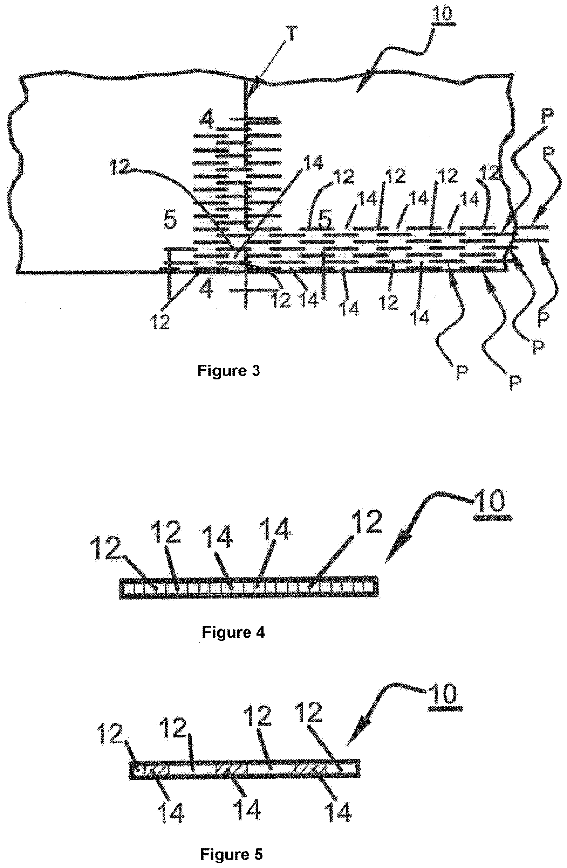

A thin sheet of material that is used in the present discovery, as shown in Figures 3, 4 and 5, for example, comprises a sheet of material (10) that has a plurality of parallel lines P (Figure 3) of elongated rectangular openings (12), preferably slots.

Each rectangular opening (12) and each line P of rectangular openings (12) extend parallel to the central longitudinal axis of the sheet.

Each rectangular opening (12) in a line P of rectangular openings (12) is spaced out with respect to the preceding rectangular opening (12), and the rectangular opening (12) that follows it with an intermediate net (14) of solid, non-perforated sheet of a material.

In short, to proceed longitudinally along the line P of rectangular openings (12), there is a rectangular opening (12) followed by an intermediate net (14), followed by a rectangular opening (12), followed by an intermediate net (14), and so on gradually.

By forming a sheet with polygonal openings, the intermediate nets (14) of the contiguous lines of the rectangular openings are outside with respect to each other, such that by proceeding transversally through the sheet following a T-line perpendicular to the central axis of the sheet it passes through an intermediate net (14) of a contiguous longitudinal line P of rectangular openings (12), having to take into account the following:

a. the transverse line (7) must pass through the rectangular opening (12) of the following contiguous longitudinal line P of the longitudinal openings (12).
b. then, it must pass through an intermediate net (14) of the following contiguous longitudinal line P of the longitudinal openings (12).
c. then, it must pass through the rectangular opening (12) of the following contiguous longitudinal line of the longitudinal openings, etc.

Thus, the rectangular openings (12) that extend longitudinally alternate with intermediate nets (14) in a transverse way through the sheet (10).

It is preferable that the length of each rectangular opening that extends longitudinally, upon passing through a transverse T-line of rectangular openings (12), is different from the length of the rectangular opening (12) that precedes it and from the length of the rectangular opening (12) that follows it.

In other words, the length of each rectangular opening (12) that extends longitudinally is preferably different from the length of the following contiguous rectangular opening (12) that extends longitudinally in a transverse T-line through the width of the sheet, and furthermore, with respect to each rectangular opening (12), the length of each one of the four closest rectangular openings (12) in the two closest longitudinal lines P of rectangular openings (12) must, preferably, be also different from that of the rectangular opening (12).

The lengths of the rectangular openings (12) that extend longitudinally with respect to a transverse T-line through the width of the sheet must be random with respect to each one of the others, and alternatively, the lengths of each respective rectangular opening (12) that extend longitudinally must be progressively increased in length in a transverse T-line through the width of the sheet or decreased in length.

In an alternative embodiment, the lengths of each rectangular opening (12) that extends longitudinally is increased progressively in length in a transverse T-line through the width of the sheet and the lengths of each rectangular opening (12) that extends longitudinally in the following T-line decrease progressively in length through the width of the sheet.

The nominal length of the openings (12) ranges from approximately 10 mm to approximately 15 mm, preferably from approximately 12 mm to approximately 15 mm, and preferably from approximately 13 mm to approximately 15 mm.

Thus, an opening of 10 mm is followed by one of 10.033 mm, followed by one of 10,06 mm, and the width of each rectangular opening, or slot, must be from approximately 0.02 mm to 0.06 mm, preferably from approximately 0.03 mm to approximately 0.05 mm and preferably from approximately 0.04 mm to approximately 0.05 mm.

The spacing between the opening arcs should vary based on the properties of the material used for the sheet.

The intermediate net between openings, in turn, Ranges from approximately 2.5 mm to approximately 4.5 mm, and thus, an intermediate net of 3 mm must be followed by one of 3.5 mm, and followed by one of 4 mm.

Thus, irregularity is induced in the expanded perforated sheet and due to the configuration thereof it produces resistance to settling and compacting.

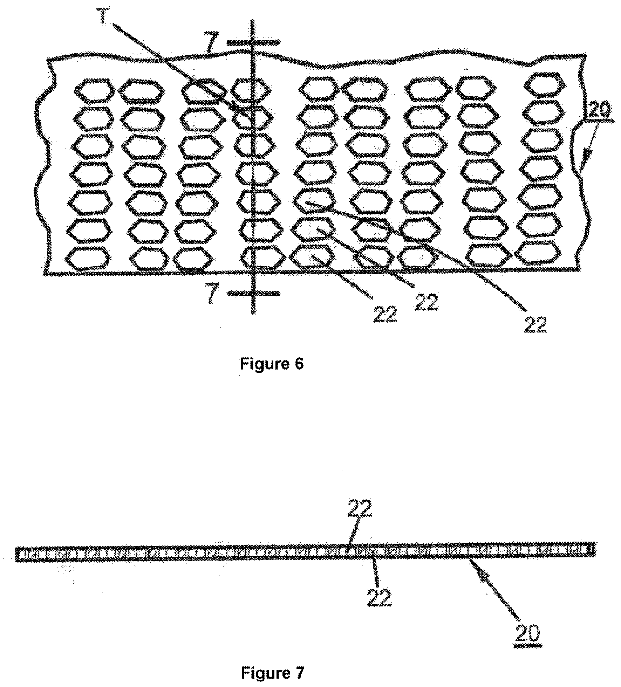

A thin sheet of the material that is used in the invention, as shown in Figures 6, 7, 8 and 9, converts into an expanded sheet that is perforated (or with windows) of the material (20) of the invention, and is provided with a plurality of plurilateral or polygonal openings (22), such as, for example, that which is shown with hexagonal openings, and at least one of the polygonal openings is irregular with respect to at least one of the contiguous polygonal openings.

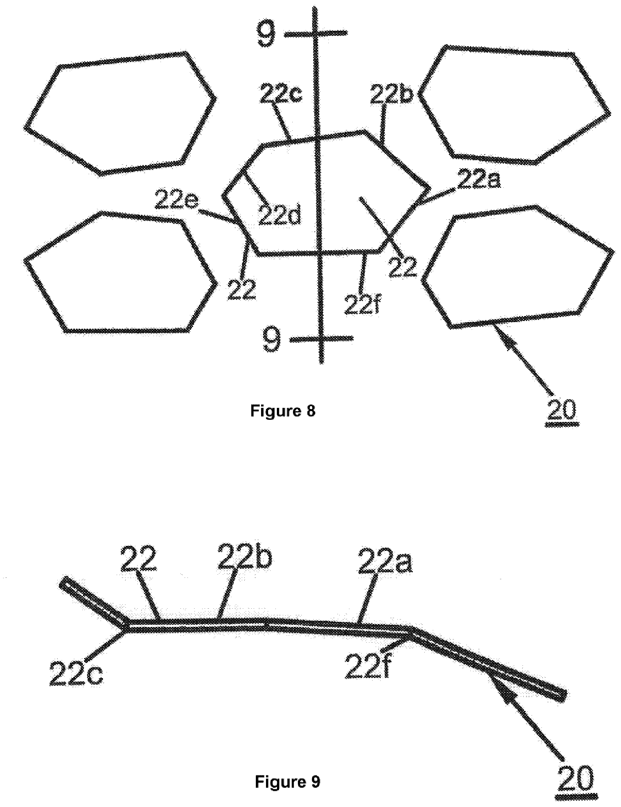

For example, the sum of the lengths of the inner edges of the faces of a polygonal opening (22), for example, lengths (22a), (22b), (22c), (22d), (22e), and (22f) of Figure 9, determines an inner peripheral length of a polygonal opening (22) and the inner peripheral length of each polygonal opening (22), upon proceeding along a transverse T-line of polygonal openings (22), must be different from the inner peripheral length of the polygonal opening that precedes it and from the inner peripheral length of the polygonal opening (22) that follows it. (Figure 8).

In other words, the inner peripheral length of each polygonal opening (22) is different from the inner peripheral length of the following contiguous polygonal opening (22) in a transverse line along the width of the sheet.

Additionally, with respect to each polygonal opening (22), the inner peripheral length of each of the closest four polygonal openings (22) in the two longitudinal lines, closest to the polygonal openings (22), must also be preferably different from the polygonal opening (22).

The inner peripheral lengths of the respective polygonal openings (22) in a transverse T-line along the width of the sheet must be random with respect to each other, and alternatively, the inner peripheral lengths of each respective polygonal opening (22) must progressively increase in inner peripheral length in a transverse T-line along the width of the sheet or decrease.

In an alternative embodiment, the inner peripheral lengths of each respective polygonal opening (22) progressively increases in length in a transverse T-line along the width of the sheet and the inner peripheral lengths of each respective polygonal opening (22) in the following transverse T-line progressively decrease in length along the width of the sheet.

The term "irregular", as used in this specification in the context of the inner peripheral length of at least one of the openings, which is not equal to the inner peripheral length of at least one contiguous opening, means that the numeric value of the difference in the inner peripheral length with respect to the other inner peripheral length is greater than the variation in inner peripheral length produced by the variation in the manufacture or the inherent variation of the manufacture.

While the irregularity of at least one polygonal opening with respect to at least one contiguous polygonal opening has been described in terms of inner peripheral length of at least one of the openings that is not equal to the inner peripheral length of at least one contiguous opening, it must be understood that the irregularity can also be produced in other ways, such as the polygon having a different number of sides (such as a pentagon or heptagon with respect to a hexagon) or where the length of one side of a polygonal opening is different from the corresponding side of a contiguous polygonal opening (in other words, greater than the variation or tolerance of the manufacture as indicated previously), or where the angle between two contiguous sides of a polygonal opening is different from the corresponding angle between the two corresponding sides of a contiguous polygonal opening, for example, the respective lengths of the side edges of the openings cannot all be equal, (in other words, at least one side may not have the same length as any of the other sides, which provides an opening that has the configuration of an irregular polygon).

Thus, when the expanded, perforated sheets are located one above the other, it is not possible to align the polygonal openings and fit one into the other, stacking and therefore reducing the effective weight of the multiple sheets (20).

An expanded sheet that is perforated (or with windows) of the material (20) of the present invention preferably has a compression field or resistance to compacting (in other words, permanent deformation under a compression weight) no greater than 7%. Ideally, however, there is essentially no compression field in the use thereof.

The expanded and perforated sheet of the material (20) is formed by tightening sheets of the slotted material (10) on wide wheels of different diameters placed such that the output from the sheet of material can be adjusted to an additional width of between 50% and 100% of the width of the initial sheet of material, such that it is ensured that the resulting openings form a plurality of polygonal openings (22), as described previously.

The expanded and perforated material (20) desirably has a surface area per unit of volume from at least 3,500 times the contact surface of the liquids/vapours, polluting or non-polluting emissions, liquids, hydrocarbons contained in the closed containers of any type, including pipes, tanks, cisterns, particularly for inhibiting, eliminating, reducing the boiling of liquids, preventing explosions of the vapour in expansion, and preferably increasing by 3,500 times the contact surface of the liquids/vapours and flammable gases contained in the closed containers or transportation means of said products such as polluting or non-polluting hydrocarbons, gases, liquids, emissions.

The term "contact surface" refers to the surface area of the container that is in contact with the gas phase, aerosol or vapourisation of the polluting or non-polluting hydrocarbons, gases, liquids, emissions contained in the container, cistern, chimney, gas pipelines, etc.

Usually, flammable liquids (liquid, vapour, aerosol or gas) are in contact with surface areas of the walls of the container where the flammable fluid is located, and the insertion of the sheets of finished, expanded and perforated material, increases the surface area in contact with the flammable liquid at least approximately 3,500 times the area of the contact surface, preferably at least approximately 3,500 times this area of the contact surface.

This proportion is significant and committing to this contact proportion relative to the specific fluid concerned is to reduce heating and therefore the level of vapourisation of said products stored or in industrial, commercial and/or energy production/transformation or which can be vapourised by heating of the receptacle / vessel / cistern / deposit by any environmental, weather-related, or accidental cause or by a criminal or terrorist act. This area varies in relation to the heat conductivity and the strength of the compression field of the material used.

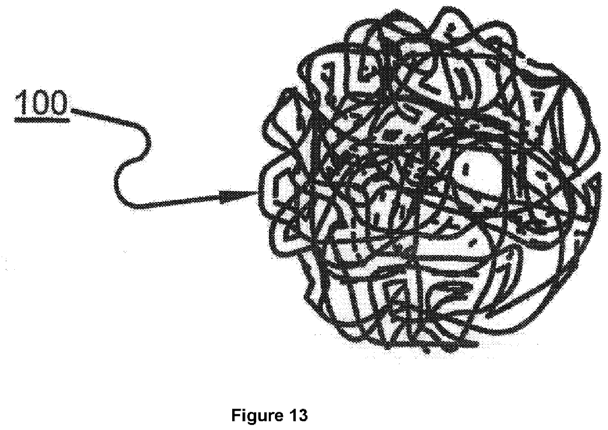

In a presentation, the expanded and perforated sheet of the material (20) that is used in the present invention, and which is shown in Figure 13 as an example, can be configured as a shape that comprises a body (100) with a generally spheroidal external shape or configuration.

The internal configuration of the body (100), generally spheroidal, comprises at least one strip of the expanded and perforated sheet of the material mentioned previously, which is folded and/or curled and hollow to form said spheroidal shape.

The generally spheroidal shape can be used by using a section of the expanded and perforated sheet of the material of a size proportional to approximately 20% of the width of the expanded and perforated sheet of material.

The external spherical perimeter of the spheroid (100) encloses a volume and the surface area of the material contained inside this spherical perimeter, that is, inside the spheroid (100), subject to the design requirements of the application, it is at least 1.5 square cm per cubic cm of said volume or greater if required. The surface area of the material must be at least 3,500 times the contact surface of flammable liquid contained in the container that encloses the flammable fluid, in particular to inhibit, eliminate, reduce polluting or non-polluting liquids or emissions.

Preferably, the spheroid (100) has a compression field or resistance to compacting, that is, permanent deformation under compression, no greater than 7%.

The structural strength of the final product can be modified according to the thermal treatment used in the manufacturing process of the raw material.

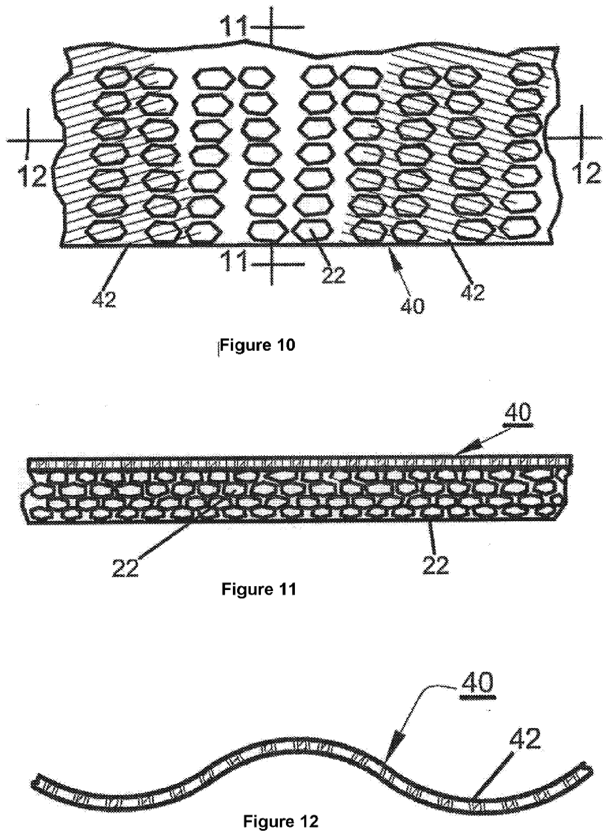

In an alternative embodiment of this invention, the expanded and perforated sheet of the material (20) that is used in this invention, as shown in Figures 10, 11 and 12 as an example, provides a transverse wavy or sinusoidal wave (42) formed therein and the wavy, expanded, perforated sheet of material (40), being introduced helically in a cylindrical shape. The cylindrical shape is generally circular in a transverse cross-section, and generally rectangular in a longitudinal cross-section, and in a subsequent version of this cylindrical presentation, a flat, expanded, perforated sheet of material must be folded inside the cylindrical shape. In a new shape, the perforated sheet of material must be folded inside the cylindrical form, such that depositions of sheets of the flat or wavy, expanded and perforated material in the cylindrical form are shaped.

Since the waves (42) are formed in the sheet of material (40) with the sheet of material (40) folded helically, the waves (42) cause an increase in the effective diameter of the cylinder and thus, the effective surface area contained inside a specific external spherical perimeter of the cylinder is increased, providing wide inclusion of volume in the cylinders with a low mass and a high effective internal area.

It is desirable that the cylinder has a compression field or resistance to compacting, that is, permanent deformation under compression, no greater than 7%, and, however, ideally, during the use there is essentially no compression field.

The non-perforated sheet of material (1), from which it starts, should be provided as a continuous net, non-perforated sheet of material, and then, the rectangular openings (12), or slots, are formed in the continuous net in the configuration described previously, such as slits, and in this case, the slotted net (10) can be expanded transversally, transversally tightening the sheet of material (10), such as above a wheel placed such that it adjusts the output of the sheet of material with an additional width of 50% to 100% of the width of the sheet of raw material, such that it is ensured that the resulting holes form a plurality of polygonal openings (22) with irregularity, as mentioned previously.

That which is mentioned previously is achieved by adjusting the position and tension of the expansion wheel of the production machine, and upon doing so, the result is the capacity to have the walls of the finished panel model more or less straight and, therefore, increase the compression force of the expanded and finished perforated sheet of material (20).

Optionally, the expanded and perforated net (20) can have a transverse sinusoidal dip (42) formed therein and the shape of the dip (42) is inserted or impressed on the lengths of the sheet of material (20) as a series of transverse curls or dips (42) along the length of the net that has dips when the finished product is rolled up.

The cylindrical forms can be made by spherical rolling of the sheets of expanded and perforated material that was mentioned previously.

The spheroidal forms (100) can be made by feeding the sheets of the material (20) to which pluralities of arcs with a plurality of parallel openings (22) has been provided, where the longitudinal centre is parallel to the central longitudinal axis of the sheet, inserting said sheet inside a machine that has a mechanical device comprising two concave semi-circular sections that work opposite one another, and these concave sections (the mobile central section and the one that covers it, fixed opposite concave section) can have a variable radius with a concave working edge.

The central part of the wheel-shaped device with the outer part similar to a bicycle wheel, 360° wheel with a concave working edge with a friction surface, and the rotation of the feeding sheet in the shape of a circular tubular cylinder against the rough surface of the opposite mechanical devices, the mobile central device and the fixed external device, which make the fed material form in the shape of a cylindrical tube, roll up and exit in a spheroidal shape.

- Cylinders of sheets of expanded and perforated material (mesh/net) fed in large closed vessels, tanks, cans, drums, cylinders of gases or other liquids, toroidal body tanks, tanker trunks, fuel tanks of all types, oil pipelines, pipes, pipelines, construction, insulation and other applications in which flammable liquids, such as vapour liquids, aerosols or flammable gases are used, stored or transported. Pollutants or non-pollutants including all types of emissions and/or hydrocarbons, but not limited to any future use of future energies such as the use of fuel and/or hydrogen, magnetic, laser emissions, including all applicable chemical products and all aromatic hydrocarbons, chemical solvents, paints, varnishes, degreasers, paint strippers, etc.

- Spheroids of a sheet of expanded and perforated material, loaded as spheroids in small closed vessels, gas cylinders, gas bottles, fuel tanks of all types, tanker trunks, insulation and other applications in which flammable liquids, such as: liquids, vapours, hydrocarbons, polluting or non-polluting emissions, aerosols or flammable gases are used, stored or transported. Pollutants or non-pollutants including all types of emissions and/or hydrocarbons, but not limited to any future use of future energies such as the use of fuel and/or hydrogen, magnetic, laser emissions, including all applicable chemical products and all aromatic hydrocarbons, chemical solvents, paints, varnishes, degreasers, paint strippers, etc.
- Industrial plants with chimneys, thermal plants, nuclear plants, carbon, fossil fuels, ecological plants with filtration systems, etc.
- Exploitations, extraction of hydrocarbons and the storage and transformation thereof.
- Jumbo tanks, transportation of hydrocarbons of any form.
- Fuel tanks, tanker ships, storage of fuels and/or national strategic chemical products.
- Refineries, petrochemical plants, industrial plants.
- Plants for recycling, transforming and burning organic and inorganic waste.
- Filters for reducing $CO_2$, $NO_x$, CO, $SO_2$, $SO_3$ and/or gas emissions, vapours, polluting or non-polluting emissions, both of the air, land or sea, rivers, etc.
- Cylinders of all types of gases, storage and transportation of gases, hydrocarbons, including the regasification or liquefaction of gases in a vessel, tank to other(s) by means of any technical, manual, natural system, and especially the transformation of gases or fuels, gaseous emissions to liquids or vice versa by means of any type of regasification / liquefaction system or technology, especially in the transformation, infeed, filling, emptying, discharge of the transportation of gases, liquid via gas pipelines, tanker ships, tanker aircrafts, all types of land, railway, underground transportation, such as all gases with or without energy values, such as gaseous hydrocarbons, LPG, natural gas, methanes, butanes, propanes in vehicles of all types, including land, sea, aerial or space vehicles, etc.
- Degasifications / gasifications / liquefactions of all types of hydrocarbons, gases, liquids, gases of tanks, vessels or storage systems, transportation, infeed / discharge of any type of hydrocarbon, gases or polluting and non-polluting emissions including the storage and transportation thereof.

> All types of hydrocarbons, gases, liquids with energy values coming from any means, including atmospheric, land, space, sea means, including the technologies of transformation, exploration, exploitation, extraction by any existing natural means, human means, present or future technology including by not limited to extraction, exploitation, and transformation systems such as those known in the industry as transformation systems of all types of hydrocarbons or extraction, exploitation, research and development systems of any derivative of the hydrocarbons, gases, polluting or non-polluting emissions, such as the system known as gas cracking, hydrocarbons of all types, including by not limited to the system called the shale system, including the search, extraction, transformation, storage, transportation, use of said reserves, blocks, pockets of any type of hydrocarbon, both known or in a process,regardless of the present or future energy value thereof such as shale.

> Planes, filtration systems of exhaust / emissions of planes, ships, trucks, etc.

> Gas pipelines and pumping stations.

> Oil pipelines and on / offshore discharge / infeed areas of hydrocarbons.

> Gasoline stations, sea / land terminals, up/downstream hydrocarbon installations. Refineries on land with upstream or downstream communication.

> Tanks and cylinders of all types of gases and the storage or deposit thereof. (Jumbo tank farms). Physical/logistic concentrations/groups of tanks with hydrocarbons/chemical products.

> Gas vehicles, tanker ships, atmosphere-polluting emissions by combustion / transportation or both.

> Tanker trucks, land transportation wagons, oil pipelines, railway, sea, river means and vessels for fluids.

> Systems for protecting sewers for suppressing possible explosions caused by the decomposition of organic material accumulated in sewer tunnels.

> Fixed and/or movable barriers, walls installed in of all types of mines.

> Use in the creation of safety protective blankets.

> Use inside anti-thermal doors and walls, secure doors, etc.

> Protection against electromagnetic pulses and/or radiation that equipment sensitive to said radiation or pulses may experience.

> Increase of the contact surface of the cooling towers.

> Temperature control and stability of heavy hydrocarbons as well as gases that flow through the pipes/ducts and oil pipelines.

> Valves for increasing the discharge rate of all types of tanks/vessels.

> Use in bypass systems in the hydrocarbon ducts/pipes to eliminate a possible flashback.

> Elimination of possible Boilover, Froathover, Steamover and B.L.E.V.E. in any hydrocarbon tank, even coolants including water.

> Prevention of the formation of algae and rust on the walls of all types of tanks/vessels or pipes/ducts.

> Use for successfully increasing the thrust rate of all types of turbines.

> Upon increasing the flow rate of the absorbed air of the injectors, carburetors, burners through turbines, the absorption rate of the fuel increases, generating additional power of 10%-15%, being able to reduce the overall weight of the engines especially in the case of airplane, space engines, rockets and missiles.

> As a base for supporting anti-thermal ceramics of aeronautical /space vessels in the re-entry thereof in the land or planetary atmosphere.

> External coating of all types of furnaces and boilers to prevent the loss of heat by increasing the effectiveness and performance thereof.

> By anodising the alloy body, the absorption of solar heat can be used to apply solar panels to heat water.

> Anti-noise panels, doors for public places and entertainment areas (nightclubs, bars, cafeterias, entertainment venues, etc.).

> Use on oil platforms in passageways, corridors, gratings, points where gases accumulate. (Supporting legs of the platform, structural recesses).

> Use in the double hull of ships and especially oil tankers or tanker ships.

> Use as a replacement for zeolites in the cooling towers of refineries or heat exchangers.

## Technical problem

The present invention has the task of presenting the suppressor, reducer, filter, protector of all types of vaporisation of energy components-emissions, volatile hydrocarbons, liquids, gases, emissions of any class or type of pollutants and non-pollutants including waves of any type or shape, especially electromagnetic waves; it has been designed to solve the previously described problem based on an incredibly effective solution, being completely successful with regards to the different aspects mentioned in the preceding section.

Wherein the object of the invention is to be a suppressor, filter, reducer of all types of vapourisation of energy components, volatile hydrocarbons, liquids and gases of any type of class and especially for flammable fluids, hydrocarbons, polluting and non-polluting gases, chemical products, having confirmed their success in significantly reducing these benign / malignant vapours / vapourisations and/or the filtration of polluting or non-polluting gases, with cost savings and environmental protection.

The use of the invention in filling/discharge valves achieves the increase, acceleration of the discharge / filling / infeed rate of gases, liquids, hydrocarbons without any type of external or internal danger by using this invention, technology and being manufactured with 100% recyclable materials. At the same time, it not only achieves direct cost savings through savings due to the vapourisation of gases, hydrocarbons regardless of the type or form thereof, but also due to the reduction, elimination, or filtration of said components or polluting emissions, which, by preventing the incorporation thereof into the atmosphere by means of vapourisation, also successfully fights against environmental pollution.

The invention installed in tanks, cisterns or storage deposits, fuel tanks, such as those used in motor vehicles, and in the commercial transportation of hydrocarbons, liquids, gases, acetones, gasolines and all derivatives of hydrocarbons, gases, crude oils, solvents, alcohols, biodiesel, ketones, methane, butane, propane, pentane, hexane, octane, gasoline, alcohols, fuel, kerosenes, ethers, all types of solvents and toluene, achieves that the environmental or natural statics, lightning and even attacks with conventional firearms, criminal acts of fuel theft cannot activate a spark or ignition point to cause the transportation containers / cisterns or hydrocarbon / chemical product storage containers / deposits and even transportation by means of ducts / pipes / gas pipelines / oil pipelines to explode, due to the fact that they have the invention installed in their safety systems called protection / safety valves / bypass for oil pipelines, gas pipelines, pipes, ducts, etc.

The invention of this technology, applied to all types of tanks, cisterns, deposits, transportation of all types of fuels, solvents and aromatic hydrocarbons including the hexane and toluene used, and applying this technology by means of this invention, drastically reduces the evaporation of the most volatile components of hydrocarbons, which drastically benefits the economic and financial loss due to said evaporation, maintaining the quality of the components by having the possibility of reducing the growth of algae and filtering the suspended particles thereof in the process of functionality.

The alloy body entails an increase in the useful life of tanks, deposits, cisterns since the rust in the tanks, metal deposits disappears completely, due to the fact that the installed component acts as a galvanic anode, preventing the accumulation of necessary electrons so that they produce the Oxidation-Reduction phenomenon.

In land, sea, aerial, space transportation, it prevents the movement of the liquids in the hull (sloshing-water hammer). By increasing the safety and useful life of the tanks, deposits used for the self-propulsion thereof and/or in tanks for transporting liquids, hydrocarbons or gases, such as for example tanker ships, railway wagons for transporting hydrocarbons, tanker trunks, tanker planes and planes for aerial refueling for both civil and military use.

In the tanks with self consumption, it is recommended that the deposit be filled with the alloy body (mesh / net / sphere) to 100% of its volume, in order to achieve the benefits of vapourisation, movement (water hammer) and anti-explosion savings. The volume losses will range from one to one and a half percent of the volume installed. The alloy body can be used in fuel deposits of automobiles, planes, and in gas cylinders of all types and especially bottles of butane, propane, natural gas, hydrogen for the transportation or use in dwellings, entertainment or recreational use, such as camping gas, kitchens in yachts, caravans, fishing boats, etc.

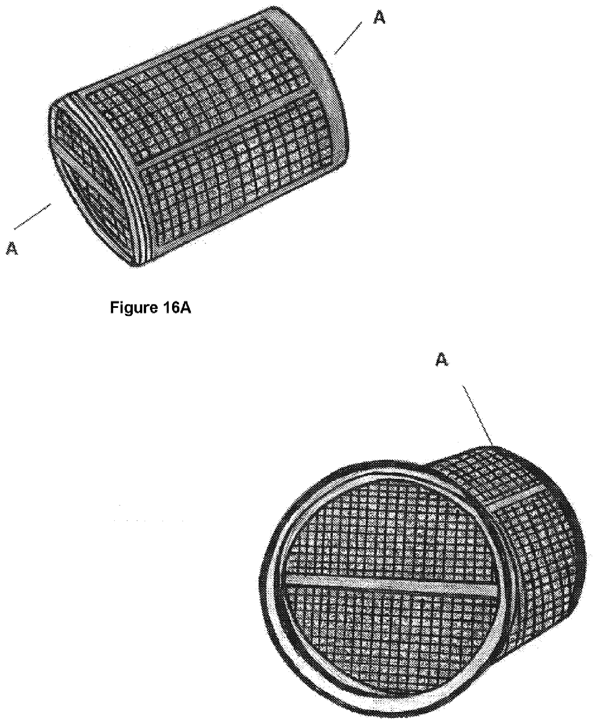

The alloy body can be installed in a tanker truck, both in the deposit of the cistern for its transportation, infeed and discharge of liquids or fluids, hydrocarbons and also in the very fuel deposits of the transportation truck / tractor / vehicle, thereby preventing the vapourisation of the gases, the movement of liquids inside the tanker truck and the guarantee of no accidents caused by external or internal ignition due to static charges both during the transportation thereof or in the discharge or filling of said vehicle. The alloy body also protects the tanker truck from rust, filtering any suspended particle in the discharge or filling thereof which could worsen, contaminate or damage the quality of the hydrocarbons or gases transported in said tanker truck. (Figure 16).

In the rear part, in the discharge / filling area of said tanker truck, the alloy body is installed in a valve format in order to increase the discharge / filling rate of the transported hydrocarbons, said operation increasing the discharge rate between 20% and 45% compared to when it does not have said invention, including the additional guarantee that in no way are static charges created by means of discharging or filling through the pumping system or hose, valves, discharge points and areas in gas stations, refineries, petrochemical terminals, etc.

The alloy body can be used in any transportation means or fuel deposit. The alloy body in a boat, yacht, ship, tanker ships achieves the drastic reduction of vapourisation, especially in long journeys and passing through areas with high heat and humidity, the increase in the exterior heat of the ship causes the transported hydrocarbons, gases, liquids to increase in temperature which increases vapourisation and the loss of these transported good, which entails a significant economic and environmental loss. By being able to install the alloy body to reduce costs in its initial investment, installation deadlines, and amount of use of the alloy body in the area of the double hull of the ship, good and efficient protection is achieved, although it is not as noteworthy as if the tank/tanker ship were completely filled, since it would not be possible to save losses due to vapourisation in transit or storage.

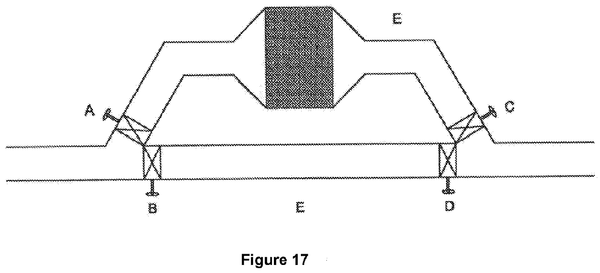

By having the invention installed in small ships as well as in large ships, the invention minimises the movement of liquids inside the fuel tanks, thus ensuring that the water hammer effect disappears, thereby providing the ship with greater stability, manoeuvrability, and the tanks have a longer operational life due to the lack of the systematic stress of the water hammer caused by the movement of the liquids inside the tanks of said ships. The tanks manufactured from steel could benefit from being protected from rust and the growth of algae in the case of newly used tanks, or in the case of tanks already with signs of rust, growth of algae, they could benefit from the fact that they do not worsen after the installation of the alloy body. With the valve of the invention, it is ensured that said ships can refuel or discharge, or fill their fuel tanks both for personal use or for transporting fuel with the benefit of the increasing the infeed / discharge / filling rate from 20% to 45% by using the valves described previously. If in said ships the alloy body is used, they will be protected in the case of ignition by any spark, static, electrical storm or even by accidental, unforeseen or intentional ignition inside the ship, due to having fire retardant, fire preventive and anti-explosion properties. By installing the alloy body in a panel format, the ship can be protected against electromagnetic pulses in its electrical systems, telecommunications and operational commands, at the same time reducing the propagation of any type of fire inside the ship, in addition to drastically reducing the internal acoustic sounds of the engines or external sounds of the very movement of the ship against the waves. (Figure 17).

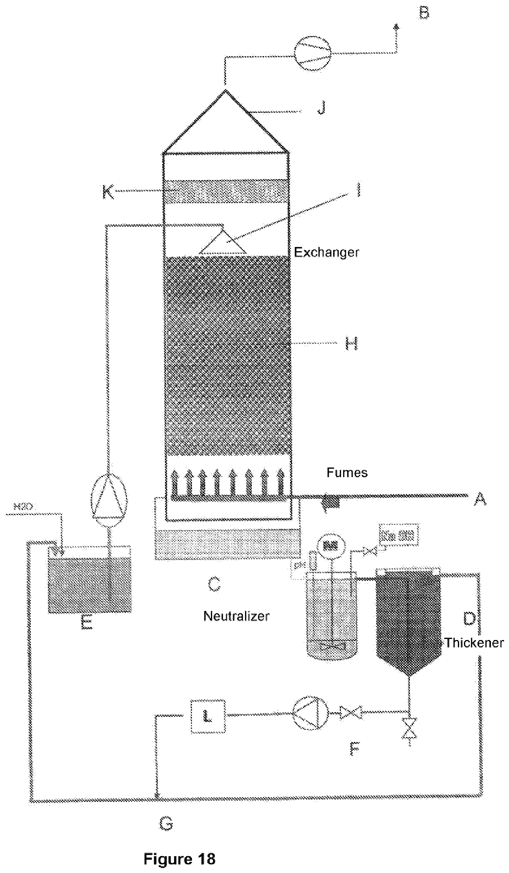

The alloy body in a net / mesh / sphere format, installed in any gas cylinder, bottle, canister, including toroidal bottles of gas, normally used in vehicles that use vehicle gas, benefits from using our invention by achieving a stable temperature inside the cylinder, reducing the thickness of the cylinder during the manufacture thereof due to the impossibility of accidental, unforeseen or intentional ignition, even due to the firing of firearms, incendiary bullets, or small and medium calibre weapons. By installing the alloy body, we achieve that the vapourisation of the transported gases, liquids, hydrocarbons see the possible vapourisation thereof drastically reduced if a safety valve is not installed; and in the case of having a safety valve installed, the alloy body would act as a second passive safety system, protecting the cylinder even from fire of any type. The installation of the alloy body inside the cylinder only occupies between one and one and a half percent of the volume, which enables the maximum use of the gas since it cannot cool / freeze due to the fact that the alloy body is inserted inside of it, stabilising the internal temperature, thereby preventing people who use said cylinders from turning said cylinders or bottles on their side or upside down when said bottles enter in the cooling or freezing process. This prevents the correct and safe use of the vessel or cylinder of gas, putting the life and property of people in danger when it is not used correctly. (Figure 18a).

In large storage tanks, it is necessary to completely refill the tank to its capacity, taking into account the areas that are protected due to being cleaning areas or areas for collecting / accumulating particles, sludge, oil spill from the fuel of the tank. The mesh / net / sphere format can be used for preventing, reducing, eliminating the vapourisation of said hydrocarbons or gases, its rust, the growth of algae, and the filtration of suspended particles. In the lower part of the tank, there is a platform to support the mesh / net / spheres, this platform that has a grating according to the use of the tank will have an upper or lower height of +/-50cm+/- 150cm for the possible cleaning thereof or removal of sludge, mud, oil spills, particles that have been deposited in the base of the tank over time due to gravity, filtered through the alloy body (mesh, net, spheres) and it will facilitate the maintenance plan and safety controls thereof.

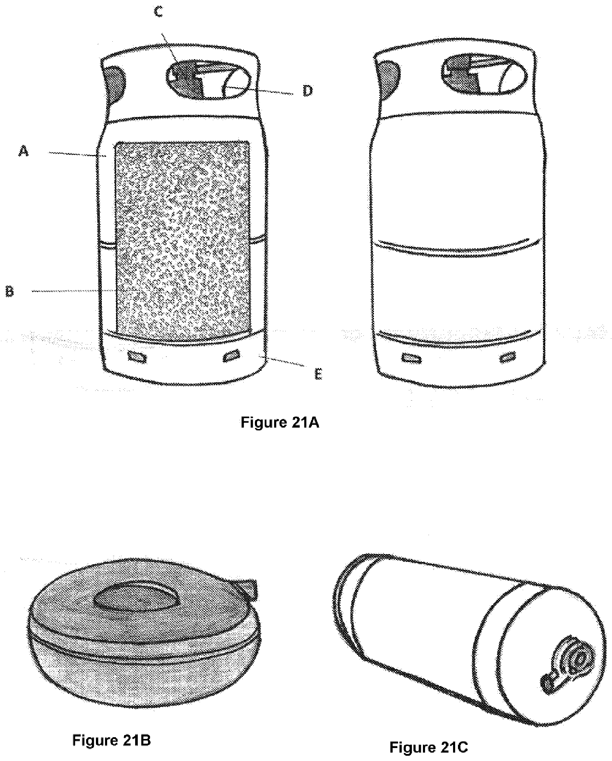

In tanks designed with a floating roof, the necessary amount of mesh / net / spheres would be reduced by only incorporating between 50 cm to 100 cm of the height of the alloy body along the entire diameter of the tank on the floating roof. This system reduces vapourisation to a lesser extent with reference to the completely filled tank of the alloy body in a mesh/net/sphere format, in addition to not being able to benefit from the protection against rust, the formation of algae and the filtration of suspended particles, even if it would eliminate static charges and the causal or intentional creation of a fire or ignition point in the upper part or roof of the tank. (Figure 21).

The present invention relates to the loss of time, productivity, efficiency, which increases the costs of infeed / discharge / filling of all types of deposits, transportation means such as tanker trunks, tanker ships, transportation of hydrocarbons by land means in areas such as refineries, infeed / discharge terminals, and it entails economic expenses and costs for safety, which are subsequently passed on to the final consumer. Additionally, since the infeed / discharge is the most dangerous part of the entire process of moving the hydrocarbons, savings in this aspect due to the increase in the discharge / filling rate is something that can be easily introduced in order to achieve time and cost savings due to be moored or stopped in infeed / discharge terminals for less time, the lower cost of taxes or fees at ports / airports / terminals / gas stations being calculated by minutes and hours. The savings and greater amortisation of the goods or transportation means is due to being able to increase the time in transit and not losing productivity during discharge / refill, which allows this system to increase the discharge between 20% - 45% according to the types of liquids, fluids, gases or hydrocarbons. Therefore, it is as if the fleet or transportation productivity of the operator has increased with distribution between 20% - 45% without financially investing in investments of said large or expensive transportation means of fuels, such as ships or tanker trucks, and this increase in productivity is increased only upon including our invention in this valve / filter format. Without having the static removed in an unforeseen way, accidentally or intentionally, with the possibility of ignition and explosion at this filling / discharge point which is the most delicate part of the entire process of physically transferring fuels, hydrocarbons, gases or liquids.

The suppressor, reducer, filter, protector of all types of vaporisation of energy components-emissions, volatile hydrocarbons, liquids, gases, emissions of any class or type of pollutants and non-pollutants including waves of any type or shape, especially electromagnetic waves has been designed to solve the previously described problem, based on an incredibly effective solution, being completely successful with regards to the different aspects mentioned in the preceding section.

Wherein the object of the invention is to be applied in the industry dedicated to manufacturing articles, systems, technologies and/or manufacturing systems to be used as a suppressor, reducer, filter, increaser, accelerator of the filling rate of all types of liquids, gases, vapourisation of energy components, volatile hydrocarbons, liquids and gases of any type or class maintained, stored, transported in vessels, closed containers, pipes, gas pipelines, deposits, and in particular to inhibit, reduce, eliminate, filter the vapourisation of any type including those of liquids and gases due to expansion, heating, movement, emission, discharge of any type of liquid, gas, hydrocarbon, crude oil, solvent, alcohol, biodiesel, ketone, methane, butane, propane, pentane, hexane, octane, gasoline, alcohol, fuel, kerosene, ether, and all types of solvents, paints and toluene, as well as vapours for any reason or necessity that is accidental, technical, industrial, commercial, productive, weather-related or environmental.

By using this invention in a format for the filling thereof inside a valve adapted for the use thereof in the filling heads in pipes, ducts, pipelines, exhaust pipes / emissions / chimneys for its use, expulsion, emission, evacuation, transportation, infeed, discharge of liquids, gases, hydrocarbons or polluting or non-polluting fumes, pumping stations, gas pipelines, oil pipelines, infeed / discharge of bottles / cylinders of gases, hydrocarbon storage tanks, gas stations, discharge / infeed terminals, oil platforms or chemical product plants, deposits, vessels including emissions / evacuation / expulsion of fumes, vapours, gases in or for all types of motors driven with any type of present or future energy, an acceleration / increase of 20% - 45% of the discharge / infeed / evacuation / filling rate of the liquids, gases or hydrocarbons is achieved as compared to any common or present discharge / infeed / filling system without the necessary help of mechanical injectors / compressors. Nevertheless, any additional injection / compression system can also be used if so desired, where the invention would function with the same benefit in the increase of the rate from 20% to 45%.

The invention in this case is installed in the infeed / discharge / filling valves / heads of said installation types previously and subsequently described in this invention, especially in tanker trucks, tanker ships, deposits, pipes, planes in order to increase the infeed / discharge / filling rate and save the infeed / discharge / filling time with cost savings, reduced time, greater amortisation of the systems or means of transportation, increased safety by being exposed to high-risk places for less time, such as fuel infeed / discharge terminals, ports, airports, and with the savings in the loss of vapourisation of said liquids, gases and especially hydrocarbons.

The cloth of the suppressor, reducer, dissipator, filter, accelerator infeed / filling / discharge valve for all types of gases, liquids, hydrocarbons, fumes, polluting and non-polluting emissions that is introduced into the filling heads of all types of pipes, gas pipelines, oil pipelines, pipelines, hoses independently increases the filling, infeed, discharge rate and the following formula is applied to explain the technical viability and innovation of the invention with its corresponding technical and physical explanation.

$$Re = Vs\ D/v.\ \text{(Formula no. 1)}$$

// Re = Reynolds number - Vs = Characteristic rate of the fluid - v = kinematic viscosity of the fluid.// The flow is laminar throughout the entire pipe until reaching the filling point where the filling valve described in the invention is located; the laminar flow of the fluid is transformed into a turbulent flow, thereby increasing the Reynolds number.

This benefit from the increase in the rate occurs when using the invention at this point by means of its installation in a valve, casing, body, base, gasket, system specifically manufactured from any material needed for the correct, effective and safe installation thereof in order to ensure the increase in discharge / infeed / filling with an increase in the rate between 20% and 45% according to the type of liquid, gas, hydrocarbon that must be transported, discharged, infed or filled.

In addition to achieving this increase in the rate by means of the discharge / infeed valve without the required use of forced injection / compression systems, the invention achieves the complete neutralisation of static discharges of any type caused naturally, environmentally, accidentally or intentionally, which can cause explosions or fire in the discharge / infeed / filling points, such as refineries, discharge terminals, ports, airports, gas stations, tanker trunks, etc.

The invention, given the manufacturing system thereof and the type of alloys also used inside the valve, makes it so that any type of explosion, fire, spark or hot spot is reduced, eliminated, dissipated at these specific infeed/discharge/filling points in all types of vessels, deposits, hydrocarbon infeed terminals, refineries, storage of petrochemical products, etc.

The invention achieves protection against the growth of algae in the stored liquids and anti-rust protection in the vessels made from metal, the invention being installed in new installations without signs of rust or algae or the physical and/or chemical stop in the growth of algae or rust if implemented in installations that are already operating or affected by rust or algae. The invention can be installed in all types of vessels, discharge systems, oil pipelines, gas pipelines, cisterns, deposits, refineries, terminals or pumping systems of hydrocarbons, gases or liquids of any type in order to ensure this additional or individual protection.

The present invention is applicable in chemical companies, industries, industries for generating energy by using fossil fuels including all types of hydrocarbons, such as shale gas, (which also continuously and drastically damage the subsoil due to the aggressive extraction thereof). Said companies emit millions of tonnes of polluting emissions globally every day and even though systems for controlling and reducing said emissions have been introduced in the most advanced industrial areas, emerging or developing countries do not have them, due to the lack of technology, resources or economic interests from failing to invest in these technologies since they are not required in their countries due to the lack of legislation protecting the environment.

The suppressor, reducer, filter, protector of all types of vaporisation of energy components-emissions, volatile hydrocarbons, liquids, gases, emissions of any class or type of pollutants and non-pollutants including waves of any type or shape, especially electromagnetic waves; have been designed to solve the previously described problem, based on an incredibly effective solution, being completely successful with regards to the different aspects mentioned in the preceding section.

Wherein the object of the invention is to ensure that the fumes-emissions coming from a factory, chemical plant, energy plant, recycling or industrial plant, heating / air control systems in community buildings, housing blocks, residences, hotels, transportation means including aeronautical, land, sea, space means, including all types of fumes / emissions of public or private buildings with heating control systems, potable water, air conditioning and air filters are filtered with the body of the invention in order to be able to reduce, eliminate any type of atmospheric pollution that directly or indirectly harms the environment or the ecosystem regionally, nationally, at a continental level or globally.

The polluted fumes coming from combustion enter in the chimney through point "A". These fumes rise through the chimney and flow counter to the water or liquids that fall due to gravity from a shower or water fall system through the filters of the invention that have the quality of increasing the contact surface of the liquids in their fall due to gravity; with the fumes that rise through said mesh / net / spheres of the invention, it has the advantage of increasing the contact surface between the liquids that fall and the particles of the fumes that rise by 3,500%. (Figure 18).

The water / liquids entrain the polluting particles to the deposit "C". At the same time, $CO_2$, $SO_2$, $SO_3$, NO2O3 and NOx, upon binding with the water/liquids, form the corresponding acids: carbonic acid, sulphurous acid, sulphuric acid and nitric acid. These acids accumulate in the deposit "C" together with the entrained water or liquid. The water with the accumulated particles and accumulated acids thereof in the deposit go on to the deposit "M", which is a neutraliser. Here, the acidity of the acids is reduced by varying the pH thereof until it is neutralised, adding said compounds to it until the complete neutralisation thereof (pH=7), soda (Na OH) or caustic soda (K OH). In this tank "M", all the components are neutralised.

The neutralised liquids of the deposit "M" go on to the deposit "D" which is a decantor-thickener. The particles suspended in the liquid as well as the neutralised components are deposited in the lower part of the deposit "D", decanting deposit by gravity: Normally, nitrates, carbonates and sulphates that are collected in the lower part of the tank by opening the spigot / tap / valve "F" are deposited. This sludge, mud, particle concentrations being collected at point "G", which can be taken to be recycled at a recycling plant.

The excess water of the deposit "D" overflows and goes directly to the deposit "E" wherein a pump pushes it again to the shower/waterfall/liquid due to gravity that is completely neutralised and clean upon closing the cycle. It is a closed cycle that enables the fumes that exit through point "B" to have 0% $CO_2$, CO, $SO_2$, SO, NOx, preventing the so-called "acid rain" and the environmental and ecological bias that it has. This system enables the water / liquid flow to be regulated in order to increase or decrease the entrainment of the polluting particles. At the same time, by being a closed circuit we prevent pollution of the environment. The deposit "E" incorporates an automatic / manual mechanism in which a 10% (ten percent) decrease of the volume of the liquid (water) is automatically / manually refilled from the outside. A control of the sludge/mud in the tank "D" must be carried out periodically in order to eliminate the waste particles, even automatically or manually installing a warning system for the accumulated weight for the subsequent recycling thereof according to the needs of the operator.

The sub-products, concentrated derivatives in the collected sludge or mud can be recycled in order to obtain sulphuric acid, nitric acid, necessary elements for the chemical industry and/or industrial processes.

The present invention relates to the fact that thousands of fires are produced in all types of buildings or dwellings around the world. The lack of viable safe, economic and fire preventive construction means causes thousands of millions of euros in losses to people and/or companies, the most fortunate of which are then replaced, repaired or reimbursed by insurance companies. Each year insurance and reinsurance policies increase because they are all directly or indirectly and economically and environmentally affected by losses from fires, which cause significant losses of all types, especially those started by large unforeseen, accidental or intentional forest fires, which then destroy entire sectors or towns, such as the fires that have recently occurred in Spain, the United States and Australia, where dwellings are made from wood, the material most widely used in construction and which is most likely to burn and be destroyed. This damage is finally reimbursed by national emergency insurance with funding via taxes, state insurance, private insurance, or given the loss of the property or lives at the direct expense of the person affected. Not considering that the ecological and environmental damage is extreme in these cases, it is an overall problem that affects everyone directly or indirectly.

The object of the invention is to achieve, with this alloy body in the panel format, a wall, barrier, that is movable or fixed in order to provide protection from electromagnetic pulses or solar radiation. It can also be used as a fire retardant/acoustic panel for construction, designed to be used as a means of enclosure and/or compartmentalisation, in other words, for forming partitions in the scope of the construction, such that said panel, in addition to the features thereof as a partition element, has a fire-retardant/acoustic nature, in order to constitute a barrier against fire, also providing thermal protection for apparatuses, places or objects exposed to one or several heat sources, be it either fire, irradiation, radiation, waves, etc.

It can also be used as a fire-retardant protector for tyres. By using the alloy body as filling of the tyre or even incorporated as a composite thereof, it becomes a fire-retardant protector, which is waterproof, thermal, thus protecting it against heat sources derived from any type of fire and/or for extinguishing tyres that are on fire.

The present invention relates to the serious problem of the accumulation of gases in mines, sewers, subsoil, tunnels, mining prospects, etc. These harmful and explosive gases that accumulate naturally or upon unexpected contact with pockets of gases during production/extraction cause thousands of injuries and deaths annually, with very high economic loss and pollution, especially in countries with mining / hydrocarbon production, such as in Asia, South America and Africa, where safety controls and legislation continue to lag behind or are not implemented like they are in Europe or the United States in terms of safety and accident prevention.

The suppressor, reducer, filter, protector of all types of vaporisation of energy components-emissions, volatile hydrocarbons, liquids, gases, emissions of any class or type of pollutants and non-pollutants including waves of any type or shape, especially electromagnetic waves, has been designed to solve the previously described problem, based on an incredibly effective solution, being completely successful with regards to the different aspects mentioned in the preceding section.

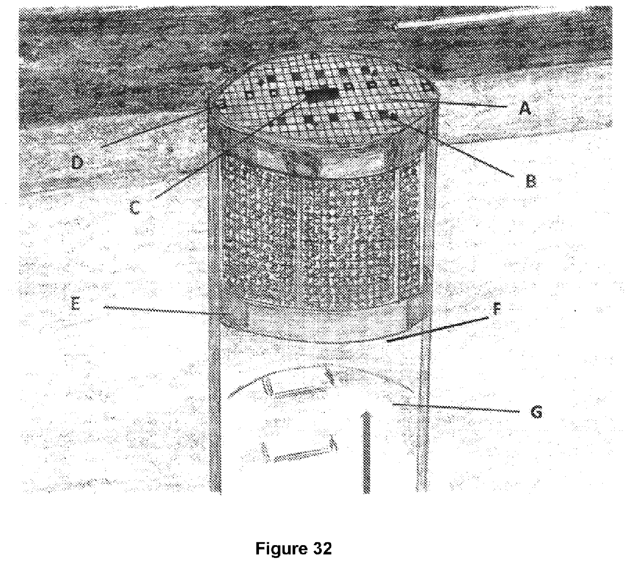

Wherein the object of the invention in a laminar cloth, mesh, net or sphere format is envisaged in order to be used inside a casing, a manufactured object, module, barrier structure, panel, movable wall, filling as a means of a fixed or movable enclosure and/or compartmentalisation in the corridors, paths, tunnel cross-sections in mines, and in sewer mouths, drainage or ventilation mouths, exhaust, inlet / outlet of river water of the underground sewer systems of a city, including doors and walls of transportation cargo containers and containers for trash and recycling, located in towns, cities, and/or inhabited areas, for the purpose of protecting a place, apparatuses, objects and for filtering, reducing, eliminating the possibility of accumulating gases of any type, mainly harmful and explosive gases such as methane gases, and for reducing, eliminating, filtering said gases according to the needs of the operator. These gases accumulated due to the decomposition of the organic material can be eliminated by using the alloy body. By preventing the possibility of fires, ignition, underground explosions with the resulting underground and external damage of all that may be in the path in these types of incidents, which can be activated or started from the outside or in the same underground area in an unforeseen, accidental, or intentional way through any means such as a static spark, friction of waste material, electrical storm, the lighting of matches, flames of any type or origin, damage from the breakage / bites on any type of wiring by all types of rodents, or animals that live there, in tunnels, in sewers or in areas, corridors, underground paths by means of the breakage thereof or damage caused by the passage of external installers of external installation services, which can accidentally cause damage to the sewer or supply systems of any type, causing the possible loss of human life (Figure 32).

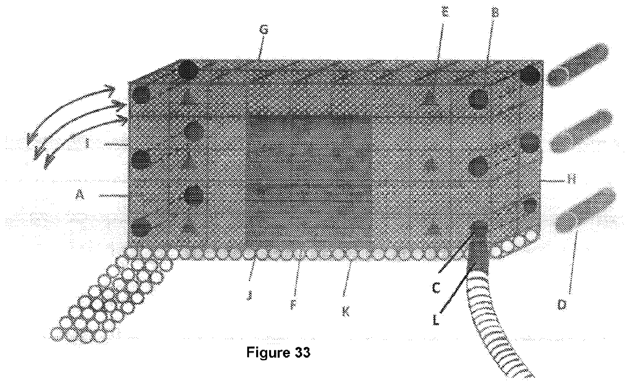

The alloy body installed in the format of a panel, wall, barrier, wherein the filling of the invention that is made up of a metal body, plastic, carbon fibres or similar material, even inside a fastening of a wire fencing material, or wire mesh which is filled with a sufficient amount of the alloy of the invention so as to block, eliminate, reduce, impede the movement and the possibility of the accumulation, vapourisation of gases in mines and especially in carbon mines or mines with the use for the extraction, exploitation, prospection, exploration, research thereof and with the possibility of the existence and/or accumulation of any type of harmful, explosive gases, and/or dangerous gaseous hydrocarbons. (Figure 33).

The alloy body in the format of a filled panel, mesh barrier, a sandwich format of the alloy body with a width of at least 50 cm-100 cm, but enabling the access / contact of the atmosphere of the tunnel, underground tracks, air or gases to all or part of the barrier filled with the alloy body, which can be coupled in a fixed manner to the dimensions of a tunnel and used as a barrier, wall, that is fixed or movable in order to impede, reduce, eliminate the movement and accumulation of gases of all types inside the tunnels or underground paths in the areas protected with our alloy body, including possible harmful and/or explosive vapourisations, which could completely close said tunnels or underground paths with our panels, fixed or movable barriers filling the alloy body, impeding the movement, communication or passage of these gases and thereby preventing possible deflagration, fire or explosion that is unforeseen, accidental or intentional.

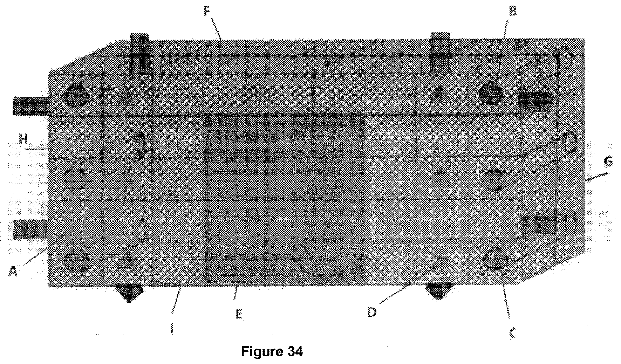

The same system can be used with the possibility of allowing for an inlet / outlet by means of a door for the passage of operators and small / medium-sized machinery as if it were the door in the facade of a dwelling, where the door opens and closes after they pass through said facade and the rest would be the sandwich-type filled wall / barrier / panel. The barrier, wall, must be in contact with the alloy body so that the operation thereof is subject to, retained, fixed by a mesh, fence, gate, wire system for the fastening thereof, but without impeding its physical-atmospheric contact and thereby benefiting from the reduction, elimination, control and/or movement/accumulation of the gases that may already exist inside the mine or that may be in pockets, banks or areas that will be or may be perforated in an accidental, unforeseen or intentional way, which would be dangerous for the operations of the mine and of the employees. Since our alloy body is found in sections, corridors, paths, intercommunications inside the mine, safety and protection are highly achieved by being able to close inoperative or operative areas or thus being able to ensure air that is as clean as possible for the operators and without the risk of accumulating harmful gases or the possibility of gas explosions. (Figure 34)

It has the same safety and degasification measures as the movable barrier, but the unit does not move; it does, however, have an access door on both sides.

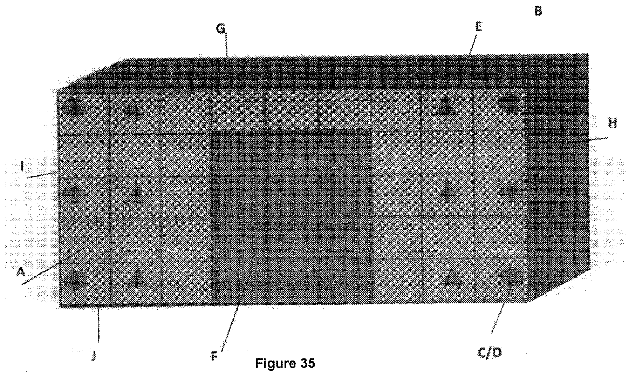

There is also the possibility of using a "window frame"-type anchoring system in which the entire "sandwich filled barrier with the alloy body" is in contact with the atmosphere of the tunnel. Inside this barrier / panel / wall which can be completely opened and is a "window with a single leaf, double leaf, triple leaf, that is foldable in any direction" with the possibility of partial or complete opening in a folding way and/or even with a system for gathering, lifting, introducing into the subsoil, roof, with alignment with the walls, roofs or floor of the tunnel by means of the movement thereof with a movable system, such as by means of a roller system and moved manually or automatically and/or with movement to the sides of the wall of the tunnel as if it were a door of a "corridor-hangar-warehouse garage" or such as the doors of garages that can be folded and gathered, such as in a box for shutters. This enables large-sized machinery to pass through and it allows for the continued use or the high traffic of personnel during unspecific periods of time and in order to easily activate the passage and use of the barrier in an effective and safe manner, even having gas control and warning systems between the barriers of each section protecting said mines to further increase safety in all operations. (Figure 35)

In addition to benefiting from all of the foregoing advantages, it is an entirely fixed barrier, as well as one that is resistant to theft or unauthorised access, such as access to mines with minerals of a high strategic or economic value: gold mines, diamond mines, uranium mines, etc.).

In the case of being informed / warned by this measuring / controlling / warning system of gases that enter one or several tunnels and the corresponding protection barriers thereof by using the alloy body, there are gases of any type that are accumulated or in movement between the protected areas. Each barrier or door has an access system for introducing hose(s), tube(s), for extracting these gases to the outside, for extracting them to a gas container-filter, chimney, system for evacuating gases, movable or fixed deposit by means of a manual or automatic extraction and/or filtration and/or gasification system, for the purpose of achieving the maximum extraction possible of the gases without putting the operators of the mine in danger and without there being any type of explosion, deflagration, accident due to the lack of evacuation, extraction, expulsion of the accumulated gases safely and with the protection barriers of the body of this invention that is completely closed, keeping the gases accumulated and locked between barriers throughout the entire tunnel. (Partition effect.)

Between 1 and 10 or more gas outlets may be installed on each barrier for the degasification or access to the incorporation of the hoses or pipes for said extraction or even for filling the gases in a protected area between barriers: If it had to be done for safety reasons or any other reason, especially in order to neutralise a dangerous gas that could not be evacuated at that the time for some reason, these gases are blocked for the possible subsequent neutralisation / extraction thereof. The height or the amount of accesses through the barrier will mainly depend on the type of gas that may exist, it being recommended that the installation have at least +/-3/+/-6 double access outlets / inlets on each side, with circular / square outlets / inlets on each side of the barriers completely passing through said barrier, being able to remove said "part-valve-filter" of any one or at any height of both sides of the barrier and placed at three different heights, the first nearly at ground level, the second at an average height of the barrier and the third at the upper part of the barrier, and the same is repeated on the other side, to thus be able to extract all the accumulated gas as quickly as possible or to have a greater extraction capacity due to the volume of degasifying hoses or pipes that can be coupled. There is also the possibility of only emptying or degasifying according to the height of the "parts-valves-filters", according to the type of gas existing, analysed and controlled by the analysis thereof, introducing the degasification hoses / pipes according to the normal height of the physical / chemical movement of the characteristics of the type of gas analysed, found and accumulated. Said openings will be made as if they were "parts-valves-filters" that can be fully extracted by any of the two sides of the barrier, wherein they are introduced perfectly and completely inside the structure of the barrier in an independent way, but being part of the unit of the original barrier and being a component of said barrier but with the possibility of being able to make this part movable and having the possibility of extracting it / introducing it independently, but only doing so when there is a desire to couple other accessories such as the introduction through this auxiliary gap / inlet / outlet of cameras, viewers, analysis systems, etc. but especially to the perfect and secure coupling of the valve of the head of a degasification hose or pipe that will have the same measurements so that the gases can only be extracted or injected without being able to pass said gases through the barrier with the corresponding danger thereof. Said valve head, extraction head or piece will have the same dimensions, depth, length, width as the same that is removed in order to continue to maintain maximum sealing and it will pass through the barrier in the same way as the "part-valve-filter" but it will be internally empty, only with the capacity to extract or inject gases / air and thereby be able to extract the accumulated gas or clean the polluted air. The "part-valve-filter" that is removed is part of the structure and design of the original barrier but the use or installation thereof is not essential for this system or technology to operate as a protection or safety barrier; it is an added benefit and the installation or use thereof is not required, and it is not even needed in the manufacture thereof, but it is highly recommended since it can benefit from greater advantages with the same system using the alloy body.

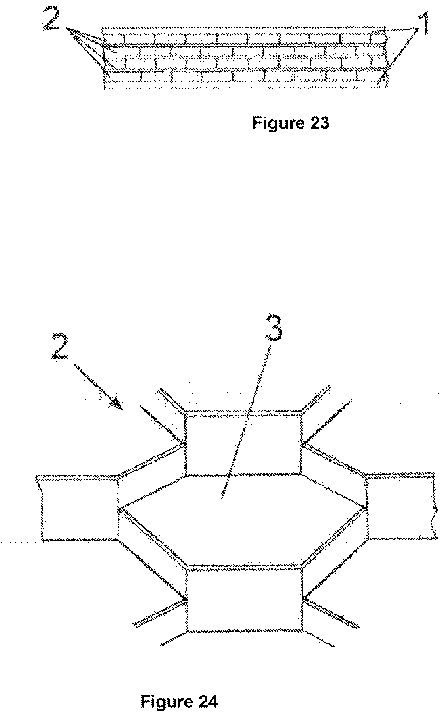

The invention is embedded inside a structure with fencing or grating and filled by means of the mesh, net or spheres of the aluminium alloy (2) of a high thermal, heat transmission coefficient with high properties of control, elimination, reduction, dissipation of the vapourisation or accumulation of all types of gases and in which by means of cuts and by deformation and extension of the same with the shape of hexagonal reticles (3) with a three-dimensional structure. (Figure 24).

The present invention relates to the fact that our solar and planetary system, being scientifically verified and validated, is in constant movement, where and in particular the sun is our best friend, but also our worst enemy. Solar radiation, electromagnetic pulses, changes in planetary magnetic fields that are partial, temporary or full and/or complete, are studied more and more every day and within the emergency contingency plans, both at a national and military level and for national security. We have seen that in Canada in the year 2010 and in Australia in 2011 there were shock-pulses / emissions of solar radiation which caused the collapse of all energy, electrical, computer systems of the Quebec region for weeks, with losses of thousands of millions of euros: affecting the economic, social, humanitarian, health spheres, control of law enforcement authorities, of the region and of the country. This damage caused by the shocks-pulses / emissions of solar electromagnetic pulses is something that we cannot accurately define, but only in extreme cases and in the highest military sector are there solutions of an extreme cost and very specialised uses in order to protected against these types of incidents. Currently systems of combat weapons have been developed, which can be used by the world's most modern producer countries, but which can also fall in the hands of criminals or terrorists, wherein the intentional use of electromagnetic pulses on a small scale can prevent all electronic, electric or computer systems of a town, region from being destroyed. In the case of a medium-large, pre-war (nuclear) or post-war (nuclear), terrorist electromagnetic pulse, it can collapse population centres, with the consequences of changing this area, country, region of the 21st century with all of our means of well-being to a situation from the 15th century in a few minutes, with its resulting economic, social, food and human survival implications. Repair, replacement, help can take months or years. The destroyed/affected systems can include all electronics, micro-chips, car processors, trucks, lights, refrigerators, telephones, lifts, generators, masts-antennas-radars, telecommunications, electric energies, scanners (instruments / medical equipment), computers, hospitals, gas stations, supermarkets, civil protection, firefighters, police, ambulances, security forces, which would destroy a current modern country in minutes with said detonation of bombs, missiles or even small grenades of electromagnetic pulses that are currently being developed by some military manufacturers.

One factor added to this problem is that on a physical level of humans / living beings, there is no damage, injuries or death, but on an electronic level, the destruction is complete; therefore, the problem is much more harsh and serious than an attack by a conventional or nuclear ballistic missile, since, given the lack of direct injuries or death, the country, region, state is left with the same population and needs for survival, but without the means for communication, food, transportation, defence, social structure, education, health, safety, administration and institutions, creating a total and absolute anarchy in days or weeks, since there also are no external or internal transportation means of any type by basing all our technology, economy, daily life on the use of microprocessors and microchips which will not support the electromagnetic pulses deliberately emitted as a terrorist attack or radiation, emissions, solar pulses of a planetary origin, which are unforeseen and/or natural.

The suppressor, reducer, filter, protector of all types of vaporisation of energy components-emissions, volatile hydrocarbons, liquids, gases, emissions of any class or type of pollutants and non-pollutants including waves of any type or shape, especially electromagnetic waves, has been designed to solve the previously described problem, based on an incredibly effective solution, being completely successful with regards to the different aspects mentioned in the preceding section.

Wherein the object of the invention is to achieve a blanket with the anti-electromagnetic, anti-acoustic, anti-thermal, anti-infrared properties, wherein it is continuously embedded, added, Introduced into at least a mesh, net, spheres with the application of a special aluminium alloy manufactured according to the final use thereof with commonly used materials and/or high performance/special materials such as copper, platinum, nickel, gold, silver, niobium, inconel, monel, etc. (2) of a high thermal transmission coefficient, resistance, electronic transmission, mechanical traction and by means of cuts and by deformation and extension of the same with the shape of hexagonal reticules (3) with a three-dimensional structure.

The invention consists of joining and introducing a layer filled with the alloy body in a mesh, net or sphere format in the blanket cloth / textile of several joined layers, by means of a sewing system using thread of any type or of any existing or future material, glues, adhesives, pressing systems, cold or heat binding of the textile layers with different special properties in order to finally achieve a single blanket / cloth with different applications according to the final needs of the user, also with the possibility of being able to choose one, several or all layers that are required for the embodiment of this invention, even with the possibility of increasing or decreasing, removing or duplicating the number of layers for any reason of one or with all the layers presented herein with the properties thereof according to the application and needs of the user.

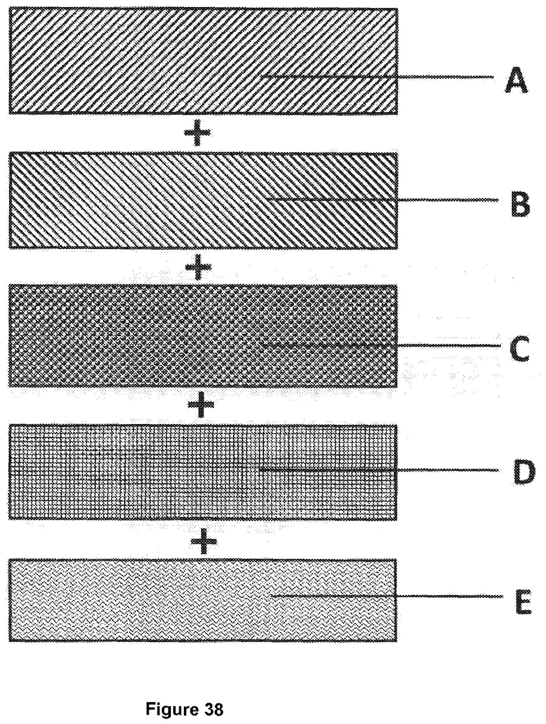

The invention consists of a cloth formed by several layers creating a single consistent blanket with several joined layers having the properties described, such as a textile blanket / cloth made and/or manufactured from a first exterior waterproof layer (A), having a camouflage colour or design according to the area of use (desert, jungle, forest, black, blue camouflage colour, etc.). A second layer (B) of a fire retardant / anti-thermal cloth / fabric, to protect the human body, machinery, electric or electronic systems, computer systems, mechanical systems or similar against fire and prevent the emission of infrared / thermal waves. A third layer (C) of an aromatic polyamide fabric / fibre, that is bulletproof at a minimum level of I-III until levels VIII+, as needed. A fourth layer (D) of the alloy body in a mesh, net or sphere format that, in addition to being a heat dissipator by reducing, eliminating the thermal emission emitted by humans, animals or machinery, also has introduced into special aluminium alloys thereof the factor of being a blocker, inhibitor, protector, rebounder, of all types of emissions, satellite emission frequencies, including known and future means, such as radio emissions, GPS, GMS, civil, telecommunications or military satellites, anti-electromagnetic waves, electromagnetic pulses created by humans, on a planetary level or by solar or interstellar radiation of any type or form. The fifth layer (E) would once again be the waterproof layer for closing the blanket on both sides equally and with the same material. Being able to add internal or external layers manufactured from cloths of nanotechnology which could filter the air or pollutants, including chemical or bacteriological pollutants. (Figure 38).

The dimensions and shapes of said cloths have several layers, several properties and all the advantages described in a single unit called "blanket", which can be adapted for any use in the format of a blanket in order to be able to impede, block, reduce, eliminate, bounce, protect, filter, camouflage the user with one, several or all the advantages such as that of the camouflage, impermeability, weather protection, fire prevention, anti-thermal protection, anti-electromagnetic pulses / magnetic fields, anti-acoustic and bulletproof protection.

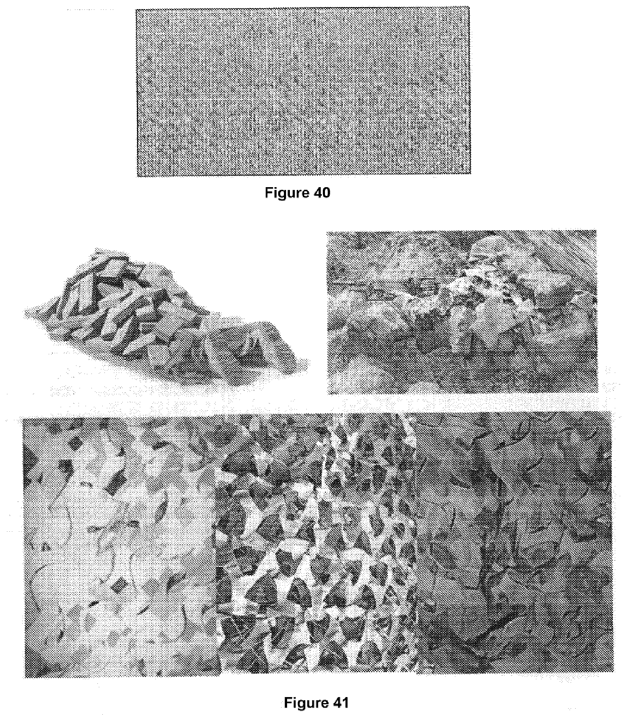

The cloth of the (camouflage) waterproof layer can also be manufactured by joining other types of fabrics or cloths of any material in order to apply the camouflage in 3D (type of tree/bush leaves, etc.) (E), which will have to be added to the exterior part of the first or last layer of the blanket in order to make a cloth waterproof / camouflaged on both sides by means of a glue, sewing, thermal binding system, etc. (Figure 41)

In the case of using the cloth in the form of a poncho or djellaba or in a format in which the user is completely covered from head to foot, an opening is left in order to be able to see the direction in which they wish to move. This rectangular opening, or opening of any other shape / design, will be manufactured from a transparent plastic or glass material in which it will pass through or be incorporated into the alloy body wherein the view through said viewing window or opening will be limited to seeing through the introduced plastic glass with the mesh / net, although it will be sufficiently possible to move normally, with all protection / anti-detection without emitting radiation through this window / opening with the applications of the blanket. The same will be done, if desired, with one's ears, but it will be closed even more and will only allow a minimum amount of sound to enter. (F) Already having glass and plastic in the market that can help by not having to reduce viewing due to the protective properties thereof that together with this invention can be even more effective in its use.

The cloth / textile called blanket will always have the first waterproof layer on both sides for the exterior protection thereof and the following layers of the cloth can be randomly ordered according to the necessary applications. It is not necessary to have all of the cloths in this order or in a set amounts, being able to increase or decrease the cloth layers as desired. The exterior part can also add the application of 3D camouflage on both sides (E). At the same time, it can join several cloths of the final blanket so that it has the same properties on both sides or on a single side, according to the needs of the user. Therefore, the final cloth will be introduced on both sides in the form of cloth of the sandwich-type waterproof layer (A) and the filling of the layers can be make in an orderly way on one side, beginning with the secondary layer and finishing with the first layer (A), being able to repeat the same placement of layers in the opposite way so that both sides have the same advantages of protection/anti-detection, regardless of the side that is finally used since both are the same.

In the case of using this cloth / blanket as a sleeping bag or having to use it to support heavy weight according to the size of the user or its use, a filling of the alloy body with viscous and permanent system can be introduced into the layer of the alloy body (in the central layer if it has two equal sides or the penultimate layer before the waterproof layer if it has a single layer), in order to protect and cushion the structure of the alloy body against the heavy weight or strikes of the user, even being able to use it as a mattress for shooting in military areas due to the cushioning (G) thereof. This cloth is lightweight, can be deformed and rolled up to be easily transported physically and simply on top of / inside a backpack or travel bag by humans or in transportation means of any type. Large blankets for covering large surfaces are transported by means of trucks and using cranes or sufficient labour to extend / cover said blanket / cloth over the object to be protected.

The cloth of our blanket can have large or small dimensions to be used to cover individual people, groups of people, soldiers, civil protection personnel, defence personnel, security personnel, dwellings, vehicles of all shapes and drive systems, from motorcycles, cars, trucks, buses, combat vehicles, missile launchers, rocket launchers, (DRONES), unmanned aircrafts, military or private / public / civil aircrafts, trains, satellites, ships, submarines, buildings of public, private use, buildings of commercial, industrial use, refineries, storage deposits of any type, airports, ports, railway stations, buses, space stations, ducts, pipes of any electric, computer, mechanical type, of the transportation of hydrocarbons, fluids, gas pipelines, oil pipelines, telecommunications systems, military stations or bases, hospitals, energy plants, recycling, food production, including containers of fuel and the cargo transport of hydrocarbons and gases of all types, which are movable and strategic.

The viability of being able to cover and protect large surfaces will be carried out by means of the joining the cloths / blankets that can be joined together by means of a sewing, velcro, gluing system or joining of any type in order to achieve total and uniform coverage over the object / person to be protected, regardless of the size needed.

The cloth / blanket can also increase or vary the types of layer cloths according to the use thereof, even in extreme situations, bacteriological conflicts or conflicts with chemical agents, both in war zones or areas with terrorism / sabotage / accidents, etc. using carbon cloths, nanotubes (nanotube fabrics). These cloths can be formed by membranes in which the operator will not be able to breathe in these polluting agents which cannot pass through the cloth, suit, uniform, especially to impede the filtration, elimination, reduction of those polluting agents. While blocking the entry of pollutants, it will allow for the breathability of the suit in a safe way when said agents have passed through the filtering cloth. Therefore, the joining of the cloth layers of the blanket of this invention including the alloy body can make the final cloth, in addition to having all the advantages described, have that of a uniform, suit, cloth, blanket with anti-bacteriological, anti-chemical properties and functions, as well as anti-thermal properties, etc.

The present invention relates to accidents by unforeseen, accidental, criminal means, acts of vandalism, war, terrorism and/or sabotage, which are increasing globally and especially where emerging countries have found large reserves of hydrocarbons, products or minerals of an important economic value. The importance of these reserves and the transportation of said goods coming from the natural resources of a country, region, state, territory, to sites such as refineries or infeed terminals increases conflict, crime and interest in politically, illegally and/or militarily controlling these extracted natural resources, such as hydrocarbons, and the transportation and storage systems thereof that can be extorted in many cases so that they are not attacked and destroyed. We also cannot forget about human, social, environmental and political costs, including the effects on the geopolitics of said regions, civil wars and acts of sabotage where they occur and transfer these ducts / pipes with a high economic value. Therefore, the application of our alloy in refineries, gas pipelines, oil pipelines, ducts, pipes, discharge / filling terminals, storage, transportation by any means is not only important for the economic and environmental reasons explained previously, but also for protection from impeding, eliminating, canceling any type of ignition or explosion due to the theft of fuel by criminals, Terrorism, sabotage or at least reducing the ease of access thereof and stopping said persons with the alloy body introduced, installed inside these safety systems, protection for the transportation, refineries, ducts / pipes, storage, deposits, fuel tanks, etc. The use of this invention is a system / technology for protecting, detecting, securing, and even indicating the criminals or participants of some illegal activity in the transportation means of hydrocarbons through ducts / pipes, such as gas pipelines, oil pipelines, chemical product pipes, etc.

The suppressor, reducer, filter, protector of all types of vaporisation of energy components-emissions, volatile hydrocarbons, liquids, gases, emissions of any class or type of pollutants and non-pollutants including waves of any type or shape, especially electromagnetic waves, has been designed to solve the previously described problem, based on an incredibly effective solution, being completely successful with regards to the different aspects mentioned in the preceding section.

Wherein the object of the invention is to be a protection, reduction, elimination, dissipation, penetration system, security, anti-sabotage, anti-terrorism alarm for all types of pipes, ducts, gas pipelines, oil pipelines, systems or technologies of transporting fluids, gases, hydrocarbons and liquids.

The alloy body can be used effectively and safely for protection and safety, anti-sabotage, anti-terrorism in all types of ducts, pipelines, oil pipelines, gas pipelines, pipes for transportation between sites or points of interest, commercial, productive, industrial, strategic needs or for any other interest. Mainly, the transportation of hydrocarbons, fluids, gases is carried out through these types of pipes or ducts called oil pipelines or gas pipelines and they can transport all types of hydrocarbons, liquids, gases or similar in a single way, with a combined use or with a random use according to the needs of the operator, thus not being limited to only transporting one type of hydrocarbon or liquid if so desired by the operator.

At the same time the introduction / application of the alloy body in a mesh, net, sphere format between two independent pipes of different widths, one inside the other (such as wiring inside a plastic case, for example), ducts, gas pipelines, etc. such that the pipe of our invention has two layers of steel and a filling therebetween with the alloy body in a mesh, net, sphere format. If desired, said alloy body can be introduced, surrounded, bathed, submerged in a liquid that can have other benefits which will be explained later in this invention in order to achieve other beneficial effects for the industrial use, protection, safety of the infrastructure, and especially in and for the petrochemical industry in areas with criminal acts / acts of vandalism with low (remote) physical protection, especially in countries producing these hydrocarbons with high levels of unemployment, high levels of crime, piracy or with extreme needs, such as emerging or developing countries in which all types of these infrastructures of pipes, ducts, gas pipelines, oil pipelines, pipelines are essential for their daily survival.

Normally, the pipes or ducts called oil pipelines or gas pipelines are manufactured from metal or steel, wherein said pipe/duct can have many sizes according to the amount of fluids, hydrocarbons or gases that are to be transported from the site of production to the site of use, infeed / filling or storage. These pipes/ducts also have a varying thickness according to the pressure and volume of the duct in question, but it normally has a thickness ranging from 0.3 mm to 10 mm. The length of said pipes or ducts also varies, but according to the dimensions thereof, the length of each pipe, duct section can also range between 1/3 metres to +/- 30 metres to +/- 50 metres or more, a pipe or duct being hundreds or thousands of kilometres long, in sections of different sizes and designs, which are joined together by means of welding or other means, but again this is always relative to the design and the final use.

Said pipes or ducts are welded, joined, even by means of screws and glue of the latest generation in order to prevent welding (which is difficult to control) that is usually used therebetween; for each specific distance that also depends on the type of fluids, gases, liquids or hydrocarbons that are to be transported, there are pumping stations or sub-stations, the function of which is to ensure that the pumping and pressure of the duct is at the level needed to achieve the transportation of the products or hydrocarbons quickly and efficiently, also with the benefit of reducing the cooling of the transportation of the crude oil through large extensions of oil pipelines / pipes / ducts. At the same time, these pumping stations or sub-stations also have the responsibility, operative and technical design of being able to close said duct, gas pipeline, oil pipeline or pipe in order to impede the passage or flow of the hydrocarbons in the case that there is any damage, breakage, blockage of the pipe, duct accidentally, due to the weather, sabotage, terrorism, an unforeseen situation, naturally, from maintenance, criminal acts, and/or vandalism of any type or form.

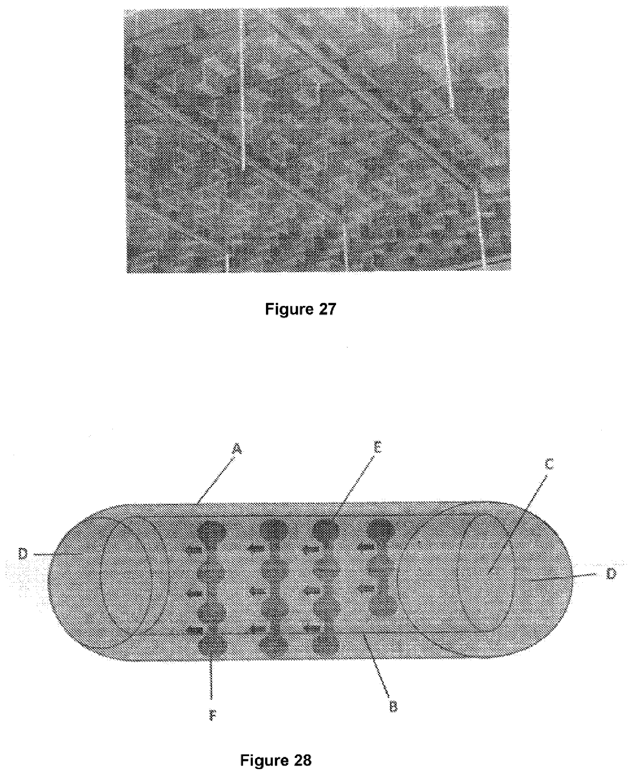

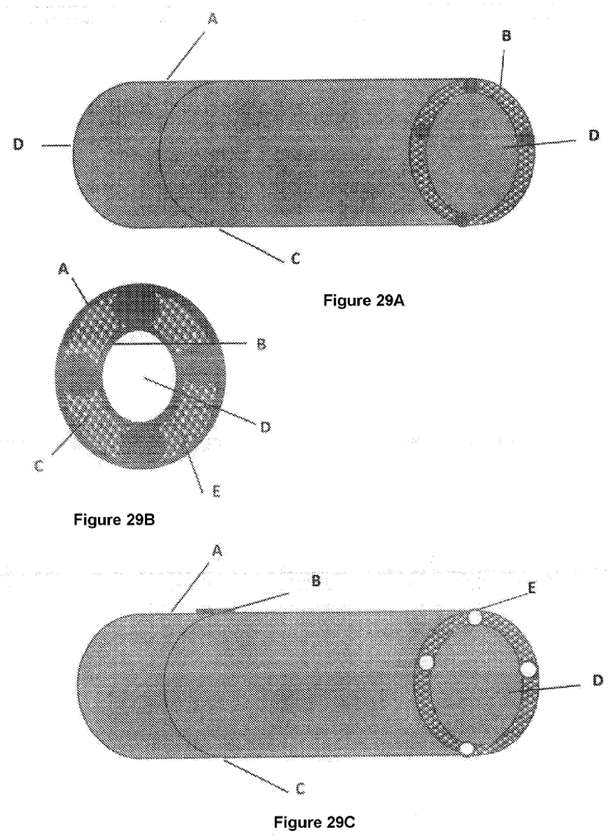

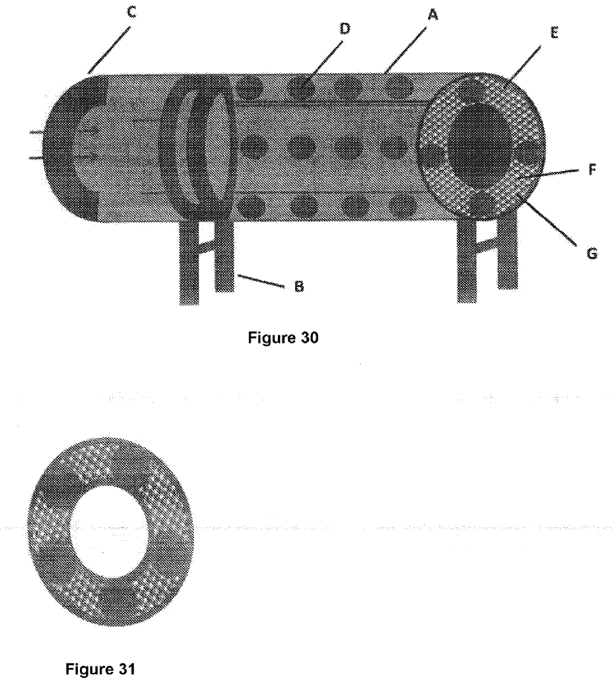

For our use of the body of the invention to be effective, it is necessary to insert the original duct, pipe (Figure 28) inside a second duct, pipe (Figure 29) of the same characteristics and/or materials of the same manufacture and techniques but there has to be an upper minimum space (Figure 30) between the "original" duct (Figure 28) and the "secondary safety" duct, pipe (Figure 29) of the pipe, duct of at least 2 cm to 20-50 cm and even more according to the final technical design of the duct and use. This space between the two pipes, ducts will be filled with the alloy body in a mesh, net, sphere format. It can be covered in a way that can be wound on the "original" pipe or pipe introduced in the net or sphere format as easily as technically possible.

Therefore, in the end there will be two pipes of different dimensions (of a greater diameter), the pipe called the original pipe (Figure 28) and the second pipe called the "secondary safety" pipe (Figure 29), the "secondary" pipe being wider than the "original" pipe so that the space between the two pipes, ducts (Figure 30) can be filled with the alloy body. (Figure 31).

The pipe called the "original" pipe (Figure 28) will have the same function of transporting the fluids, liquids, hydrocarbons as has been designed and the pipes, ducts are connected between the pumping stations and sub-stations from the refinery or storage site to the filling / discharge / infeed terminal in any sea, land or river site. Therefore, the use, operability of the "original" pipe does not change function and continues to be used for that which was designed originally as a gas pipeline, oil pipeline, pipe, etc.

The pipe called the "secondary safety" pipe (Figure 29) will have a function of not transporting any type of hydrocarbon or gas, but rather being that of a pipe, duct, protector / safety as secondary steel coverage covering the "original" pipe. The objective of this second pipe is also to protect the alloy body against humans or animals, theft or damage that can be caused to the alloy body if it were not protected between the two metal or steel pipes and especially by the "secondary safety" pipe to said exterior contact. This second pipe, duct, having the same characteristics of quality or hardness of that called the "original" pipe/duct, makes the possibility of penetrating the "original" duct/pipe very difficult, costly, dangerous for a criminal, thief, saboteur, terrorist due to first having to pass through the external "secondary safety" pipe/duct in order to go on to access the "original" pipe, duct.

Between the body of the two pipes, ducts, in addition to having the alloy body, Teflon balls or balls of a cushioning material with balls or cushioning systems of any type or any material and/or of self-centring / levelers / separators are introduced mechanically or individually between the two pipes, to the end that the distance between the two pipes or ducts are always as constant as possible (even if the distance between both walls of the pipes does not necessarily have to be perfect and the Teflon balls can be placed in any part of the pipes and even in the bottom of the pipes, only if it is thus designed). Thus, the "original" pipe is suspended and protected in a position that is as centred as possible toward the exterior "secondary safety" pipe, even if there are other means for keeping both pipes secured by means of all types of supports that could even be part of the infrastructure of both or individually in the case that the pipes/ducts are on the ground, or suspended to cross rivers, lakes, hills, mountains by means of bridges, viaducts, etc. In the case that the pipe/duct is submerged in a river, lake, the sea, the design of the infrastructure is not necessary for these supports or fastening. It also being possible to make the interior pipe from highly resistant plastic or PVC, but we recommend that the two pipes be made from the same metal material in order to achieve the objective of safety and make it more difficult to penetrate given the hardness of the metals in both pipes, ducts, gas pipelines or oil pipelines.

In order to penetrate the "original" pipe, duct, the "secondary safety" pipe must first be passed through or penetrated. To be able to extract the hydrocarbons from the "original" pipe / duct to steal, extract said transported hydrocarbons, it is necessary to use a mechanical, manual or electric mechanism, being able to use drills, blowtorches, radials, etc. All of these means for penetrating the steel pipe becomes very dangerous due to the creation of a hot spot, spark or flame, where the gas pipelines or oil pipelines often explode or ignite due to the existing danger that entails the use of these mechanisms to penetrate the pipes / ducts, causing hundreds/thousands of deaths by attempting to rob some litres of hydrocarbons. After studying the new technologies that thieves, criminals use to penetrate or break the ducts, pipes, they use industrial drilling machines but with heads of hardened plastic which do not create sparks and which make the criminal act thereof safer. There are also people who wish to penetrate these pipes / ducts in order to start a hot point or point of ignition in order to attempt to explode the duct, pipe for social, political reasons, terrorism or vandalism.

These types of acts by robbery or sabotage, for example, also cause environmental damage, since all hydrocarbons or fluids are lost, emptied, dispersed toward and through the ground/land around the breakage/penetration of the pipe / duct, causing ponds, lagoons, pools of chemical products, hydrocarbons that highly pollute the land and the subsoil, which will quickly penetrate even the subsoil, damaging the underground deposits, pools, water wells with the resulting social, environmental, ecological damages, and damages to the ecosystem, especially in areas of agriculture, fishing, or near cities with populations that need underground drinking water to survive and for their crops. Normally, when these environmental and social disasters occur, authorities, due to the lack of resources, technology or due to technical or logistic reasons, cannot arrive in time to close said pipes / ducts in the pumping stations, sub-stations, wherein the loss of fluids, chemical products or hydrocarbons can entail hundreds of thousands or millions of litres of pollutants because even if the closure of said pipes / ducts were carried out automatically due to the decrease in pressure indicated by the safety system of the pumping station or sub-station / refinery, discharge terminals between said manual or automatic shut-off / closure / opening valves, pumping stations or sub-stations, the amount of fluids, liquids or hydrocarbons between the shut-off valves can be hundreds of thousands or millions of litres, which until the authorities / technical services arrive at the point of penetration / breakage and carry out an emergency or definitive repair, all these polluting liquids will leave the pipe / duct causing significant imminent danger of explosion and pollution, these cases occurring daily in emerging producer countries of crude oils, hydrocarbons such as Nigeria, Angola, Guinea, with hundreds or thousands of deaths annually due to these acts and with environmental damage, even those already classified by international authorities, ecological groups that specialise in these problems such as areas with hardly any ecological recovery given the years that it would take, expenditure and the low utility due to the massive penetration and long time of penetration and destruction in all layers of the subsoil, rivers, lakes, etc. This frequently occurs in emerging third world countries, and even in large producer countries of the G20 and even G7-8 world groups, such as Russia and the ex-Soviet republics; therefore, it is a global problem, but one that is dangerous to a greater or lesser extent depending on the risk of the country.

At the same time, this environmental and social damage, without considering the economic and operative damage of the duct/pipe of the operator, may mean that in years, the damage caused by the lack of funds, means or interest of the government in this area or territory for geopolitical reasons can be repaired in years, decades or even never. In some cases, the operators have paid or ecological repair fees or payments, but the technical means are or were not within reach of the competent authorities, letting the incident be forgotten but still affecting the populations, people and ecosystem every day.

By using our alloy body between the two pipes, the following benefits are achieved: by heating the steel of the exterior "secondary safety" pipe, duct with the alloy body therebetween, it has the benefit of drastically dissipating heat which slows down and then increases the time of use of any type of drill bit / drills, even industrial drills of hardened plastic / drills, since the steel is not heated when in contact internally with the alloy body. In the case of using a blowtorch, thermal lance, radial, while slowing down access to penetrating the exterior pipe due to heat dissipation, with the mere fact of penetrating the steel and contacting the special aluminium alloys of the alloy body, they begin to create and give off countless sparks and explosions which further slow down the illegal process of penetrating the protected duct / pipe due to the loss of direct pressure and possible burns from sparks, thereby slowing down the criminal process.

If, in this time delay achieved by these safety means and with the use of the body of the invention as a heat dissipator, the double protection of the second exterior "secondary safety" pipe is penetrated and was not enough to delay said criminal acts, there is a second option for the arrival of the authorities or security forces that has three new functions for further maximising the safety of the duct.

The area between the two pipes, filled with the alloy body in a mesh, net or sphere format and being located between the two ducts called the "original" pipe and the second pipe called the "secondary safety" pipe, is filled in said intermediate areas with a liquid, coolant/anti-rust product, non-toxic chemical or water. Said pipe will have in the pumping station, sub-station an independent second pressure group and deposits of these auxiliary liquids only for use in this area of filling with liquids, wherein the alloy body is placed so that in the case that thieves or saboteurs penetrate the exterior "secondary safety" pipe by any means; upon penetrating this point or breaking it, thousands and/or millions of litres of liquids/markers leave through this opening, outlet, access, such as glycol / water under pressure through this hole / outlet as if it were water from a high pressure hose. This first ensures that the authors of the criminal act have to change places immediately due to the pressure of the liquid / water, further slowing down the criminal act and giving the authorities more time to reach the site.

In the case that there are no deposits of water / liquids or the possibility of using the pressure group of the pumping stations, sub-stations, refineries in each section of the pipe / duct, it would be closed completely by sealing by means of a Teflon gasket, rubber, or welding the sections of the pipe/duct in order to maintain the pressure in different sectors of the duct/pipe wherein the alloy body is submerged in said liquid/water so that in each section of the pipe/duct it is filled with hundreds of thousand/millions of litres of water/liquid, and only with the outlet of this water/liquid without the use of pressure groups can the amount of water/liquid have the same effect of slowing down the criminal act due to the outlet under pressure of the liquid contained in said section and damaging the apparatuses used in said criminal act.

However, upon emptying this segment of the liquid or water, the criminal act could be carried out at another point of the pipe/duct, but the flooding/damage to the machinery used in said act could be enough to slow down the continuity of the criminal act. In each section, there can be an anti-flow system (the liquid can only move in one direction), as well as valves or liquid infeed/filling points in the case of having undergone a loss of volume when using bleed valves, for example.

Second, the systems, electric apparatuses, and/or mechanics of the criminals, vandals would get wet and they may break, malfunction and become useless upon contact with water, causing economic losses to the criminals for the future replacement or repair of said penetration mechanisms or systems, such as industrial drills, which can be difficult to repair or replace in countries or areas with few technical or industrial means.

Third, anti-freeze/coolant liquid, such as glycol, can be introduced into the water because it functions as an anti-rust, coolant, benefiting the temperature control of the pipe/duct and of the hydrocarbons transported through the pipes/ducts and mainly due to the low cost thereof or the use of a liquid between the two pipes, ducts, the alloy body using a non-polluting or harmful dye, marker with dye or a marker such as methylene blue, or methyl orange, or special visual colourings, or dyes that can only be seen with infrared light, black light which would require several days or even weeks of being able to remove or wash from the clothing or skin of people in the area of the criminal act. This dye, marker, visual colouring or dyes, markers that con only be seen with infrared, black light could then help authorities, security forces search for the people who carry out these criminal activities, as well as include more people who directly or indirectly participate in the criminal act, even with the possibility of marking or staining all types of vehicles, electric means, apparatuses, mechanical materials, mechanisms, which would make it very easy to detain, confiscate and control the people who have actively or passively acted/intervened in this criminal act, act of vandalism, act of terrorism against gas pipelines, oil pipelines, pipes or ducts. Publishing these safety/protection technologies and cases of detainment by these safety/protection means in the media would act as a deterrent for future criminals.

Another benefit of installing the alloy body between and in contact with the two pipes / ducts is that there would be no rust in both ducts, thereby lengthening the operational life of both. There would be no growth of algae inside the filled space of the alloy body and the water, liquids or liquids with dyes.

In the case of electrical storms, static, natural, accidental, intentional or unseen fires, both pipes / ducts would be completely protected by means of heat dissipation of the alloy body and by using water or coolant-type liquids with the markers or dyes included as an added coolant, and in the case of heating the exterior steel for any reason, the alloy body will maintain stable temperatures, protecting the internal "original" pipe, duct due to heat dissipation and controlling the increase of the heat of the liquid by the external exposure to direct fire of the "secondary safety" pipe. Along the exterior "secondary safety" pipe, security valves can be installed to evacuate vapourisations of vapour from the liquid in extreme cases of high temperatures, if desired, and to use the pumping stations to circulate and fill any lost liquid, water through the auxiliary deposits thereof by means of a closed circuit system or by means of the connection to water networks already installed in the area such that there is always water, liquid with or without dyes / markers in said areas between both pipes and where the alloy body is located until the authorities arrive and order the closure of the water, liquid, coolant pumping systems, etc. (Not affecting the transportation of the hydrocarbon through the "original" pipe since it is directly affected).

Use of this system protects the operative assets of the operators of the industries, fluids, hydrocarbons transported to innocent people affected by said criminal, illegal acts, or acts of vandalism or terrorism, and it is ensured that the pipes, ducts, oil pipelines and/or gas pipelines have an operational life that is nearly double, easily exceeding 25 years due to the anti-rust benefits between the two steel pipes and the zero maintenance of the alloy body in these applications.

By having our alloy body between the two pipes, it is also ensured that it has an additional anti-static function protecting said duct, pipe, oil pipeline, gas pipeline systems against electrical discharges of any type since it would act as a Faraday cage throughout the entire installation, giving an added value of safety to the use of the alloy body.

Finally, with the detainment of the criminals, confiscation of the goods and/or apparatuses for being able to carry out these criminal acts of "theft of fuel-sabotage", for example, and the private assets thereof obtained from said criminal acts, the government would benefit by stopping these criminal acts and both public and private operators would economically benefit since it does not affect their income or national or international production agreements, especially regarding the exportation of said products or derivatives to third parties, including hydrocarbons, gases or chemical products, etc.

The present invention relates to the protection and safety of dwellings manufactured from any construction material, including and not limited to schools, institutes, residences, offices, public and/or private buildings of all types, towers, skyscrapers, hospitals, entertainment areas, museums, which become increasingly important every day, including doors and walls of containers of the cargo transport of trash and recycling. The doors of said types of buildings is the most essential aspect for the architectural, functional feasibility and feasibility of use for humans and use of the building. Effective, valid and long-lasting protection systems have always been sought, but many times there are older people, children, physically disabled people or even adults who cannot push or open said doors know as safety, fire preventive, or emergency doors, due to their heavy weight and in many cases because even their own frames that hold the doors fall over time and due to poor use, making the hinges start to fold, fall, twist, etc., causing the doors to open/close in a difficult manner or even causing them to lock completely.

In buildings, and especially tall ones such as towers, blocks of flats, skyscrapers, the emergency doors, emergency exits and fire exits have a specific purpose for the protection/safety of neighbours/users and a door system that is highly resistant to fire, and they are completely necessary in public areas, corridors, exits, doorways, access to dwelling areas, internal or external doors of dwellings, offices, firms, rooms according to their use and level of protection desired, garage entrances/exits, warehouses, hangars, deposits, storage or transportation containers, safety boxes, safes, without forgetting the protection of the passage ducts of pipes, telephones wires and power cables between floors/neighbours which are the weak points and conductivity points for fire, heat between floors, said critical point being solved by covering these adjusted ducts with the net/mesh of the invention, impeding the physical passage of direct fire.

In all buildings and even more so in buildings with a high value per square meter and a higher purchasing power of the users, the existence of doors or walls of excessive dimensions, widths which are the normal standards in today's market entail a loss of space and net habitability of the space of the building. The loss of this habitability entails an unnecessary increase in the cost of the possibility for construction. Even the client would not benefit because they would lose net possibility for construction in the same building due to the widths and dimensions of the safety doors and walls.

The little technology that is invested, including R&D due to failing to see or appreciate a more modern, open, effective market in this sector of specialised doors of all types with new materials with highly resistant alloys, such as those used in the alloy body, makes it so that the measures and products have become stagnant, antiquated, especially in the development of better materials, products, wherein ours are more resistant, long-lasting, lightweight, recyclable and with better designs for extending use and not only for general / industry / required / legislative protection / safety, but also for a more individual, particular and personal use, which would increase the market of these types of doors, such as those that we offer with the use of the alloy body in new markets with a greater demand and global market. Safety / protection doors in today's market are very heavy, with large widths and a very formal, cold and industrial aesthetic, and there are no doors or walls that are highly resistant to fire and have smaller dimensions and a low weight. This is even so when using the alloy body to improve and surpass the safety / protection measures of the construction regulations of each country that already exist and are regulated.

Without the use of our technology and by using the alloy body introduced in said doors, there is a loss of space with a high economic value for the promoter, constructor and client in spaces that are unnecessarily lost when there are alternatives such as that of our invention which uses the alloy body in various formats and with different shapes, which can lead to a reduction in the loss of space from 30%-50% of each door, such that the savings of dead/lost space could be used and benefit the interested parties mentioned previously. Many secure doors have the problem of design since they are not attractive due to their functionality, but this can be solved when designing the doors with lighter, more modern materials with more protection/safety properties than those currently used.

Another problem is that of old or historic buildings, used for renovating, transforming, modernising said buildings into hotels, residences, universities, entertainment areas, museums, etc. Fire prevention measures follow measures and regulations that are already established and very strict, but due to the weight, excessive dimensions, design of the existing doors, it is not viable in many sites without introducing and complying with the norms and regulations established with the opportunity to renovate, modernise, transform buildings of a historic/cultural value due to failing to comply with the safety and, in particular, fire prevention measures.

The fire prevention, secure doors have a weight such that many people with physical or visual disabilities, age, physical size find that an emergency/fire exit or door are very difficult to open, especially in the case of a real emergency or attack, fire, explosion or fumes. The door has to act as a firebreak, physical suppressor, container of the shock waves, flames, thermal heat. At the same time, it must allow people of any age and physical ability to exit quickly and safely; however, in many cases it is very difficult for children, older people, and the disabled to use these doors given the heavy weight thereof.

This situation is also evident in doors of ships or in high security, entertainment and hotel installations. The materials used in fire prevention doors in the aeronautical, maritime, transportation industry, seek a lightweight, resistant, economic product that has high mechanical resistance, but the resistance thereof in a fire is much lower than that of those used in public places or places of safety. The materials used in the manufacture for transportation industries are mainly plastics, carbon fibres, combustible materials, which can already be ignited very easily, are highly pollutant and their resistance to fire can be less than 4-10 minutes maximum in aviation. In the case of ships and trains, this can be even less due to the ease of ignition of these materials, especially if the transportation means is in movement, using the air as a super-conductor, chimney, blower, thereby creating a turbo compressor of gases, heat, flames, fire throughout the train, plane, etc. Said effect being increased if the ship, plane, train with goods is dedicated to the transportation of hydrocarbons and chemical products.

In the final cases of attacks on people, students, teachers in schools, hospitals, prisons, the use of a door using the alloy body in its blanket format with its anti-thermal, bulletproof, anti-electromagnetic, fire prevention cloth layers, can offer a very broad product for protecting not only against a fire but also against attacks with fire arms, thermal heat / gases / combustion fumes / anti-acoustics for reducing noises from hospitals, residences, schools, dwellings, buildings, towers, skyscrapers by offering everything together inside a safety / protection door, which is more narrow and lighter than conventional doors, saving valuable space, with less weight, where the structure of the dwelling, building, offices, structures undergo less stress and in particular the frame / design of the door undergoes less stress since it weighs less. These doors can be designed into many shapes or with layers of materials with an exclusive or standardised design, being able to incorporate these types of doors within any dwelling, in any area and especially being able to change from a door with an industrial / mandatory design to a door with a modern, classic design, integrated into the building with a technical value, safety, protection and with pleasant human / domestic / business architectural qualities for daily use and architectural integration. These doors with these protection / safety means which are extreme and very broad can be adapted not only protect the occupants / users, but they also protect against acoustic noises from the daily activity of companies, entertainment businesses, hotel rooms, residences, hospitals, and they weigh less and have smaller dimensions. To achieve these obvious but excellent and viable results, we can introduce the alloy body into viscous materials, liquids, foams, loose or pressed shavings or even in plaster, cement, construction material in order to comply with some limitation on the minimum weight of a high secure door, although it would go against the advantages of the use of the alloy body which has a lower weight.

The use in plane cabins, train wagon doors, ships can be essential to saving space, weight, and not changing the design but increasing fire prevention protection at levels never seen in these means of transportation, even exceeding 30-60 minutes as a minimum or 240 minutes at more than 1200°-1600°C in extreme cases, according to the final dimensions and layers introduced inside the door or structure of the transportation means, but achieving exceptional additional means such as fire preventive, anti-thermal means and with the possibility of expanding and including more layers of protection / safety, including the use of bulletproof, anti-electromagnetic materials, etc.

The suppressor, reducer, filter, protector of all types of vaporisation of energy components-emissions, volatile hydrocarbons, liquids, gases, emissions of any class or type of pollutants and non-pollutants including waves of any type or shape, especially electromagnetic waves, has been designed to solve the previously described problem, based on an incredibly effective solution, being completely successful with regards to the different aspects mentioned in the preceding section.

Wherein the object of the invention is introduced throughout the inside of the type of doors including secure doors highly resistant to fire, protection / safety doors resistant to heat, emergency doors, fire exits, safes, safety boxes, normal doors made of wood / plastic / Formica / foam, doors for businesses, offices, of with any format of use, passage, dimensions, use including doors for garages, warehouses, hangars, gates, etc. The alloy body can be annexed, glued, covering the exterior / interior layers of the doors or by means of introducing the alloy body in a sphere / mesh / net format, or in an independent fabric body which is introduced in the manufacture of the door during the manufacturing process thereof, the multilayer blanket format including textile layers with anti-thermal, fire prevention properties, dissipators, suppressors, reducers of thermal or heat waves, introduced, filled, mixed or inside a viscous material, in all types of liquids including fire preventive liquids or coolants, plaster, cement, filling materials of any type of powder, metal or non-metal shavings, wood and its derivatives, organic and inorganic waste, including recycled, ecological waste, fire preventive foams or foams with heat or fire resistant properties, carbon fibres, vermiculite, in order to impede the concentration, expansion, extension, passage of any type of fire, acts of vandalism, attacks, sabotage, accidents, natural disasters, in any public or private place, entertainment areas, hotels, public and private transportation of any type, areas of safety, hospitals, skyscrapers, towers, residences, lifts, emergency corridors or stairs, fire prevention rooms, doorways, bunkers, etc.

The safety / protection door can be connected by means of a tube, duct or hose, through the door frame, safety hinge of the door, wherein it is connected to a deposit of water/liquid with a dye / marker of glycol or similar. In the case that there is no water or liquid deposit of any type as described previously, such as glycol, antifreeze, coolant or fire retardant, this duct / hose could be connected to the general network of the dwelling, joining the door to the frame through the hinge area, by means of a flexible duct/pipe/hose with a width to be determined according to the size of the door.

Thus at the time that a criminal or attacker penetrates the safety / protection door by firing a conventional weapon, drill, punch, welder, thermal lance or radials when penetrating / piercing the inside of the door, which has a closed sealed layer covering all the dimensions of the door or several encapsulated dimensions according to the design of said door. Upon penetrating the outer layer of the door, the pressure of the water leaving through the hole created would impede viewing and could even interrupt, damage the means that are being used by the criminals to penetrate said door.

In the case that there is a desire for the dye / marker to continue to leave through the hole, even if the liquid/marker deposited in the door has finished, a syrup/powder/concentration of the highest level of dye / marker colourant can be introduced in the area of the liquid of the door, so that the water that comes from the network continues to leave with said marker for as much time as possible. Including the possibility of putting a mixer into the area / side of the interior door / hinge, wherein the water from the network automatically mixes with the dye until the concentrated product/powder/syrup/marker, glycol finishes, and the water will continue to leave without the marker.

Electronic safety measures: said safety/protection doors can have electronic/computer systems, which can be independent or integral parts of safety systems of dwellings/offices/rooms, wherein not only any acoustic, movement, heat alarm system can be activated/deactivated, but also the doors of normal use (A), safety use (B) or emergency use (C) mode can be closed/opened. The mode of normal use would be the ability to normally use the door with a handle and pass through, open or close the door normally (A). In the safety mode (B), the door can only be opened with a key/screen security code, including iris detection, fingerprint detection, voice recognition, visual recognition, independently or combined. The door in emergency mode (C) would enable one to exit an area, but not enter it without having to re-introduce a highly secure security code or the relevant security measures described previously. Thus, the client, according to the time of day, reasons or risk levels, could determine at what level to protect the dwelling and activate the doors according to areas, floors, sections of the apartment, building, dwelling or warehouse.

The computer systems, including automation could be automatically activated by increasing the security level or security mode in the case that some anomaly, penetration, alteration of any protected, sensorised system of the dwelling, building, office or warehouse is detected; therefore, if a movement sensor detects that someone is forcing a window, the security or automation system can automatically send a signal so that the safety/protection door passes from a normal level (passage through both sides) to safety activation, even sending a signal to the users that something is happening outside the dwelling or building and it can only be automatically deactivated if the sensors, after a period of time, see that said unusual/criminal activity has ceased, going on to reduce the maximum security level to a normal level or to emergency mode. In the case that the criminal enters the dwelling, only the user can activate or deactivate, reduce or increase said security levels from the maximum emergency point.

**In the case of doors with security opening barriers,** these doors contain a cloth / textile in the "blanket" format, wherein the user can also have the alloy body installed for the dissipation, reduction, elimination, of thermal waves, shock waves, fire or direct flames; it also contains layers of fire prevention, bulletproof textiles of levels I-III to levels VIII+. This makes it so that an emergency door only used as a fire prevention door becomes a highly secure door upon introducing a special secure shield inside it with properties such as anti-thermal, anti-electromagnetic properties, with protection systems for liquids under pressure, etc.

Said secure doors could be installed in areas with a high risk of criminal acts, sabotage, terrorism or interest in stealing valuables, objects and electronic systems, computer systems, private or government databases with significant value, safes, money, confidential documentation, works of art, museum pieces, rooms for scientific, biological, bacteriological R&D and chemicals.

In the secure doors in which the blanket is introduced, this blanket protects said compartments / rooms / offices / dwellings, etc. against electromagnetic pulses, electromagnetic fields, even being able to form an integral part of a room or compartment by using the Faraday design for blocking, bouncing, removing, dissipating, reducing, suppressing all types of existing electromagnetic waves, radio waves, Wi-Fi, GPS, GMS, satellite waves and conventional telecommunications means, fibre optics, cabled power supply, and even being able to protect new technologies in the future.

This is to increase the market of these safety / protection doors and for them to be used more often and not for required, legislative reasons, regulations established in the construction norms of any country.

These doors, without failing to comply with the norms on colours or required special signage, can be painted, designed, laminated, annexed with any type of material such as plastic, glass, cloths, paints, varnishes so that said doors can form an integral part of the design of a dwelling / office without standing out and without losing the aesthetic or overall appearance designed by the user or architect. By being personal doors for safety / protection reasons that are not required, said placement of doors and their safety / protection levels will have to be in the hands of only the user, such as the creation of highly secure rooms, sections, compartments, called panic rooms, but from the outside they are completely integrated in the decor and do not stand out in any way or form.

It is possible to place these doors in various sections or floors, areas of the dwelling to thus limit access of any criminal to the entire dwelling since they cannot pass through said doors upon closure of rooms, or floors between stairs, or garages to dwellings, in a safe way, it not being costly, but indeed impeding the movement and passage of criminals or unwanted people through the entire dwelling and its exterior area, being able to automatically activate security systems for the purpose of advising the police and private security companies.

**Thermal Bridge Breakage in doors, mouldings** and **hinges:** In the area of the door frame, hinges, mouldings will be protected with a "thermal bridge breakage" system. If desired, a double hinge system or a system for the water pipe will be installed, passing through the hinge in order to also have this fundamental part of the door protected with a non-visual system by means of the pipes of liquids, so that both sides of the door can enable the access and operation of the door, especially in cases where one of the two are affected accidentally, in an unforeseen way or in a criminal way by means of the use of tools of thermal, industrial, metallurgical use, such as blowtorches, radials and thermal lances, explosives, etc.; the door will be extremely secure.

The object of the invention is to slow down time for the intruders for as long as possible in order to facilitate the arrival of the security forces or to carry out an evacuation and/or emergency plan to other areas of the building or secure rooms.

The doors can be opened from right to left, by sliding, or lifted by a weight compensation system.

They can be gathered like blinds, slide toward the inside of the wall, toward the ceiling, toward the floor, even raised like blinds or a lifting system toward the ceiling in a horizontal or vertical way.

**Advantages, technical features and applications provided by the invention**

The installed alloyed body acts like a protective safety alloy, By introducing the present alloy format for safety, protection, elimination, dissipation, filtration, reduction, acceleration according to the final application. As said alloys can be changed with different formulas, uses, mixtures and applications, the portfolio of use and applications is very ample.

Said inventions allow innovating and inventing systems, products, objects, uses and applications which, as they are existing problems, have not been solved for now, and our inventions are particularly designed to solve said problems. In most cases, they enable saving thousands of lives, billions of Euros in losses, achieving higher productivity, greater safety, accident prevention, greater environmental controls and protection, which are the basis of any invention or usefulness of an invention.

The alloys introduced, stored, deposited in the deposits, vessels, tanks,... achieve that:

1) The properties of the tank, deposit, vessel itself do not sustain structural loss, storage integrity. Even in extreme cases, where these vessels are exposed to fire and/or direct heat in extremely high temperatures greater than 1000°C or even higher temperatures. In tanks manufactured mainly from metallic compositions, Even though temperatures on the outside thereof exceed 1200°C.

2) The alloyed body introduced in vessels or tanks, protects them even though they are bathed in and/or surrounded by fuels that are in flames. Demonstrating efficiency and effectiveness, and an operating safety level of the alloys in their corresponding formats for protecting the physical and operating integrity of the tank, vessel and/or deposit, which assures maximum physical safety.

Given the certain risk in a BLEVE-type explosion under the same conditions of extreme exposure due to heat or fire without protection by means of these alloys on the inside thereof, thus protecting the tank, deposit, and particularly when the melting temperatures of the materials used for the manufacture of any tank, deposit manufactured like that of tanks manufactured from metals which is between 650°C and 1054°C. The alloys stored on the inside of said tanks are able to keep the interior temperature constant and do not allow the boiling of the liquids therein due to the high level of conductivity, transmission, diffusion, dissipation of the heat waves by means of and through the alloyed body, therefore, being able to remove the risk of explosion, and particularly the risk of a BLEVE-type explosion. This again demonstrates that the alloys are able to remove explosion risk levels of the tank, deposit, but furthermore, as there is no initial explosion, also removing the possibility of facilitating or extending by means of explosions of a tank, deposit without protection, thus removing the risk of more chain reaction explosions of other tanks, deposit that are adjacent, particularly to other parts of the installations or storage sites, particularly those found in refineries, logistics sites, sites for the transformation, consumption of said fuels, or in sites where large amounts of fuel are used, such as in airports.

As the alloys have in any of their formats very high properties of creating thermal stability, heat stability, due to the dissipation, transmission of the heat waves inside any tank, deposit, which also achieves that the outer part of the tank, deposit, cylinder also has stable temperatures, therefore, achieving that the fuels, deposited products do not evaporate so easily, with the subsequent benefit of environmental protection as emissions of the most volatile components of said fuels and/or chemical products into the atmosphere are reduced. At the same time, this temperature stability both inside and/or outside the tank considerably reducing the possibility of internal and/or external condensation of the tank, and furthermore thus reducing the operating problem of the freezing of the tanks refilled with liquefied gases, in which, said cooling, freezing causes the reduction in the fluidity, transformation of said fuels into gases, with the subsequent energy loss and power loss, and this problem does not exist with the use of alloys.

It must also be pointed out that, and even being certified and tested, even though said tanks, deposits protected with these alloys in their corresponding format were to sustain in said tanks, deposits, penetration by a bullet, shrapnel and/or by sharp objects, materials which would cause an explosion in any other tank without protection, and with said tanks, deposits being protected with the alloys, this risk of explosion would not exist, therefore, even from the possible risk of penetration of an incendiary bullet, a penetrating bullet, shrapnel, small and/or medium calibre ammunition, the possibility of explosion by said damaging means is again nil, thus assuring a single and innovative value for the use of alloys in said storage sites, such as in high-risk places, such as in planes, rockets, transport, naval sector, land sector of any type of hydrocarbons, even more in the case of products, fuels that are highly explosive, such as RP-1 (rocket propellants), JP-1 to JP-8, LPG, CNG, Pressurised liquefied gases, highly explosive chemical products, etc. As there is no risk of explosion, it is also viable to perform the closing up, repair of said penetrations, damages of any origin, to perform maintenance plans in those tanks even by means of welding, an open flame and/or with the use of normal repair equipment without needing to degas or empty said tanks of their fuels, gases, chemical products stored therein, which, again, is a great technological safety innovation, but also an operative one due to the possibility of repairing said installations without the economic cost, the occupational risk and time for degassing and preparing a deposit and/or tank for the process of repair, maintenance with an open flame, such as that of a welder.

3. With the alloyed body being characterised by forming cloths of perforated material, which is provided by at least one arc having a plurality of polygonal openings / by being able to have a cylindrical or spheroidal configuration from a perforated sheet of material referred to as sheet of material to which they have been provided, and at least one of said polygonal openings being irregular with respect to at least one contiguous polygonal opening and having a surface area per unit of volume of about 3,500 times the contact surface of any flammable fluids contacted in a containing vessel, the alloyed body having a heat conduction capacity of at least approximately 0.020 cal/cm-s, with a compression field no greater than 7%.
4. The inner peripheral length of at least one of said openings, differs from the peripheral length of at least one contiguous opening.
5. The material has a density ranging from 2.8 g/cm3 to approximately 19.5 g/cm3.
6. It can be applied to all types of tanks, cisterns, deposits, transport of all types of fuels, solvents and aromatic hydrocarbons, including hexane, toluene, ethers, ketones, solvents, using and applying this technology by means of this invention achieves drastically reducing evaporation of the most volatile components of hydrocarbons, which drastically benefits the economic and financial loss due to said evaporation, maintaining the quality of the components by having in its process of functionality the possibility of reducing the growth of algae and of filtering the suspended particles from same.
7. A direct economic saving is achieved with the alloyed body due to the saving in vaporisation-emission of gases or vaporisation of the hydrocarbons, whatever its type or form may be, but also due to the filtration, reduction, elimination, of said components or pollutants which, as their incorporation into the atmosphere due to vaporisation is prevented, also achieve combating against environmental pollution.
8. They eliminate the risks of flammability caused by static charges or small fires that are caused in an unforeseen, accidental, intentional manner or by the weather, as in the case of electrical storms or sabotage.
9. They have a spheroidal shape and comprise a perforated sheet of material referred to as sheet of material, which has been provided with at least one arc having a plurality of polygonal openings, at least one of said polygonal openings being irregular with respect to at least one continuous polygonal opening, and having physical characteristics comprising a surface area per unit of volume of application of approximately at least 3,500 times the contact surface of any flammable fluids contacted in a containing vessel and a heat conductivity of at least approximately 0.020 cal/cm-s.
10. With the alloyed body, the occupied volume of said deposit does not exceed 1.4% of the capacity. With a weight of less than 27-33 grams per litre of the tank/vessel protected by the alloyed body. It does not change the properties of the liquid or gaseous hydrocarbons of the deposit.
11.The alloyed body may be of many shapes and manners, including and not being limited to the use in storage tanks, cisterns or deposits, tanks of motor vehicles, in the transport of hydrocarbons, liquid hydrocarbons, gaseous hydrocarbons, acetones, gasolines and all derivatives of hydrocarbons, gases, crude oils, solvents, alcohols, biodiesel, ketones, methane, butane, propane, pentane, hexane, octane, gasolines, fuel, kerosenes, ethers, all types of solvents and toluene, etc. The occupied volume in said deposit does not exceed a volume of 0.9% in net format / and 1.5% in ball /sphere format due to the higher alloy use in their manufacture, and the final weight in this sphere format is somewhat greater than that of the net/mesh due to the higher raw material use.
12.The alloyed body of this technology applied in all types of tanks, cisterns, deposits, transport of all types of fuels, solvents and aromatic hydrocarbons, including hexane, toluene, ethers, ketones, solvents, using and applying this technology by means of this invention achieves drastically reducing evaporation of the most volatile components of hydrocarbons, which drastically benefits the economic and financial loss caused by said evaporation, maintaining the quality of the components by having in its process of functionality the possibility of reducing the growth of algae and of filtering the suspended particles from same.
13.The alloyed body entails the increase of the service life of the tanks, deposits, cisterns, objects insulated with it, since oxidation completely disappears in metallic tanks, deposits due to the fact that the installed alloyed body acts as a galvanic anode, preventing the accumulation of electrons necessary for producing the oxidation-reduction phenomenon, and being anti-algae. Thus obtaining an anti-rust and anti-algae benefit. Increasing the service life of the tanks, deposits, cisterns, Objects with its use, since oxidation completely disappears in metallic tanks, deposits due to the fact that the installed alloyed body acts as a galvanic anode, preventing the accumulation of electrons necessary for producing the oxidation-reduction phenomenon. Both in deposits used for their own propulsion use or/and in tanks for the transport of liquids, hydrocarbons or gases, such as, for example, tanker ships, railroad cars for the transport of hydrocarbons, tanker trucks, tanker aircrafts and for aerial refuelling for civil or military use.

14. It prevents the careening movement of the liquids (sloshing-water hammers) in the deposits or in the land, maritime, aerial, spatial transport, of fuels, liquids of any type or form. Increasing the safety and the service of the tanks, deposit used for their own propulsion use or/and in tanks for the transport of liquids, hydrocarbons or gases, such as, for example, tanker ships, railroad cars for the transport of hydrocarbons, tanker trucks, tanker aircrafts and for aerial refuelling for civil or military use.

15. There are obtained benefits from saving in vaporisation, movement and possible ignition, flashing, explosion in the case of hydrocarbons or gases, recommending in the installation thereof that the deposit is 100% filled with the alloyed body (mesh / net / sphere) in order to achieve the benefits from saving in vaporisation, movement and possible ignition, flashing, explosion in the case of hydrocarbons or gases. The alloyed body could also be used in fuel tanks of automobiles, planes, and in cylinders, bottles, canisters for gases of any type and particularly bottles, cylinders of butane, propane for the transport of gas for vehicles or used in dwellings, automatic teller machines, Entertainment and in sporting recreational means such as camping gas, kitchens in yachts, mobile homes, fishing boats, lighters, aerosols, etc.

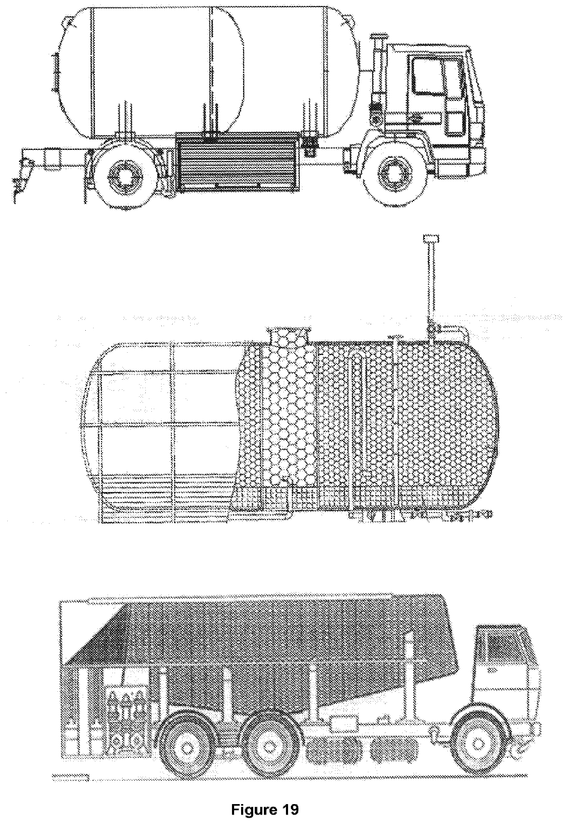

16.The alloyed body can be installed in a tanker truck, in the deposit of the cistern for transport, infeed and discharge of liquids or fluids, hydrocarbons, and also the use of the alloyed body installed in the fuel tank of the transport truck/ tractor / vehicle itself, thus preventing vaporisation of the gases, the movement of liquids inside the tanker truck and the certainty of not being able to have any accident by means of external or internal ignition due to static charges during transport or during the discharge or filling of said vehicle. The alloyed body also protects said cistern and truck against oxidation and filtering any suspended particle by means of the discharge or filling, which suspended particle may downgrade or damage the quality of the hydrocarbons or gases that are transported. (Figure 19).

17. In the rear part, in the discharge / filling area of said tanker truck, there is installed the alloyed body of the invention in valve format for increasing the discharge / filling rate of the hydrocarbons that are transported, said operation increasing the discharge rate between 20% and 45% compared to not having said invention installed, including the additional certainty of not being able to create in any manner static charges, by means of the discharge or filling through the hose or pumping system, being able to increase the velocity of the fluid without the risk of forming static charges, valves, discharge points and areas at gas stations, refineries, petrochemical terminals, etc. (Figure 19).

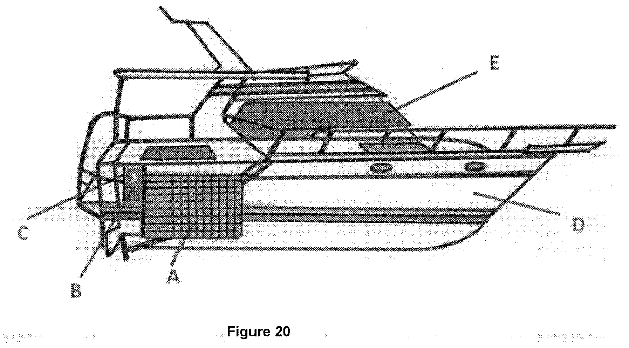

18. The alloyed body can be used in any means of transport or fuel deposit. The installation of the invention in a ship, yacht, ship, tanker ship achieves the drastic reduction of vaporisation, and particularly on paths of a long duration and going through weather consisting of high heat and humidity, which increase in external heat of the ship causes the hydrocarbons, gases, liquids that are transported to experience an increase in temperature, which increases vaporisation and the loss of these transported goods, which entails an important economic and environmental loss. (Figure 20).

19. With the alloyed body installed both in small crafts and in large crafts, the invention achieves minimising the careening movement of the liquids inside the fuel tanks, which achieves that the water hammer effect disappears, providing the ship with greater stability, manoeuvrability, and that the tanks have a superior operating life as they do not suffer the systematic stress from the water hammer, produced by the movement of the liquids inside the tanks of said crafts. Tanks manufactured with steels could benefit from being protected against oxidation and against the growth of algae, in the case of newly used tanks or in the case of tanks already having indications of oxidation, algae growth could be benefited by not worsening after installing the alloyed body. With the valve of the invention, it is achieved that said ship can refuel or discharge, or fill its fuel tanks fuel both for its own consumption or for the transport of fuels, with the benefit of an increase in the infeed / discharge / filling rate of 20 - 45% compared to not having said alloyed body, Said ship using the alloyed body with be protected in the case of ignition by any spark, static charge, electrical storm, or even by ignition inside the ship in an accidental, unforeseen or intentional manner. Including the additional certainty of not being able to create in any manner static charges, by means of the discharge or filling through the hose or pumping system, being able to increase the velocity of the fluid without the risk of forming static charges, valves, discharge points and areas at gas stations, refineries, petrochemical terminals, etc. (Figure 20).

20.The installation of the alloyed body in a ship, yacht, ship, tanker ship achieves the drastic reduction of vaporisation, and particularly on paths of a long duration and going through weather consisting of high heat and humidity, which increase in the external heat of the ship causing the hydrocarbons, gases, liquids that are transported to experience an increase in temperature, which increases vaporisation and the loss of these transported goods, which entails an important economic and environmental loss.

21.The alloyed body has fire retardant, fire prevention and anti-explosive properties. By installing the invention in panel, barrier, wall format, any object can be protected from a fire, explosions, deflagrations, due to its properties of dissipation, reduction, removal, absorption, filtration of thermal waves, and heat protection, reaching temperatures greater than 1600°C degrees Centigrade for protection in panel format. (Figure 23, Figure 24).

✓ panel with anti-rust and anti-mould/anti-algae properties, the functionality of which panels, in humid places, will not be affected by said existences in any case, including climatic humidity, Interior humidity, condensation, etc. Furthermore, the connections or adhesives used to attach said panels to a fixed wall may have anti-algae, anti-humidity, anti-mould properties, in addition to the principles of the layers of the anti-electromagnetic, anti-thermal, anti-acoustic, anti-wave properties, etc.

✓ The panel can be incorporated in the wall to which it is attached with metallic supports in order to create rigidity and to enable assuring walls, panels, barriers...

✓ It is a panel with exceptional and unique properties also in the form of internal hardness and very rigid, hence the use of metallic, aluminium bars.

✓ The panel is formed by layers of materials such as chipboard panels, paper, recyclable materials, in order to provide finishes in accordance with the decoration of the site, even with the possibility of applying gypsum, plaster, cement, parging, wood panel cover screws for its complete concealment for greater discretion or safety from the outside.

22. When installed in any gas cylinder, bottle, canister, including toroidal gas bottles, normally used in vehicular gas vehicles, in mesh / net / sphere format, Installed therein, by achieving a stable temperature inside the cylinder, reduction of the thickness of the cylinder in its manufacture due to the impossibility of ignition in an accidental, unforeseen or intentional manner, even due to the firing of firearms, incendiary bullets, or small and medium calibre arms. Installing the alloyed body achieves that vaporisation of the hydrocarbon gases, liquids that are transported is drastically eliminated if it does not have a safety valve installed, and in the event of having a safety valve installed, the invention would act like a second passive safety system, protecting the cylinder even from fire or fires of any type. The installation of the alloyed body inside the cylinder only occupies between 1 and 1.5% of the volume, which allows maximum use of the gas as it cannot cool down / freeze, since the alloyed body is introduced therein, stabilising the internal temperature, thus preventing people who are using said cylinders from laying them down or placing said cylinders / or bottles upside down when said bottles enter the cooling or freezing process, with these acts of misuse of the vessel or cylinder of gas in a correct and safe manner (laying down / upside down, movement of or blows to the cylinder, etc.), endangering the life and property of people when it is not used correctly.

23. It prevents, reduces, eliminates vaporisation of said hydrocarbons or gases, their oxidation, the growth of algae, and the filtration of suspended particles as it is installed in large storage tanks, completely filling the tank with the mesh / net / sphere format. In the lower part of the tank there will be located a platform for supporting the mesh / net / spheres, according to the use of the tank, this grated platform will have a height greater than or less than 50cm for its possible cleaning or removal of sludge, mud, pitch, particles which, due to gravity, have been deposited at the base of the tank over time, filtered out of the alloyed body (mesh, net, spheres), and facilitating the maintenance plan and safety controls for same.

24.Since it is installed in tanks / deposits with a floating ceiling, the amount of mesh / net / spheres needed would be reduced, only incorporating between 50cm-100cm of height along the entire diameter of the tank. This system reduces vaporisation to a lesser extent than when the tank is completely full, and in addition it is unable to benefit from the protection of the benefits of anti-oxidation, the formation of algae and filtration of suspended articles, even though it would suppress static charges and the causal or intentional formation of a fire or ignition point.

25. They can be used by introducing them in fuel cans referred to on the market a "Jerry cans" in net / ball / mesh format, by being able to. Fuel cans can be manufactured having different measurements, dimensions and materials, the most common materials being stainless steel, metals, plastics and aluminium. The introduction of the alloyed body prevents the movement of the liquids, prevents vaporisation, filters suspended particles out of the fuel, eliminates or reduces the growth of algae / oxidation. It contains the safety and protection properties of acting as a simple means of transport of all types of hydrocarbons without the unforeseen, accidental possibility of enabling explosion by means of any type of flame, static charge or lightning bolt. In the event of situations in which said protected fuel can containing the alloyed body sustains a shot or the external penetration of conventional ammunition, even with an incendiary bullet, the alloyed body will dissipate, eliminate and completely remove the ignition and the explosion of said vessel. The alloyed body can be manufactured with special alloys that are described in the invention, where it can even be closed, sealed, repaired, welded by means of using a blowtorch with the hydrocarbon inside without entailing any type of danger. This is because the content of the alloyed body completely protects the vessel and prevents the hot spot by means of dissipating the heat from the flame around the blowtorch.

26. In cylinder, bottle, canister, container format, for all types of liquefied gases of the hydrocarbons and similar derivatives thereof with a system of eliminating, reducing, dissipating, removing waves of all types, including thermal, expansive, explosive waves, intended for preventing BLEVE (Boiling Liquid Expanding Vapour Explosion), where boiling liquid expands, forming vapour and exploding), or the explosion of said gas in the event of exposure to high temperatures.

27. In the process of manufacturing a cylinder, bottle, canister, container for liquefied gases of the hydrocarbons and similar derivatives thereof with diffusion, reduction, elimination.

28. Characterised by the process of manufacturing a cylinder, bottle, canisters, containers for liquefied gases of the hydrocarbons and derivatives thereof or the like with the diffusion, reduction, elimination, removal of waves of any type, including thermal, expansive and explosive waves, characterised in that the introduction of the diffusing element (3) inside the cylinder (1), is performed in the form of a net/mesh/spheres, where it can be introduced in each of the half-bodies prior to welding, or through the adapter once the bottle is welded by means of compressed air filling system, for example.(Venturi)

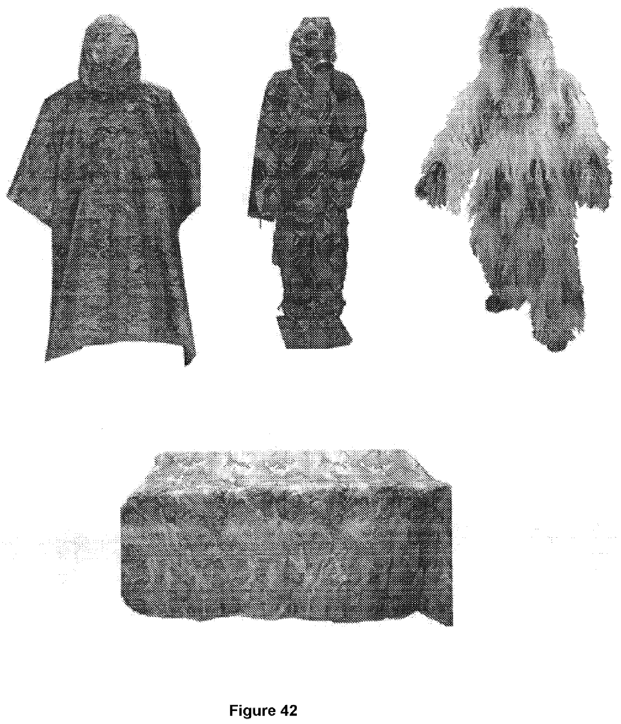

29.The invention in "blanket-cloth" format contains properties against electromagnetic pulses, magnetic fields, electronic frequencies of any type, which can protect electrical systems, telecommunications and operational controls, while at the same time reduce the propagation of any type of fire inside a place to be protected, in addition to drastically reducing internal acoustic sounds of those noises emitted internally or which are heard externally, including but not limited to engine or external noises of the movement itself in a ship against waves, as an example. This blanket could also be placed in the lower part of planes, trains, crafts, public and/or private means of transport to achieve exceptional protection of safety measures, and at the same time acoustic, thermal, electromagnetic insulation. In addition to being able to protect occupants due to its bullet-proof protection, where it can be installed in the doors, walls, fuselage, structures, infrastructure, of the mentioned means of transport. (Figure 42).

30.The invention in chimney format:

- ✓ Performs the filtration, removal, elimination, cleaning, recycling of air, vapours, gases, atmospheres, which are polluting and/or non-polluting, and it is also possible to add to this filtration system another system like the one that is able to increase the rate of movement of said flows in said filtration circuits with the alloys of the invention performing the operations of filtration, cleaning, entrainment, etc. (Figure 18)
- ✓ It achieves the cooling, removal of static charges in order to thus, if required, enable carrying out the invention at a higher speed, and particularly to thus increase the process for the movement of flows, fluids of the liquids of the invention in a "closed circuit" but also making use of the invention with another "open circuit" modality, in which with said systems combined with one another, the air filtration system achieves the recycling, retention, entrainment, cleaning of products, particles, objects which are suspended and/or in the liquids of the cleaning system of a malignant and/or benign origin, being retained, entrained, immobilised, retained in said filters, even atmospheric air can be filtered and deposited in other parts of the invention, such as cleaning and/or recycling deposits, while certain liquids and/or clean water continue to be injected to continue with said recycling, washing, entrainment, and while the residual water, liquids with the retained particles and/or polluting products can begin their process.
- ✓ It decontaminates, partially and/or completely recycles in other parts of the process within and/or outside the invention in general by means of chemical, physical, electrical, magnetic processes, by waves, Thus they can be neutralized, recycled, transported individually and/or with chemical products and/or by means of electrical, physical techniques to remove their polluting value and/or even to be removed, recycled, stored for later use, sale, recycling in the same industry or in another if desired, but not allowing said polluting fumes, vapours, exhaust gases, to reach the atmosphere and/or rivers, dams, water tanks, thus blocking the possibility of said suspended particles, particles obtained by entrainment, filtration of origin of the gases, vapours, fumes reaching living beings and/or the environment in their entirety and/or partially due to the extremely high level of filtration, entrainment, efficacy, productivity, cleaning, filtering, entrainment of the invention.

✓ It performs 100% filtering of the gases, such as, for example, those referred to as CO2, CO, SO2, SO3, and other emissions of a natural and/or artificial origin, in both the "closed circuit" version and the "open circuit" version of the invention, reaching 100% full performance and recycling.

✓ It prevents the harmful effects of atmospheric pollution. CO2, CO, SO2, SO3 emissions are generally accompanied by various emissions of soot, smoke, heavy metals and other pollutants that affect most living organisms. In unhealthy living organisms, it is harmful, even being able to kill, due to external contamination (skin), internal contamination (digestive system), blood contamination (poisoning), asphyxiation (pulmonary system), after a certain threshold and a certain duration of the exposure. Its chemical properties make it capable of quickly going through many types of biological, physical, environmental membranes, producing rapid and/or slow harmful effects, like in the case of atmospheric pollution (acid rain) mainly in pulmonary systems (mining) and/or in the central nervous system of living beings, plants, ecosystems, in which said toxicity is low, medium and/or high amounts will gradually and exponentially affect said living beings.

✓ It reduces atmospheric environmental pollution. Means of transport using petroleum (automobiles, trucks, planes, cargo ships...) are an important source of CO2, CO, SO2, SO3 emissions,... and natural, unforeseen, intentional fires for the expansion of arable lands and/or lands for livestock (Brazil-Amazons), are the first cause of the increase in said atmospheric environmental pollution on a global level without taking into account industrial pollution. The effect of human activities on global warming of the climate on this planet is becoming well-known through a number of studies, but the impact of the acidification of the marine environment is much less known, given that only a few years ago did researchers take an interest in it.

In many cases, it thus protects completely against worldwide pollution caused by industries, means of transport and the emission of pollutants, where it can even be used or adapted to all industries, without requiring major construction works and/or expenses in infrastructures for the installation and/ implementation thereof, but rather a simple coupling of the invention.

✓ The recycling system of this invention combined with the speed booster system of this invention relates to the increase in productivity, performance, thus preventing the lack of efficacy, which increases infeed/discharge/filling costs for all types of deposits, means of transport such as tanker trucks, tanker ships, the transport of hydrocarbons by land means in areas such as refineries, infeed/discharge terminals involves economic and safety costs which are later passed on to the end consumer.

✓ It prevents the loss of a high operability of the infeed and/or discharge of liquids with a high energy value, such as petrochemical products, at the most dangerous and/or costly moment of the entire process of moving the materials, Such as liquids, sludge, liquids having a hazardous value, recycled materials, chemical products, pollutant products, such as heavy metals, harmful products, nuclear products, and the savings at this point due to the boost and increase in the discharge/filling rate is something that can be readily introduced to achieve savings in time, economic growth due to spending less time at infeed/discharge sites, parking, moored and/or stopping at infeed/discharge terminals, lower amount of taxes and/or fees at ports/airports/terminals/gas stations which are calculated in minutes and hours, where is it thus possible to recycle, transport liquids, masses, sands, soils, sludge to other locations for their recycling, and they can then also be another source of amortisation of this invention as there is no loss of any of the sectors of the production line of a plant, factory, industrial facility or facility for transforming types of energy as examples of this recycling line. This increases productivity and has an important financial value.

The savings and greater amortisation of the goods or means of transport of waste, sludge, recycled products after their recycling by the present invention as it enables increasing the time of transit and the non-loss of productivity in discharge / refilling, coming to increase this discharge system between 20% - 50% according to the types of liquids, fluids, gases, sludge, sands, soils, liquids and/ or derivatives of the hydrocarbon emission products.

✓ Said system introduced in this invention can increase recycling, filtering, entrainment, removal, elimination of fumes, vapours, gases and/or any type of particles, particularly those which are suspended in the "open circuit", because it will enable more quickly processing all the steps for evacuating the products, materials, in liquid format to be treated and then distributed, or re-used, in the same industries. Therefore, the operator has the possibility of using an even faster productivity system and a slower system according to the levels of production, use, pollution, and/or environmental regulatory issues in each country, region national agreement, regional agreement, continental agreement, global and/or international agreement, etc.

Therefore two systems can be offered, the system with a slower-normal speed referred to as the "closed circuit" system, which is based more on low-medium levels of pollution, and with the filtration, entrainment, removal, of products, substances by means of filters, and by means of the changing the filters of the invention, it can be assured that the water/liquids used in "closed circuit" models are viable and non-pollutant, and by means of cleaning its filters placed in different locations at the inlet, at the outlet of the cooling tanks, storage tanks for said liquids of the circuit which, in the event of the loss thereof due to use, vaporisation, can be refilled with auxiliary liquid/water refilling ports so that the circuit works in an autonomous, self-sufficient manner, and to enable recycling, cleaning, obtaining said particles, substances within the cleaning of the atmospheres, gases, vapours fumes that are expelled and/or also achieve greater cooling of the system of the invention and even of the fume outlets, exhaust gas outlets, chimneys by not allowing, facilitating the growth of bacteria, plants, grasses, pollen, seeds, organic plants inside and/or on the walls of chimneys which, over time and/or in their maintenance plans, need to be frequently cleaned, maintained, because otherwise the production plant, and particularly the chimney, exhaust system of the production plant, cooling system for cooling the gases, vapours, fumes in question will have an increasingly worse performance, with higher expenditures, lower operating performance and event an increase in breaks in operations, with their subsequent increase in operating cost and operability cost, amortisation, short-, mid- and long-term productivity.

31. The alloyed body in cage, case, vessel, box, open container format for the placement, installation, location of alloyed bodies in laminar or other format, which eliminates all types of vaporisation and emission. It has the property of having to secure, protect, house, locate all types of alloys in various formats without limitation in a safe and effective manner, the most common ones being those in mesh roll, capsule, sphere-shaped alloy packet format, etc. The invention allows the possibility of creating a variable, movable structure, that is adaptable to each project, which will always safeguard the physical, chemical integrity of the alloys in the invention/cage.

The alloys installed in invention/cage act like a safety protection alloy, by introducing the present alloy format for safety, protection, elimination, dissipation, filtration, reduction, acceleration according to the final application. As said alloys can be changed with different formulas, uses, mixtures and applications, the portfolio of use and applications is very ample.

The alloys in the invention allow innovating and inventing systems, products, objects, uses and applications which, as they are existing problems, have not been solved for now, and our inventions are particularly designed to solve said problems. In most cases, they enable savings thousands of lives, billions of Euros in losses, achieving higher productivity, greater safety, accident prevention, greater environmental controls and protection, which are the basis of any invention or usefulness of an invention.

32. The alloyed body in panel format for eliminating, dissipating, removing, reducing, with anti-thermal, anti-acoustic, fire retardant and anti-electromagnetic properties in an individual, partial or global manner. It enables making use of a range of construction materials, one of the many viable materials being plasterboard, gypsum board, gypsum, plaster, cement, textiles, chips of wood or of recycled products of an organic or non-organic origin.

Each type of material in which it is introduced, installed, attached, mixed, joined in any manner that is technically possible and by introducing the resulting panel formed by the alloyed body in mesh / net / sphere / sheet format, achieves that the panel, wall, barrier, achieves:

- Extremely high measures of protection and fire resistance at more than 1200°C-1600°C.
- Noise resistance, high strength anti-acoustic.
- Low weight.
- Hardness, strength of the mechanical structure of a very high technical rigidity value.
- Savings of space.
- Greater resistance.
- Fire prevention properties.
- Bullet-proof properties.
- Higher levels of acoustic properties.
- Energy saving.
- Good insulation.

The panel of the invention formed with minerals other than those previously described and with another resulting alloy, another type of panel can be manufactured, which joined together can achieve the joining/connection and formation of a room, space with "Faraday" principles but in a very architecturally aesthetic, functional manner, and it can cover floors, ceilings, walls, doors, accesses, passageways, in a continuation of joints of the invention in order to achieve that the properties of the invention in this constructive medium can create anti-electromagnetic, anti-electromagnetic pulse properties, protection against the electronic contamination of telephone poles, receivers/emitters for receiving/emitting frequencies of any type, including satellite frequencies, telecommunications, database centres, and particularly against solar and interplanetary radiations which are increasingly more frequent, causing in an unforeseen and natural manner the crashing, destruction, shutdown of electronic, computer, telecommunication systems, energy systems and of the transport thereof by any known means, including high-, medium-, low-voltage grids, electrical substations, thermal power stations, systems of creating clean energy such as electronic systems in solar power stations, turbines, compressors, etc.

33. The alloyed body in panel format as protection and a barrier for radiations electromagnetic, waves and pulses.

- ✓ In addition to the benefits of using these panels already described above, they have the property of being
- ✓ panel with anti-rust and anti-mould/anti-algae properties, the functionality of which, in humid places, will not be affected by said existences in any case, including climatic humidity, interior humidity, condensation, etc. Furthermore, the connections or adhesives used to attach said panels to a fixed wall may have anti-algae, anti-humidity, anti-mould properties, in addition to the principles of the layers of the anti-electromagnetic, anti-thermal, anti-acoustic, anti-wave properties, etc.
- ✓ The panel can be incorporated in the wall to which it is attached with metallic supports in order to create rigidity and to enable assuring walls, panels, barriers...
- ✓ It is a panel with exceptional and unique properties also in the form of internal hardness and very rigid, hence the use of metallic, aluminium bars.
- ✓ It is formed by layers of materials such as chipboard panels, paper, recyclable materials, in order to provide finishes in accordance with the decoration of the site, even with the possibility of applying gypsum, plaster, cement, parging, wood panel cover screws for its complete concealment for greater discretion or safety from the outside.

34. The alloyed body in filter format for eliminating all types of vaporisation, gases, hydrocarbons, liquids and emission of any class or type which are pollutants and non-pollutants for the subsoil.
The invention installed in panel, wall, barrier format, wherein the filling of the alloyed body is made up of a body made of metal, plastic, carbon fibres or similar material, including therein a fastening of a wire-, cage- or wire mesh-type which is filled with sufficient product of the alloyed body for blocking, eliminating, reducing, preventing the movement and the possibility of accumulation, vaporisation of gases in mines, and particularly in coal mines or mines used for extraction, exploitation, prospection, exploration, investigation and with the possibility of the existence or / and accumulations of any type of harmful, explosive gases, and/or hazardous gaseous hydrocarbons.
The invention in panel, mesh filled barrier format in "sandwich" format of the alloyed body is at least 50cm-100cm in width, but allows access to / contact with the atmosphere of the tunnel, underground path, air or gases to all or part of the barrier filled with the alloyed body, which can be coupled in a fixed manner to the dimensions of a tunnel and used as a barrier, wall, either fixed or movable, for preventing, reducing, eliminating the movement and accumulation of gases of any type inside the tunnels or underground paths in the areas protected with the invention, including possible harmful and/or explosive vaporisation, which could be completely closed in said tunnels or underground paths with the present panels, barriers, either fixed or movable, filled with the alloyed body, preventing the movement, communication or passage of these gases, and thus preventing a possible deflagration, fire or explosion in an unforeseen, accidental or intentional manner.

35. The alloyed body introduced in format and applications in construction materials / the manufacture of all types of doors, said doors and all types of movable barrier being used to cover an opening, can be used and applied for the industries of safety / protection, fire-fighting, anti-terrorist, anti-attack, anti-theft, anti-solar radiations, planetary radiations, outside radiations, anti-electromagnetic pulses of an accidental-war-terrorist-criminal emission, fire-fighting, anti-acoustic, for blocking the external atmosphere, solar radiations, electromagnetic pulses, and with the application of other chemical or textile materials it can be improved with bulletproof, anti-penetration protection but with the enormous advantage of having fire prevention properties, which are normally used in thermal lances, welders, radials which the invention protects inside these doors and makes them resistant to temperatures greater than 1200°c-1600°c degrees for at least 120-300 minutes according to the dimensions, width and amount of the alloys, materials, compositions of the invention in laminar, mesh, net formats or spheres applied and introduced in said door, window, blind, barrier, accesses and all types of movable barrier used for covering an opening with anti-thermal, fire retardant, anti-acoustic, anti-electromagnetic and bulletproof characteristics, it has a value of dissipation, reduction, elimination of heat, fire, thermal, acoustic waves, and a high safety/protection value.

36. The alloyed body introduced in this technological/protective/safety system of all types of ducts/pipes, and particularly ducts for hydrocarbons, gases, chemical products, referred to as gas pipelines, oil pipelines, has the technical advantage of being the only one in the world with anti-theft properties as the delinquent/delinquents cannot penetrate with any known tool the outer part referred to as "secondary-safety" due to the depth dimensions of said "secondary-safety" pipe to the "original" inner pipe, which carries the hydrocarbons, without drill bits, boreholes of this depth manufactured with resistant plastics so that delinquents cannot cause explosions or fires, and thus reduce the risk of them perpetrating this delinquent act.

In the event that the external temperatures of the pipe were low or had extreme ups and downs (daytime-nighttime temp.), such as in desert areas, the net/mesh/sphere in the "intermediate" area will keep the temperature stable so that particularly heavy crude products of the hydrocarbons do not cool down and maintain a constant flow rate after having been heated, or not, at pumping stations, refineries, infeed/discharge terminals, in order to maintain a temperature of approximately +/-60°c degrees for the stable flow of the crude product in oil pipelines.

37. The alloyed body in sphere/mesh/net format in a blanket introduced, attached, adhered, joined to a door can resist fire or heat greater than 1600°c degrees centigrade for more than 240 minutes.

38. Safety doors using the alloyed body filling in a door of this type with a space for being completely introduced, In addition to achieving this dissipation, elimination, reduction of extreme temperatures due to fire or heat, in a direct or indirect manner, achieves withstanding temperatures greater than 1600°c. Outer protection of the safety door in contact with the alloyed body on one or both sides facilitates the physical operation of the alloyed body, achieving greater resistance in all types of fires.

39. The alloyed body, achieves protecting the safety doors and drastically reducing the weight thereof as it weights from only 27 to 33 grams per litre of volume to be protected, which entails being able to save at least 50% in relation to the weight of conventional fire prevention elements.

40. The alloyed body in said doors in filler mode in net/mesh/sphere format, or by introducing a blanket with anti-thermal, fire prevention, bulletproof, Anti-electromagnetic properties, achieves that the width dimensions of a door can be reduced by at least 30%-50% in comparison with existing doors, but even with properties that are unique and have a high safety and protection value, particularly useful in places such as in grade schools and high schools, hospitals due to cases of fire and situations arising from the use of firearms, which have recently become more common, and particularly in the USA, but also in Europe, where terrorist activities today are on the rise.

41. Once the alloyed body is introduced in the double hull of oil tankers or tanker ships, it prevents oxidation produced by the water condensation vapours, or filtrations thereof into the double hull. It also prevents the creation/ formation of static charges produced by the friction of the fluids from the sea/water on the hull by absorbing any spark produced by colliding with another ship or object.

42. The structures of oil platforms in case of emergency require having their infrastructures protected in a safe manner, therefore with the use of the alloyed body in evacuation areas, heliports, emergency rooms, safe-panic rooms, possible explosion of the platform can be delayed or prevented.

All the passageways and corridors with grating in the upper part thereof for the purpose of absorbing possible flames and preventing sparks produced by tools falling.

43. Most explosions on oil platforms are produced by the accumulation of gases that are heavier than the air in the lower areas thereof, particularly the legs/fastening structures or recesses of the platform.

44. The zeolites used in the cooling towers of refrigeration plants are normally obstructed by the formation of algae and microorganisms, reducing cooling and causing future explosions. The replacement of said zeolites with the alloyed body in net/mesh format prevents the formation of algae and microorganisms and considerably increases the cooling contact surface.

**Applications/use:**

The use, application of the alloys in mesh, sphere, pellet, cylinder format or with any other design or characteristics of its physical format will achieve:

1) The construction, manufacture of tanks, vessels, deposits, cylinders, containers for the storage of any type of explosive and non-explosive gases, products derived from hydrocarbon, biofuels, solvents, alcohols, acetones, toluenes, combinations in the transformation in situ of gas to liquid or vice versa, mixtures with compositions with the use of derived products of any origin, or not using them, including those referred to as solid, semi-solid, liquid, gaseous, transformed fuels, fuels mixed by or in any phase of the use thereof, RP-1, Kerolox like that used in the propulsion systems for spacecrafts, rockets, satellites, and even hydrogen; these can be stored, deposited in said vessels manufactured with any type of materials and combinations of materials, cloths, metals, minerals, polymers, plastics of an industrial, natural, organic, inorganic origin, nanomaterials such as graphene or the like.

2) The construction, manufacture of tanks, vessels, deposits, cylinders, containers filled with the alloys in mesh, sphere, cylinder, pellet format, or any other design can be performed with a minimum thickness of 0.7mm and maximum thickness up to 1.5mm thick, giving said vessels anti-explosive features that were unknown up until now.

3) The thickness of the walls of the vessels, deposits can be reduced, with a considerable saving in weight thereof, for example gas cylinders for storing butane gas in which the law requires a steel wall thickness of at least 3mm to enable withstanding a pressure test of at least 82 bars of pressure at which said steel bottles existing on the market normally explode, in this case the wall thickness in butane bottles has been reduced to 1.3mm, withstanding pressures up to 132 bar before the bottle explodes, whereby the thickness of said cylinder could be reduced to less than a millimetre, the weight of said cylinders again being reduced, since there is now a certainty that the phenomenon of an explosion of said cylinders, bottle completely disappears due to the anti-explosive properties of the alloys stored therein.

4) The use of the alloys in mesh, sphere, cylinder, pellet format or with any other design or composition inside these vessels, deposits, tanks, cylinders achieve greater transmission of heat/cold, achieving a temperature stability of said tanks, containers, vessels, reducing and even removing the generation of the freezing, cooling process, the generation of frost on the outside/inside, condensation in said tanks, vessels, achieving greater fluidity, combustion and efficiency of the movement of said liquids, hydrocarbons, gases, fuels, gaseous liquids in their original form in liquids such as those referred to as LPG (Liquefied Petroleum Gas), CNG (Compressed Natural Gas), CNC (Compressed Air), thus preventing the loss of power, energy efficiency, propulsion, etc. This external and internal temperature stability is achieved by the high conductivity of the alloys, causing hot or cold spots inside the tanks to disappear, since the alloys transmit cold or heat quickly through the entire structure of the vessel, causing all the liquid therein to be maintained at the same temperature, therefore the process of cooling or heating the liquids is considerably delayed, preventing the stored liquids from freezing and preventing the ducts for the transmission of said gases from freezing.

5) The use of the alloys in mesh, sphere, cylinder, pellet format or with any other design or composition inside these vessels, deposits, tanks, cylinders achieve greater stability of the liquids, hydrocarbons, fuels, gases in liquid form until their transformation, thus preventing the "water hammer" factor and thus achieving an excellent level of stability, control of the movement, rocking, transfers of liquids, fuels, particularly those having a high safety value in the aeronautic, aerospace and naval sectors, where the control and stability of said apparatuses is fundamental for their operating safety.

6) The use of the alloys in mesh, sphere, cylinder, pellet format or with any other design or composition inside these vessels, deposits, tanks, cylinders achieve the removal of the risk of ignition due to static charges, sparks, short circuits, of an external and/or internal origin, whereby removing the risk of deflagration, ignition, explosion of said deposits and/or storages of fuels.

7) The use of the alloys in mesh, sphere, cylinder, pellet format or with any other design or composition inside these vessels, deposits, tanks, cylinders achieve the removal of the risk of ignition, deflagration, explosion due to sparks, points of ignition of an external and/or internal origin, such as in welders, radials, tools falling, the operator's equipment not being anti-static, rubbing, friction, or due to a climatic origin, such as lightning bolts, electrical storms, electromagnetic pulses of an artificial/war origin and/or natural origin (solar flares) which removes the risk of deflagration, ignition, explosion of said deposits stored with these explosive fuels.

8) The use of the alloys in mesh, sphere, cylinder, pellet format or with any other design or composition inside these vessels, deposits, tanks, cylinders achieve the removal, reduction of the risk of the walls of the vessel, deposits, since as long as there is liquid inside the tank, deposit the walls of the vessel will never exceed the boiling temperature of the liquid stored therein, for example, in the case of gasolines stored in a fuel tank, subjected to an exterior temperature greater than 1200°C, they would cause the walls of the tank, above the free surface of the liquid, to heat up and melt as the melting temperature of said walls is exceeded.

The steel in the walls of the vessel, deposit, tank, located in the lower part of the free surface of the liquid, will never exceed the boiling temperature of the liquids stored therein. In this case, the alloy in contact with the entire inner surface of the tank prevents the walls located in the upper part of the free surface of the liquid from heating up, forming hot spots, since the alloy has a high heat conductivity, conducting heat into the tank, heating the liquid but never exceeding the boiling point inside it, and this is viable for the reverse situation, like cooling.

9) The tanks, deposits, vessels filled with the alloys achieve not only protecting the outer part, the physical structure containing the tank is protected at temperatures greater than 1200°C, which demonstrates that the alloys protect the structure of the tanks and/or vessels even after surpassing their maximum melting temperature, physical temperature, burst-torsion temperature, structural stress temperature which, in the case of tanks mainly manufactured with metals, steels, irons, is between 1000°C-1150°C according to the exact composition thereof, which demonstrates that the alloys have the excellent innovative property of protecting the tank and preventing the structural breaking thereof, in addition to preventing its deflagration, explosion, BLEVE or nuclearisation of the fuels, liquids or gases, hydrocarbons stored or deposited therein.

10) The alloys stored in mesh, sphere, cylinder, pellet form or any other form deposited inside said tanks are capable of protecting not only the outer structure of the tank according to the preceding claim, but at the same time they protect themselves as well in an operative, structural, and physical manner since the structural form of manufacture of the alloys confers instant retransmission of the heat generated on the outside of the tank, enabling the alloy, which normally melts at 650°C, to withstand temperatures greater than 1700°C during exposure to an exterior fire, being able to stay in this static situation for the time it takes the fuel stored inside the tank to evaporate, once all the fuel has evaporated, the fire will go out naturally, without the aid of firefighters if that were the case, and preventing the possible deterioration of the structure of the tanks due to overheating. There are no hot spots in the entire process.

**Brief Description of the Figures**

To complement what has been set forth above throughout this description and the alloyed body made for the purpose of helping to better understand the features of the invention, there is attached to the present specification, as an integral part thereof, a set of drawings in which, with an illustrative and non-limiting character, the following is depicted:

**Figure 1.-** Corresponds to a plan view of a sheet of the material which is used in the invention corresponding to sheets inhibiting the explosion of vapours of flammable fluids.

**Figure 2.-** Shows an elevational side view taken in transverse cross-section of the object reflected in Figure 1.

**Figure 3.-** Corresponds to an upper plane of a perforated sheet of the invention.

**Figure 4** - Shows a side elevational view of the object reflected in Figure 3.

**Figure 5.-** Reflects a side longitudinal section view of the object depicted in Figure 3.

**Figure 6.-** Shows an upper plane of an expanded and perforated sheet of the material used in the invention.

**Figure 7.-** Depicts an elevational side view in transverse cross-section of the object shown in Figure 6.

**Figure 8.-** Corresponds to an enlarged top view of a portion of the object depicted in Figure 7.

**Figure 9-** Again corresponds to an elevational side view in transverse cross-section of the object reflected in Figure 8.

**Figure 10.-** Corresponds to a top view plane of a wavy, expanded and perforated sheet of the material used in the invention.

**Figure 11.-** Reflects an elevational side view taken in transverse cross-section of the object depicted in Figure 10.

**Figure 12.-** Corresponds to an elevational side view taken in transverse cross-section of the object shown in Figure 10.

**Figure 13.-** Finally depicts an elevational side view of a spheroidal shape carried our according to the invention. Expanded and perforated sheet of the alloyed body.

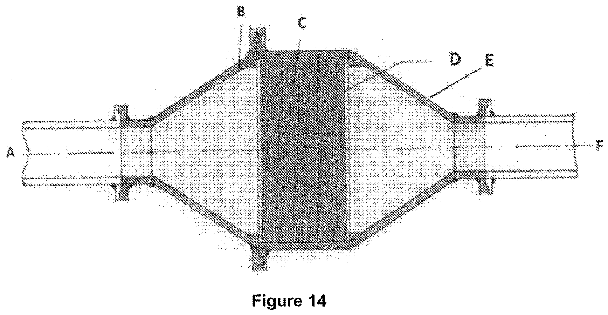

**Figure 14.-** Shows a hydrocarbon "bypass" system for the protection /safety of all types of pipes / ducts (gas pipelines, oil pipelines,...)

Pre-pipeline inlet of the valve to the gas pipeline, oil pipeline, pipe or pipework: Inlet for the hydrocarbons, liquids, fluids or gases.

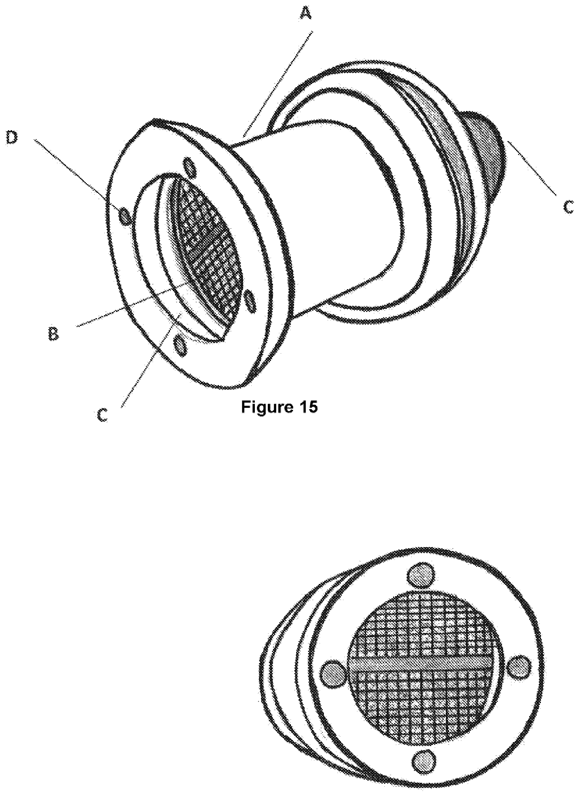

**Figure 15.** Shows a side valve in which it can be seen where the side body of the invention would be introduced, explaining the dimensions of a valve and its operating parts.

**Figure 16 A.** Shows a side detail of the casing object of fastening /filling /installed with the alloyed body. In this case, this is an individual part which will be introduced inside the discharge / infeed/ filling valve of the image of the infeed/discharge filling valve of Figure 15. This fastening system / casing or packing system of the alloyed body is perfectly introduced inside the valve so that the entire flow of the liquid hydrocarbons, pass through it according to the design of the valve, where the fluid can enter and exit on side A, and on side B and vice versa. On face A and on face B there is a bar the function of which is to keep the alloyed body fixed inside the casing, but it also has the purpose of being able to facilitate, engage and thus introduce or reduce said object inside the valve of Figure 15 in an easy manner (the same principles of the purification baskets of pool purification systems).

**Figure 16 B.** Shows a front image of the casing object of the fastening/ filling / installed with the alloyed body. This object / casing / basket can be manufactured from the same material as that used in the alloyed body, but instead of a net / mesh/ spheres, in an alloyed part format specifically done in order to make said object. Without limiting that said casing /basket /object of the fastening of the alloyed body can also be manufactured with any existing material, Including plastic.

**Figure 17.** Shows a valve/bypass system for pipes, conduits and particularly for fluids and hydrocarbons.

**Figure 18.-** Shows a fume filtration system by means of entrainment with liquids, normally water, to reduce all types of polluting or non-polluting emissions into the atmosphere and possible recycling of waste.

Schematic side view explaining the vibration circuit of the entire system and the fume circuit: Fume filtration system by means of entrainment with liquids, normally water, to reduce all types of polluting or non-polluting emissions into the atmosphere and possible recycling of waste.

**Figure 19.-** Shows a side view of a tanker truck which explains the parts and installation locations of the alloyed body.

**Figure 20.-** Shows a diagram of a ship.

**Figure 21.-** Shows the invention in mesh / net /sphere format, installed in any cylinder/bottle / canister of any type of gases / liquefied gases / hydrocarbons, filled with the alloyed body, in ball / net / mesh format.

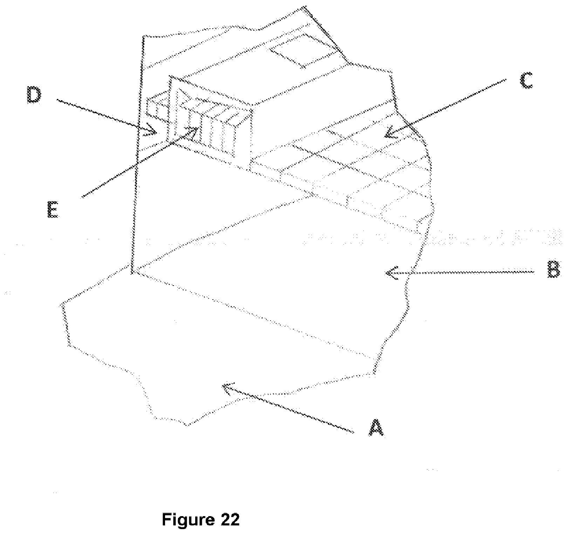

**Figure 22.-** Shows the invention installed in tanks / deposits with a floating body. Side cutaway diagram of a movable ceiling for tanks / deposits / storage with movable ceilings.

**Figure 23.**-Shows a schematic section depiction corresponding to a panel, wall for the construction carried out according to the object of the present invention.

**Figure 24.-** Shows a perspective detail of a portion corresponding to one of the layers of mesh which are embedded in the panel of the preceding figure

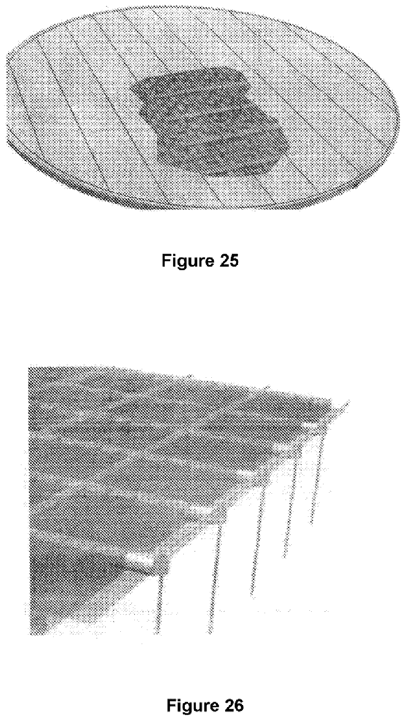

**Figure 25.-** Shows an inner surface diagram of a panel designed exclusively in a circular format, being able to make panels having any shape. It shows a detail of a circular-shaped panel with a corresponding visible proportion showing the layers of the aluminium alloy in net, mesh, laminar format inside the panel having an architecturally individual shape or irregular shapes.

**Figure 26-** Shows a detail of a rectangular-shaped panel coupled in a continuous manner for the installation thereof in any wall, floor, ceiling, to achieve a complete and tight closure against magnetic fields or radiations, electromagnetic pulses from outside in a natural, unforeseen, human, industrial or war-related manner.

**Figure 27.**-Shows a detail of a rectangular panel, wall, barrier for its placement in the floor, ceiling, or walls of a space having regular shapes and easy to install due to its standardised measurements, its use meeting the finally need for protection against all types of electromagnetism, radiations, fires, heat, solar radiations, acoustics, etc.

**Figure 28.-** Shows an image of the pipe referred to as "original"

**Figure 29 A.-** Shows the transverse image of the pipe referred to as "secondary-safety".

**Figure 29 B.-** Shows the detail of the transverse image of the pipe referred to as "secondary-safety".

**Figure 29 C.-** Shows the image of the placement of the gasket inside the inner / outer Teflon, rubber pipe or a pipe of any other non-return material used to enable refilling a penetrated / attacked section. The filling of the altered section could be done from pumping sub-stations of pumping or from the heads or terminals of the ducts (refineries, storage deposits, discharge terminal, where there is a water deposit to enable refilling the circuit.

**Figure** 30.- Shows a detail of a duct / pipe (gas pipeline /oil pipeline) which has independent supports to enable crossing inhospitable areas; lakes, rivers, hills, valleys,... bridges, viaducts...

**Figure** 31.- Shows a section view of the pipes, introducing 1 or several balls made of Teflon which cushions and self-centres the outer and inner pipe.

**Figure 32.**-Shows an anti-explosive system / barrier for sewers, particularly designed for cities or metropolises, to prevent explosions, deflagrations, accumulations and chain reaction explosions in the subsoil, in tunnels, sewers.

**Figure 33.-** Shows a movable barrier that can move both towards the sides or walls of the mine from right to left by means of a system of channels, paths or rollers, to allow the passage of large-sized machinery or a heavy transit of personnel to in the active areas of a mine. A protection barrier particularly designed for all types of underground mines.

**Figure 34.-** Shows a semi-fixed barrier which is not commonly used, but it allows access on both sides of the barrier for small machines and personnel, but without the possibility of moving the barrier completely as it is attached to the walls, ceiling and floor of the tunnel. It is recommendable for inactive and little used mines). It has the same safety and degassing measures as the movable barrier, but the unit does not move, but it does have an access door on both sides.

**Figure 35.-** Fixed high-safety barrier, for access restricted to authorised personnel only and small machinery in areas that are normally used very little or not all. In addition to benefiting from all the preceding advantages, it is completely fixed, but resistant against theft or unauthorised accesses, such as in mines with minerals having a high strategic or economic value: gold mines, diamond mines, uranium mines...

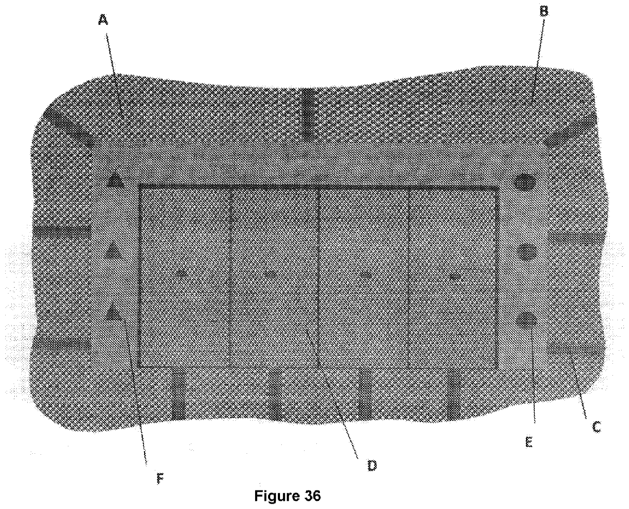

**Figure 36.-** Shows a partially or completely removable, collapsible, movable barrier for immediate use for being urgently placed in areas and thus protect an area in as little time possible until the barrier of the type described above is placed. Figure 33, Figure 34, Figure 35. It has the same degassing systems: alarm and gas level warning systems, but for immediate emergency use.

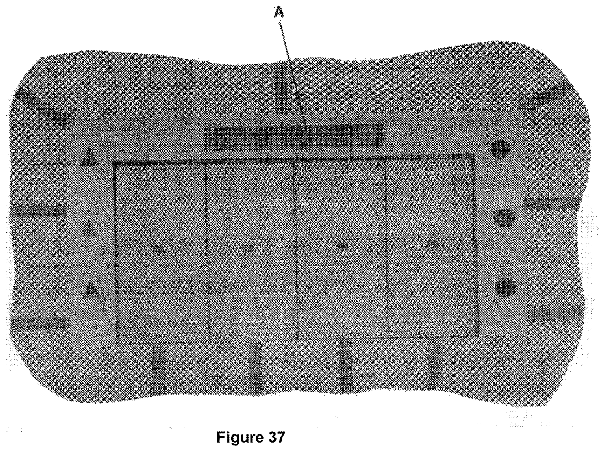

**Figure 37.-** Shows a partially or completely removable, collapsible, movable barrier for immediate use for being urgently placed in areas and thus protect an area in as little time possible, with the same features as Figure 36, but it also incorporates a technology and system for filling, refilling with the alloyed body around the frames / frameworks of said barriers.

**Figure 38.-** Shows a diagram or figure of the cloths used for manufacturing a protective blanket. For protection on one hand.

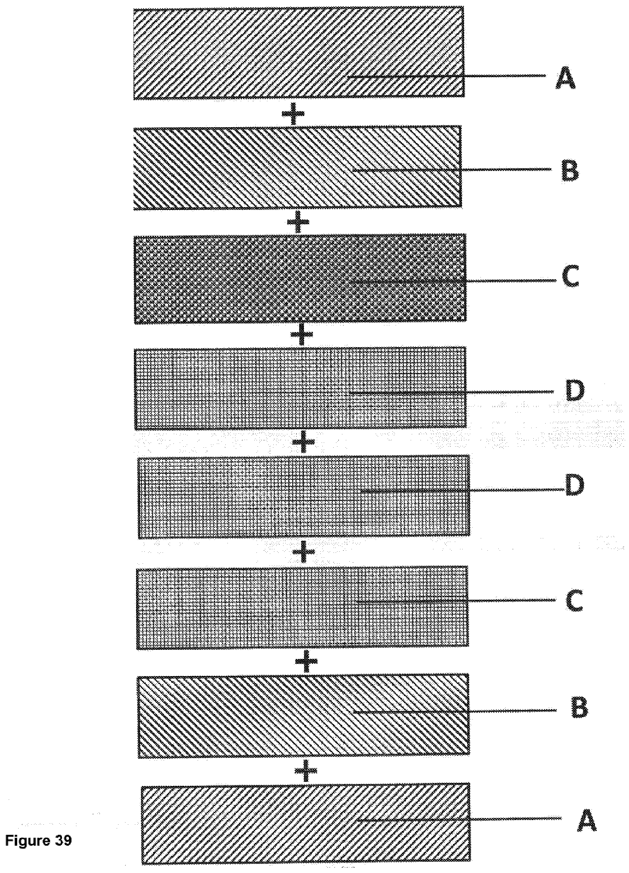

**Figure 39.-** Shows a diagram or figure of the cloths used for manufacturing a protective blanket. Having a double protection face

**Figure 40.-** Layer of the alloyed body filled with a viscous liquid for the amortisation and protection for use as a sleeping bag in extreme uses.

**Figure 41.-** Shows a layer of camouflage in 3D.

**Figure 42.-** Shows a layer / blanket of the alloyed body filled with a viscous liquid for the damping and protection for use as a sleeping bag or in extreme uses

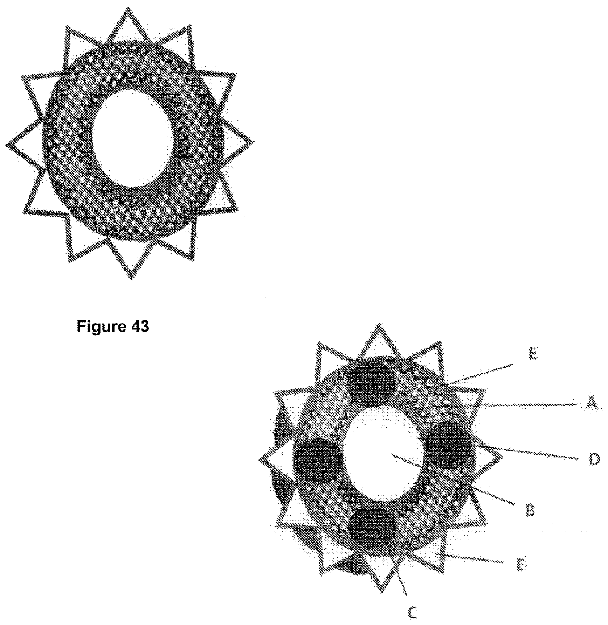

**Figure 43.-** Shows a layer / blanket, with an outer anti-penetration design of the pipe / duct with or without anti-penetration explosive heads with a protective head filled with an anti-explosive anti-penetration system. Anti-penetration design / shape manufactured in solid form for introducing a system of explosives to be used as an external penetration reduction system

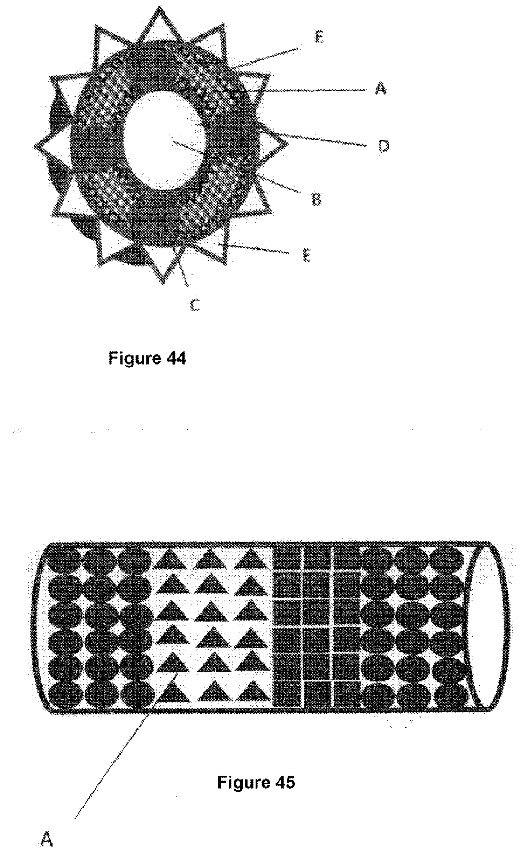

**Figure 44.-** Shows a layer / blanket, with an outer anti-penetration design of the pipe / duct with or without anti-penetration explosive heads with a protective head filled with an anti-explosive anti-penetration system. Anti-penetration design / shape manufactured in hollow form for introducing a system of explosives to be used as an external penetration reduction system.

**Figure 45.-** External layer having special shapes/designs for dissipating / protecting / enclosing the penetration of shrapnel, bullets, impacts...

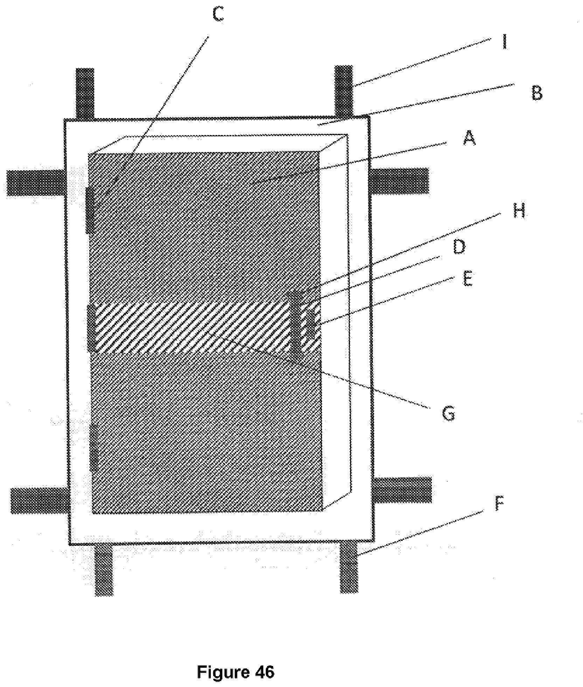

**Figure 46.-** Shows the representation of a protection / safety door: This door has introduced therein a textile, anti-thermal, fire retardant, anti-acoustic, anti-electromagnetic and bulletproof blanket.

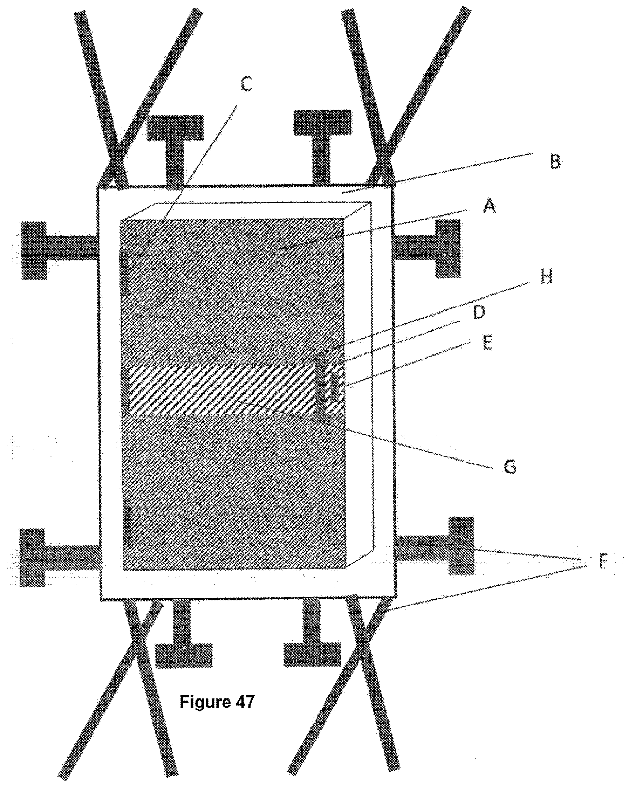

**Figure 47.-** Shows the representation of a protection / safety door.

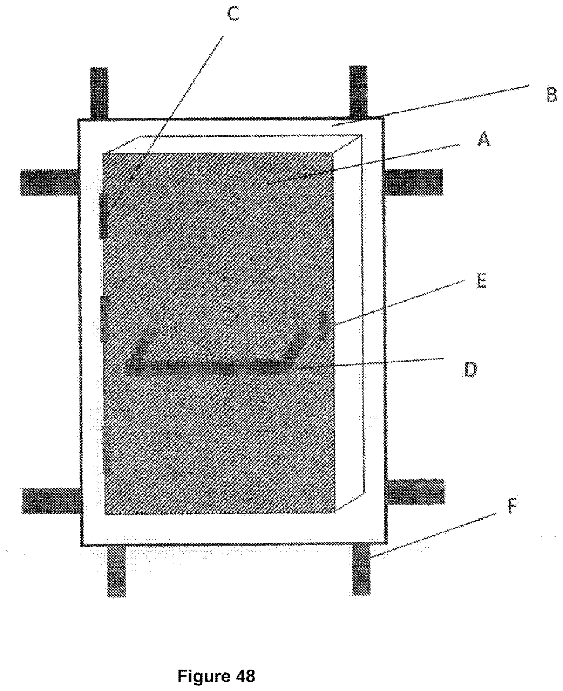

**Figure 48.**-Shows the representation of a door with a security opening bar.

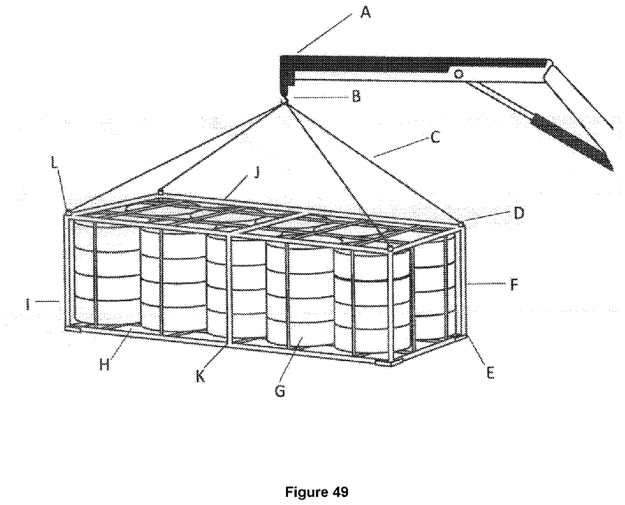

**Figure 49.**-Shows a representation of the front view of the rectangular design of a cage, case, box for the storage, safekeeping, protection of alloys in mesh, roll, sphere, packet, capsule formats.

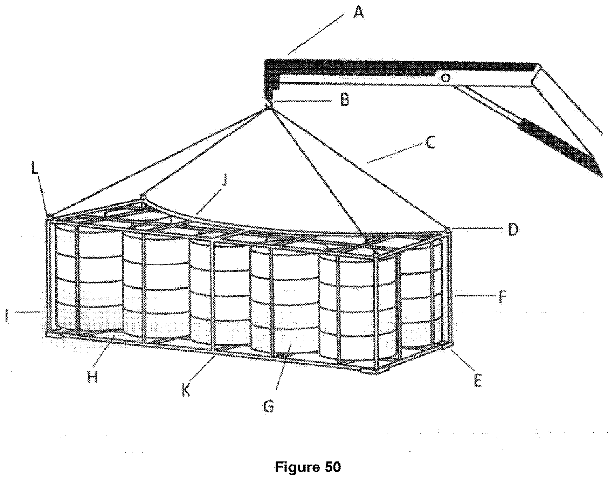

**Figure 50.-** Shows a representation of the front view of the semicircular design of a cage, case, box for the storage, safekeeping, protection of alloys in mesh, roll, sphere, packet, capsule formats.

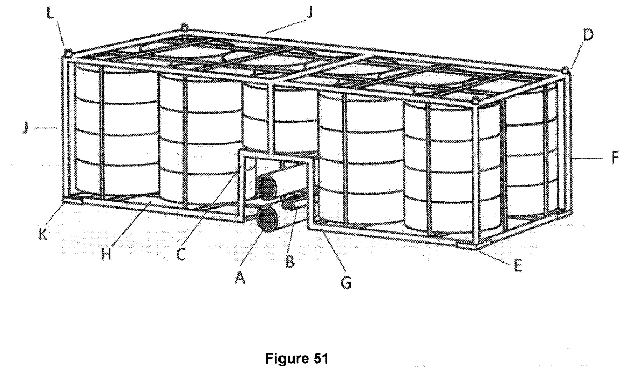

**Figure 51.-** Shows a representation of the front view of the rectangular design with sections for pipes and external cables of a cage, case, box, for the storage, safekeeping, protection of alloys in mesh, roll, sphere, packet, capsule formats.

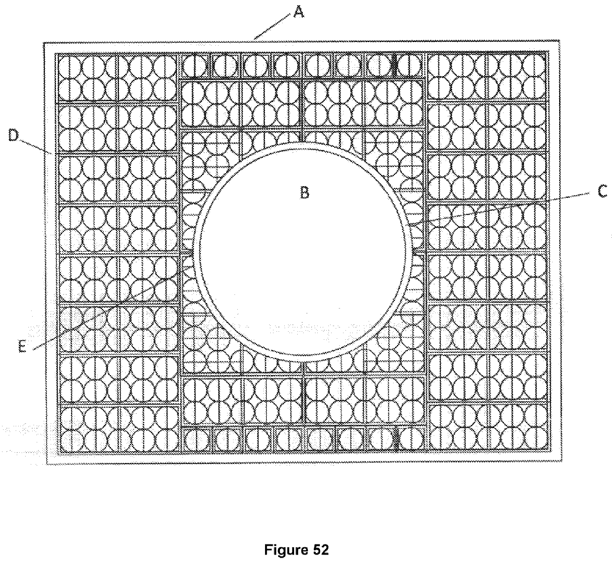

**Figure 52.-** Shows an aerial representation of the location of a number of cages, cases which are all filled with rolls of alloys, seeing that the exact location of said cages can be in a rectangular, square and semicircular format, depending on the final location area.

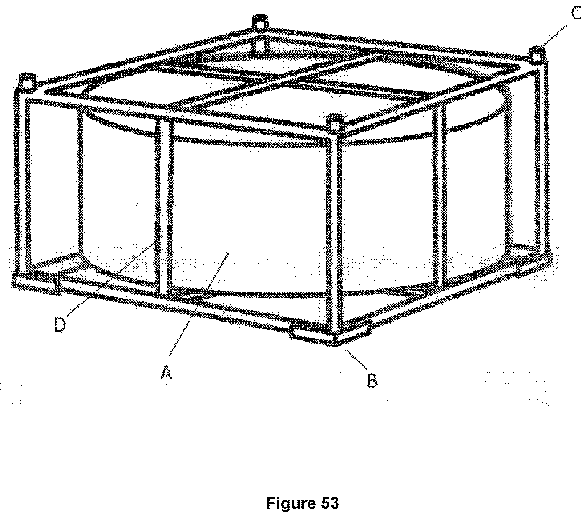

**Figure 53.**-Shows a representation of the front/lateral view of a cage with a square design which has located therein a roll of alloy in mesh form.

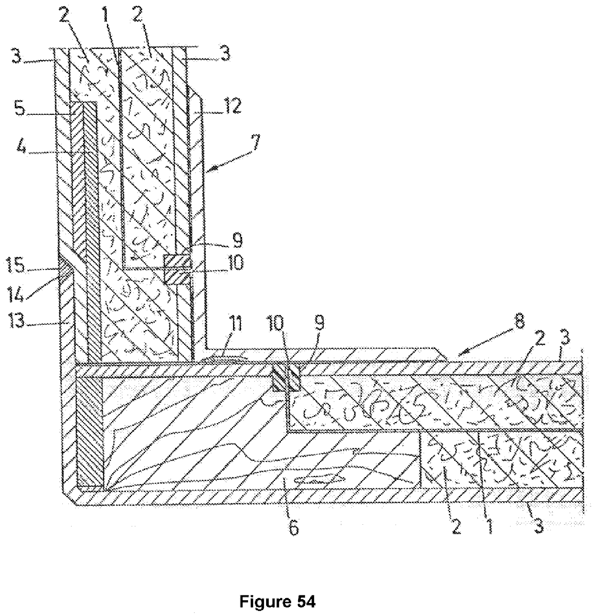

**Figure 54.-** Shows a representation of the joining between the panels in the corner sections.

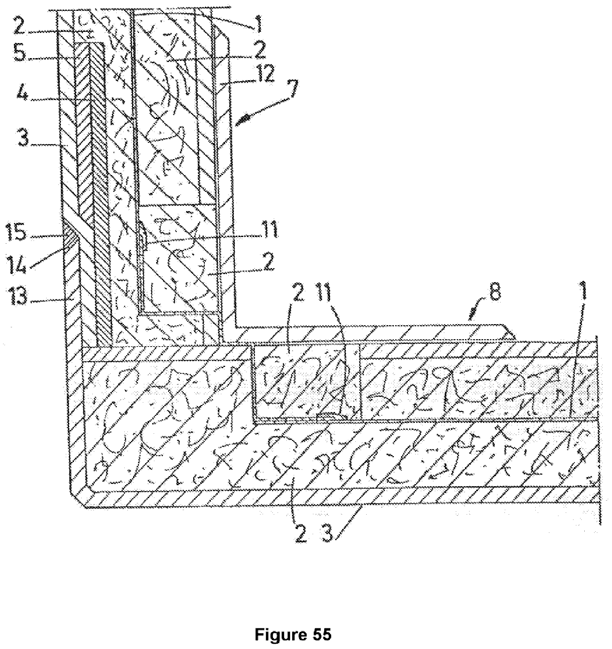

**Figure 55.**-Shows a representation of the joining between the panels in the corner sections.

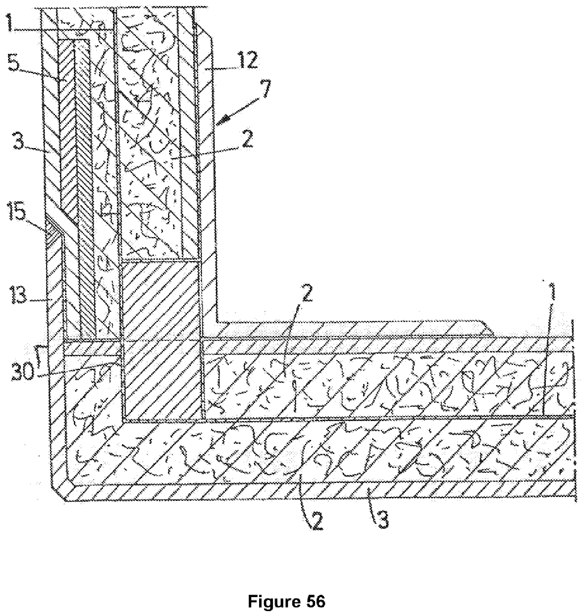

**Figure 56.**-Shows a representation of the joining between the panels in the corner sections.

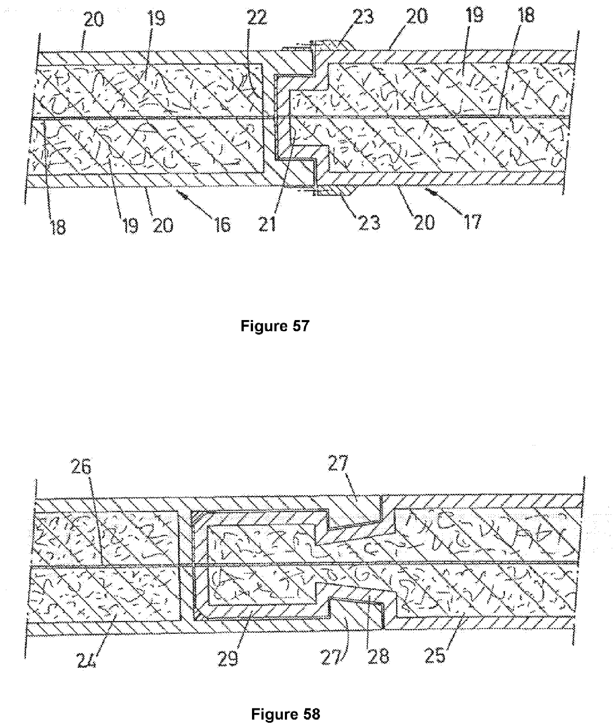

**Figure 57.**-Shows a representation of the panels joined together and creating the formation of the protection barrier.

**Figure 58.**-Shows a representation of the panels joined together and creating the formation of the protection barrier

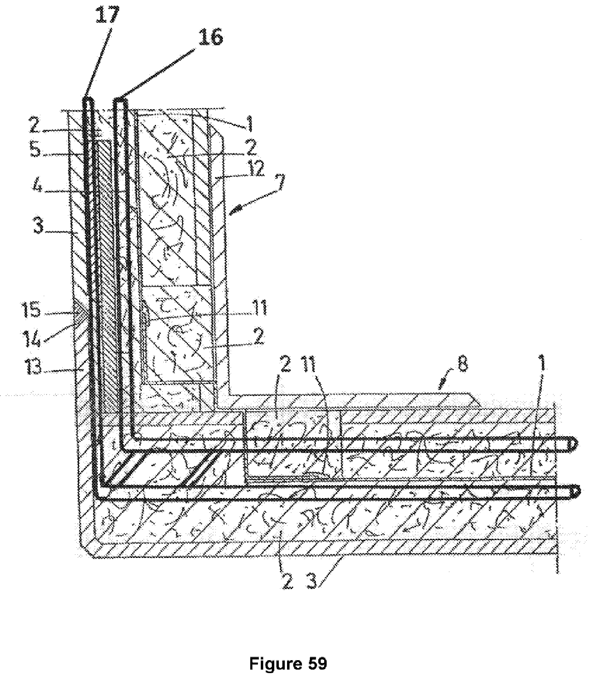

**Figure 59.-** Shows a representation of the joining between the panels in the corner sections.

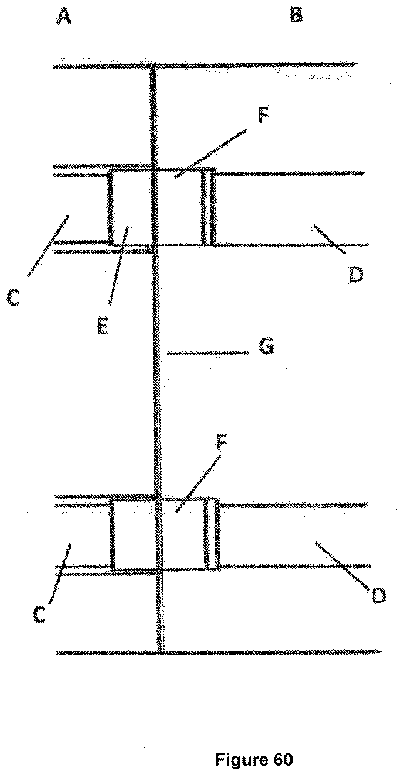

**Figure 60.-** Shows a representation of the side image in which there can be visually seen the connection system for being able to connect cables, wires, mesh reinforcement, mesh, electrical, electromagnetic conductors in a panel.

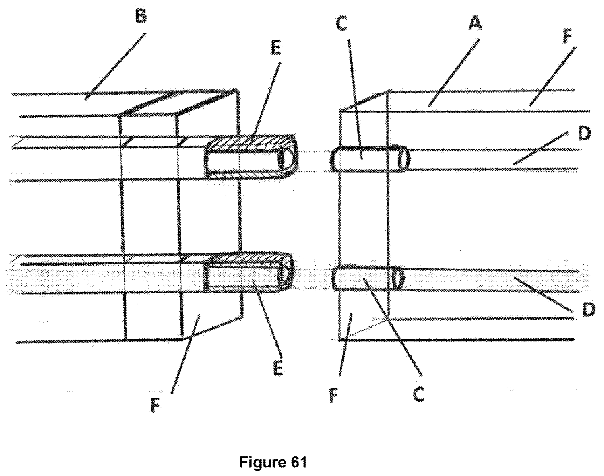

**Figure 61.-** Shows a three-dimensional side representation in which the laterally introduced male-female interconnection system can be observed.

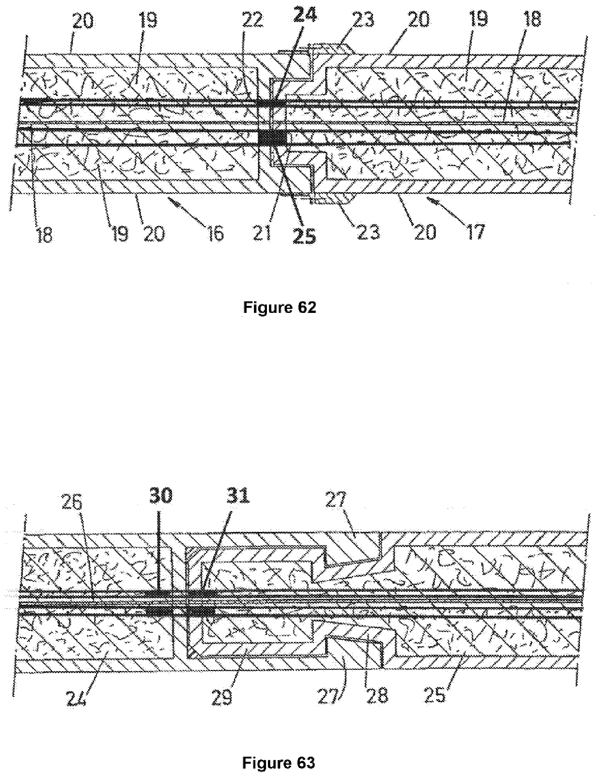

**Figure 62.-** Shows a representation of the panels joined together and creating the formation of the protection barrier.

**Figure 63.-** Shows a representation of the panels joined together and creating the formation of the protection barrier.

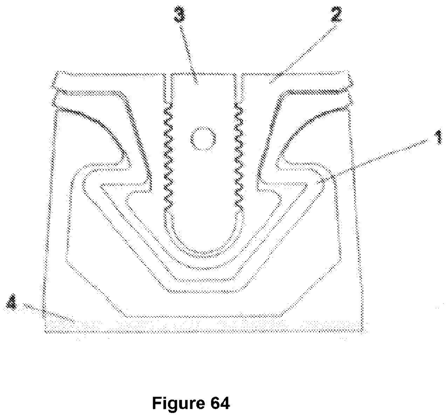

**Figure 64.-** Shows a representation of the fastening device for all types of panels, preferably, of materials for the covering, protection, construction insulation, mainly for edifications, bunkers, safety rooms, of the type made up of a series of longitudinal and transverse profiles forming the structure of the building, chamber, room, bunker itself

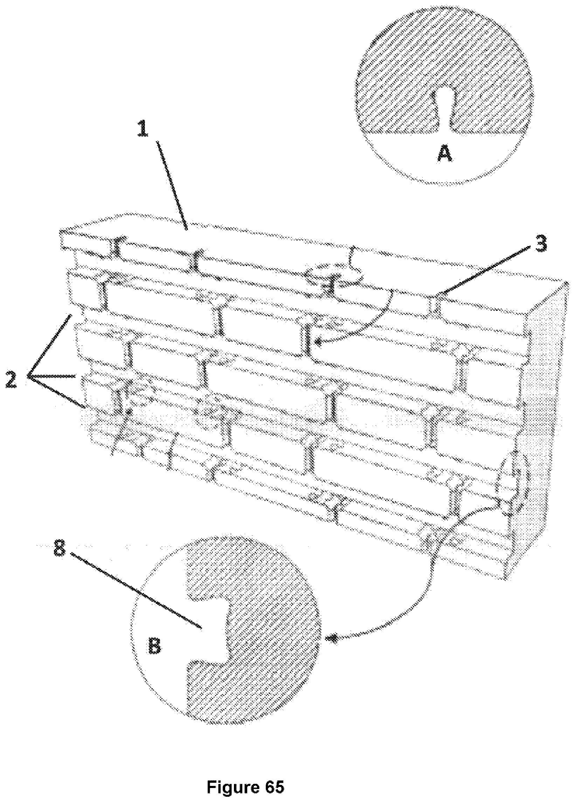

**Figure 65.-** Shows a representation of the panel for anti-electromagnetic, fire retardant, acoustic, thermal insulation for facades, walls, partitions, barriers, dividers, separators on the outside and/or inside having a coating, filled with alloys with said properties according to P201130628, P201330057, U201330074, manufactured with metals, alloys, cloths that are expanded or any other type of format, where it can be manufactured by moulding or machining, of the type which is grooved by main channels.

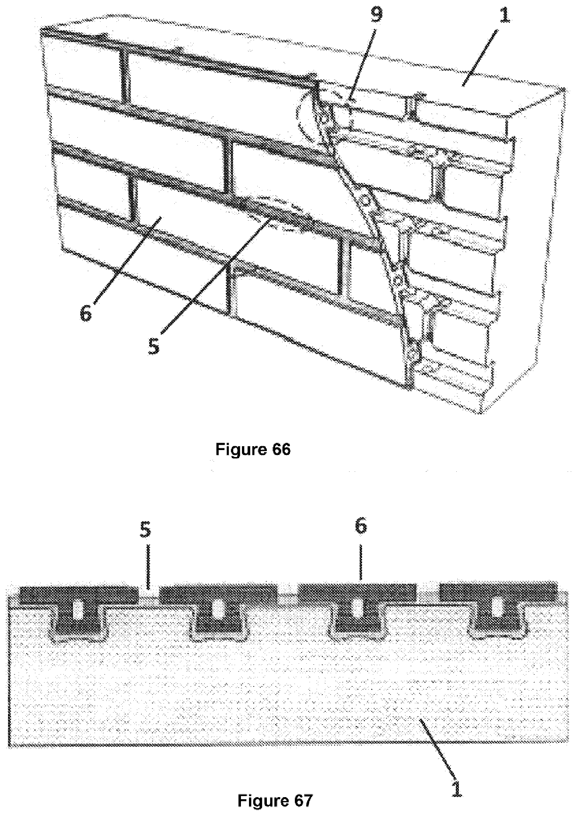

**Figure 66.-** Shows a representation of the panel (1) for anti-electromagnetic, fire retardant, acoustic, thermal insulation for facades, walls, partitions, barriers, dividers, separators on the outside and/or inside having a coating, filled with alloys with said properties, manufactured with metals, alloys, cloths that are expanded or any other type of format, where it can be manufactured by moulding or machining, of the type which is grooved by main channels.

**Figure 67.-**

5.-Ceramics plus the adhesive cement (5).

6.-Plates (6).

**Figure 68.-**

1.-Panel (1) for anti-electromagnetic, fire retardant, acoustic, thermal insulation for facades, walls, partitions, barriers, dividers, separators on the outside and/or inside having a coating, filled with alloys with said properties according to P201130628, P201330057, U201330074, manufactured with metals, alloys, cloths that are expanded or any other type of format, where it can be manufactured by moulding or machining, of the type which is grooved by main channels.

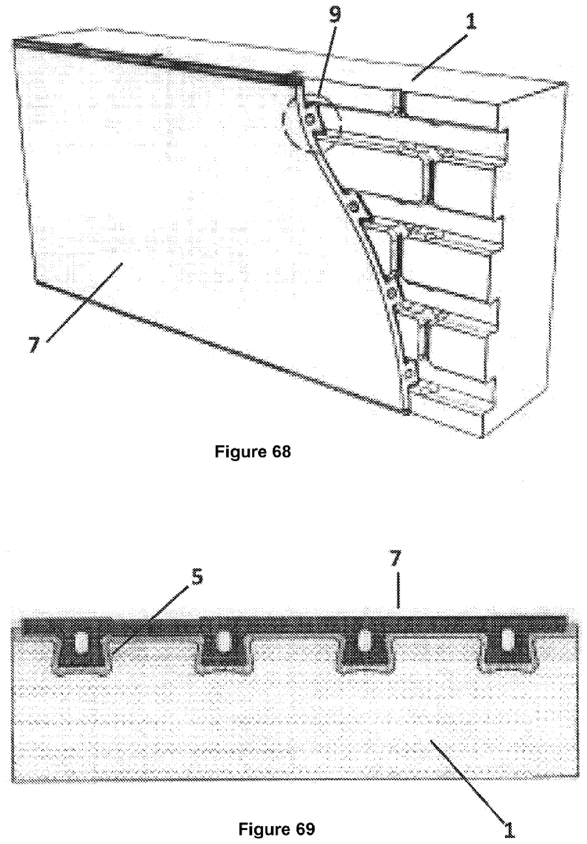

**Figure 69.-** Shows the representation of the insulation panel creating a protection barrier with tiles.

5.-Ceramics plus the adhesive cement (5).
7.-Tiles (7).

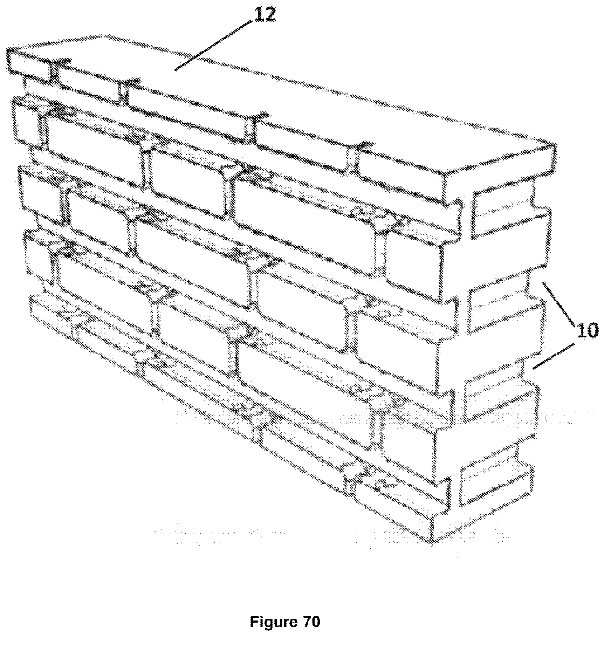

**Figure 70.-** 10.-Panel (1.2) for anti-electromagnetic, fire retardant, acoustic, thermal insulation for facades, walls, partitions, barriers, dividers, separators on the outside and/or inside according to claim 1, characterised in that one of its edges is channeled (10).

**Detailed description of an embodiment**

In this presentation, the alloyed body in expanded and perforated sheet form of the material (20) which is used in the present invention, and which is shown in (Figure 13), for example, can be configured as a shape that comprises a body (100) with a generally spheroidal external shape or configuration.

The internal configuration of the body (100), generally spheroidal, comprises at least one strip of the expanded and perforated sheet of the material mentioned previously, which is folded and/or curled and hollow to form said spheroidal shape.

The generally spheroidal shape can be formed using a section of the expanded and perforated sheet of the material of a size proportional to approximately 20% of the width of the expanded and perforated sheet of material.

The external spherical perimeter of the spheroid (100) encloses a volume and the surface area of the material contained inside that spherical perimeter, that is, inside the spheroid (100), subject to the design requirements of the application, is at least 1.5 square cm per cubic cm of said volume or greater if required. The surface area of the material must be at least 3,500 times the contact surface of flammable fluids contained in the container/tank enclosing/supporting/containing the flammable fluid, in particular to inhibit, eliminate, reduce, polluting or non-polluting liquids or emissions.

Preferably, the spheroid (100) has a compression field or resistance to compacting, that is, permanent deformation under compression, no greater than 7%.

The structural strength of the final product can be modified according to the thermal treatment used in the raw material manufacturing process.

In an alternative embodiment of this invention, the expanded and perforated sheet of the material (20) that is used in this invention, as shown in Figures 10, 11 and 12 as an example, provides a transverse wavy or sinusoidal wave (42) formed therein and the wavy, expanded, perforated sheet of material (40), being introduced helically in a cylindrical shape. The cylindrical shape is generally circular in transverse cross-section, and generally rectangular in longitudinal cross-section, and in a subsequent version of this cylindrical presentation, a flat, expanded, perforated sheet of material, must be folded inside the cylindrical shape. In a new shape, the perforated sheet of material must be folded inside the cylindrical shape, such that depositions of sheets of the flat or wavy, expanded and perforated material in the cylindrical shape are shaped.

Since the waves (42) are formed in the sheet of material (40), with the sheet of material (40) folded helically, the waves (42) cause an increase in the effective diameter of the cylinder and thus, the effective surface area contained inside a specific spherical outer perimeter of the cylinder is increased, providing wide inclusion of volume in the cylinders with a low mass and high effective internal area.

It is desirable that the cylinder has a compression field, or resistance to compacting, that is, permanent deformation under compression, no greater than 7%, and, however, ideally, during the use there is essentially no compression field.

The alloyed body in the non-perforated sheet of material (1), from which it starts, should be provided as a continuous net, non-perforated sheet of material, and then the rectangular openings (12), or slots, are formed in the continuous net in the configuration described previously, such as slits, and in this case, the slotted net (10) can be expanded transversely, transversely tightening the sheet of material (10), such as above a wheel placed such that it adjusts the output of the sheet of material with an additional width of 50% to 100% the width of the sheet of raw material, such that it is ensured that the resulting holes form a plurality of polygonal openings (22) with irregularity, as mentioned previously. It is also possible to expand said material by passing it through rubber wheels which gradually increase its separation, obtaining the desired width.

That which is mentioned previously is achieved by adjusting the position and tension of the expansion wheel of the production machine, and upon doing so, the result is the capacity to have the walls of the finished panel model more or less straight and, therefore, increase the compression force of the expanded and finished perforated sheet of material (20).

Optionally, the expanded and perforated net (20) can have a transverse sinusoidal dip (42) formed therein, and the shape of the dip (42) is inserted or impressed on the lengths of the sheet of material (20) as a series of transverse curls or dips (42) along the length of the net that have dips when the finished product is rolled up.

The cylindrical shapes can be made by the spherical rolling of the sheets of expanded and perforated material that was mentioned previously.

The spheroidal shapes (100) can be made by feeding the sheets of material (20) to which pluralities of arcs with a plurality of parallel openings (22) have been provided, where longitudinal centre is parallel to the central longitudinal axis of the sheet, inserting said sheet inside a machine that has a mechanical device comprising two concave semi-circular sections that work opposite one another,, and these concave sections (the mobile central section and the one that covers it, fixed opposite concave section) can have a variable radius with a concave working edge.

The central part of the wheel-shaped device with the outer part similar to a bicycle wheel, 360° wheel with a concave working edge with a friction surface, and the rotation of the feeding sheet in the shape of a circular tubular cylinder against the rough surface of the opposite mechanical devices, the mobile central device and the fixed external device, which make the fed material form in the shape of a cylindrical tube, roll up and exit in a spheroidal shape.

In the case of cylinders / bottles / canisters / receptacles of types of gases, chemical products in format metal, steel, stainless steel, aluminium, plastic fibres of any dimension or uses filled with the invention in mesh / net / sphere format and the safety valves of the receptacle, are characterised by the fact that they comprise the following phases:

- Manufacture, by means of stamping, of the two steel half-bodies (la) and (lb), one of which has a hole (le) in which the adapter is welded.
- Inserting the diffusing element (3) inside the bottle (1) by means of inserting it in the form of rolls of mesh placed inside each of the half-bodies in the moment prior to forming the joining welds thereof.
- Applying weld spots with the corresponding tool.
- Oven annealing process for the relaxation thereof.

In view of the figures or drawings provided, the following can be observed:

**Figure 1.-** Corresponds to a plan view of a sheet of the material which is used in the invention corresponding to sheets inhibiting the explosion of vapours of flammable fluids.

**Figure 2.-** Shows an elevational side view taken in transverse cross-section of the object reflected in Figure 1.

**Figure 3.-** Corresponds to an upper plane of a perforated sheet of the invention.

**Figure 4** - Shows a side elevational view of the object reflected in Figure 3.

**Figure 5.-** Reflects a side longitudinal section view of the object depicted in Figure 3.

**Figure 6.-** Shows an upper plane of an expanded and perforated sheet of the material used in the invention.

**Figure 7.-** Depicts an elevational side view in transverse cross-section of the object shown in Figure 6.

**Figure 8.-** Corresponds to an enlarged top view of a portion of the object depicted in Figure 7.

**Figure 9-** Again corresponds to an elevational side view in transverse cross-section of the object reflected in Figure 8.

**Figure 10.-** Corresponds to a top view plane of a wavy, expanded and perforated sheet of the material used in the invention.

**Figure 11.-** Reflects an elevational side view taken in transverse cross-section of the object depicted in Figure 10.

**Figure 12.-** Corresponds to an elevational side view taken in transverse cross-section of the object shown in Figure 10.

**Figure 13.-** Finally depicts an elevational side view of a spheroidal shape carried our according to the invention. Expanded and perforated sheet of the alloyed body.

**Figure 14.**-Shows a hydrocarbon "bypass" system for the protection /safety of all types of pipes / ducts (gas pipelines, oil pipelines,...)

Pre-pipeline inlet of the valve to the gas pipeline, oil pipeline, pipe or pipework: Inlet for the hydrocarbons, liquids, fluids or gases.

A) Pre-valve / filter inlet: The hydrocarbons enter the area of the pre-valve inlet of the pipeline, gas pipeline, oil pipeline or hydrocarbon or gas conveying pipe.

B) Hydrocarbon filtration and acceleration valve: The hydrocarbons enter the hydrocarbon filtration and acceleration valve.

C) In the central valve section there is created by means of the filter system the turbulence required according to the formula:

$$Re = Vs\ D/v. \text{ (Formula 1)}$$

// Re=Reynolds number-Vs=Characteristic velocity of the fluid-v=kinematic viscosity of the fluid.//

The flow is laminar throughout the pipe, when it reaches the filling point where the filling valve described in this invention is located, the laminar flow of the fluid is transformed into a turbulent flow, increasing the Reynolds number.

By increasing the Reynolds number in the equality of the formula, a term on the right side of the equality of the formula has to increase. The viscosity and density remain unchanged, therefore the only term that can increase is the velocity. For the outlet of the vapours, liquids, gases or hydrocarbons to achieve the discharge / filling rate, the invention also increases the filtration rate of the suspended particles which may be found in an unforeseen, natural or intentional manner in the fluids, hydrocarbons or gases going through the alloyed body in this spot.

D) Outlet of the filter area: It is the area referred to as the outlet of the filter area where the outlet of said hydrocarbons, liquids, gases, fluids or emissions takes place, which exit with an increase in the discharge/filling rate that is at least 20%-45% faster compared with the inlet rate of the liquids of the fluids of area A.

E) Post-valve outlet to the gas pipeline, oil pipeline, pipe or pipework.

**Figure 15.** Shows a side valve in which it can be seen where the side alloyed body would be introduced, explaining the dimensions of a valve and its operating parts.

A) Infeed / discharge / filling valve

B) Alloyed body in mesh / net /sphere format inside a casing and a body manufactured from any material for the fastening of the alloyed body.

C) Hydrocarbon fluid inlet/ outlet

D) System of screws for fastening the pipe / pipework valve / discharge/ filling valve.

**Figure 16 A.** Shows a side detail of the casing object of fastening /filling /installed with the alloyed body. In this case, this is an individual part which will be introduced inside the discharge / infeed/ filling valve of the image of the infeed/discharge filling valve of Figure 15. This fastening system / casing or packing system of the alloyed body is perfectly introduced inside the valve so that the entire flow of the liquid hydrocarbons, pass through it according to the design of the valve, where the fluid can enter and exit on side A, and on side **B** and vice versa. On face A and on face **B** there is a bar the function of which is to keep the alloyed body fixed inside the casing, but it also has the purpose of being able to facilitate, engage and thus introduce or reduce said object inside the valve of Figure 15 in an easy manner (the same principles of the purification baskets of pool purification systems).

A.) Inlet or outlet of the flow and fluid of the liquid hydrocarbons.

B.) Casing installed which can function in both directions according to if it is being used for discharge or filling.

**Figure 16 B.** Shows a front image of the casing object of the fastening/ filling / installed with the alloyed body. This object / casing / basket can be manufactured from the same material as that used in the alloyed body, but instead of a net / mesh/ spheres, in an alloyed part format specifically done in order to make said object. Without limiting that said casing /basket /object of the fastening of the alloyed body can also be manufactured with any existing material, Including plastic.

A) Mesh / net /spheres which are also used for filtering the suspended particles or dirt out of the hydrocarbons, in which its cleaning is very easy as it enables refining any large object of dirt, normally, and it enables removing the casing, filter basket, and with a compressed air gun, it enables blowing on the entire casing / basket, to thus dry the suspended particles which can be: sand, mud, sticks, leaves,... the maintenance thereof being easy and very economical. The installed casing can function in both directions according to if it is being used for discharge or filling.

**Figure 17.** Shows a valve / bypass system for pipes, conduits and particularly for fluids and hydrocarbons.

Explanation of the use diagram.

Point of entry of the filtration / anti-ignition system, Increase filling / infeed / discharge rate.

A) Point of the valve where the "inspection robot" and the fluids would normally pass when point "A" is closed. Points "A" and "C" will be closed when point s"B" and "D" are opening to change the through flow, which thus enables passing / inspecting the pipe or duct by means of an "inspection robot" or any other technical or manual inspection system for inspecting ducts, particularly gas pipelines / oil pipelines.

B) Point of the outlet valve to prevent the return of the fluid flow.

C) Point of the open valve when the "inspection/safety robot" passes through the pipe for the robot to perform the inspections.

D) Pipe, oil pipeline, gas pipeline having a normal passage. When points "A" and "C" are closed and "B" and "D" are open, the passage of the fluids or of the robot can be done through pipe "E". Normally, valves or points "B" and "D" will be closed so that the flow of the fluids passes through the filter valve to enable benefiting from the increase in rate, filtration of suspended bodies, reduction of flashbacks by increasing safety.

**Figure 18.-** Shows a fume filtration system by means of entrainment with liquids, normally water, to reduce all types of polluting or non-polluting emissions into the atmosphere and possible recycling of waste.
Schematic side view explaining the vibration circuit of the entire system and the fume circuit: Fume filtration system by means of entrainment with liquids, normally water, to reduce all types of polluting or non-polluting emissions into the atmosphere and possible recycling of waste.

A.-Fume inlet
B.-Fume outlet into the atmosphere
C.-Vessel/container for collecting the liquid / water from the entrainment of the polluting particles from the fumes of the chimney.
D.-Thickening decanter
E.-Deposit
M.-Component neutralizer.
H.-Alloyed body filling area, acting like a fume filter.
I.-System for the falling, showering of water due to gravity, to entrain the particles in the fumes downwards.
J.-Final part of the outlet for the filtered fumes out of the chimney.
K.-Tower, chimney, emission evacuation tube which can be used in industry (refineries, thermal power stations, chemical plants), transport with high degrees of pollution, such as planes, ships, chimneys of buildings.
L.- Deposit in the section for the liquefaction of polluting particles from the of the entrainment of liquids from the chimney / filtration / vaporisation. ("Watering /cleaning / purification section / deposit of contamination waters from the chimney filtering / vaporisation chimney fumes")

**Figure 19.-** Shows a side view of a tanker truck which explains the parts and installation locations of the alloyed body.
The entire vehicle could be completely or partially covered with the cloth of the blanket using the alloyed body, which vehicle will have the advantages of being able to be completely thermally protected against infrared rays, fire retardant, bulletproof, the vehicle.
The service life of the fuel deposit / tank is increased with the alloyed body due to its anti-oxidant and anti-algae benefits. The occupied volume of said deposit does not exceed 1.5% the capacity. It also has a weight less than 27-33 grams per litre of the alloyed body installed.
**Figure 20.-** Shows a diagram of a ship in which there can be seen:

A) Deposit filled with the alloyed body in ball/ mesh / sphere format with which vaporisation of the hydrocarbons and the water hammer (sloshing) are drastically reduced, it is fire retardant, anti-explosive and reduces the water hammer against the structure of the deposit which causes high levels of stress in the walls of the deposit.
B) Cylinder / bottle for gases (butane, propane) for the kitchen in the ship filled with the alloyed body to achieve a cylinder / bottle having an external lightness, external hardness, and with fire retardant, anti-explosive, anti-cooling / freezing properties of said bottle in the case of intensive use of the gas.
C) High discharge / filling / infeed valve according to Figure 15.
D) Panel for the reduction, elimination of acoustic noises caused by the movement of the ship of the motor, where it can be installed in the underwater body of the ship.
E) The panel / cloth/ blanket could be introduced in the cabin area or in the entire ship, protective against electromagnetic pulses.

**Figure 21.-** Shows the invention in mesh / net /sphere format, installed in any cylinder/bottle / canister of any type of gases / liquefied gases / hydrocarbons, filled with the alloyed body, in ball / net / mesh format. In the event of filling with spheres, they will be introduced by removing the safety valve from the cylinder / bottle and mechanically or manually injecting the spheres until reaching 100% capacity of the cylinder. At that time, the safety valve is placed again. Manufactured bottles and bottles already existing on the market could thereby be recycled with the filling of the spheres.
In the case of using the alloyed body in net or mesh format, It will have to be introduced during the manufacturing process with an exclusive technological system.

A) Cylinder / bottle / canister manufactured with metal or stainless steel for reducing the total weight of the cylinder / bottle/ canister by 25%.
B) Filling of the alloyed body.
C) Cylinder / bottle / canister safety valve.
D) Ergonomic shape to enable easily lifting the bottle.
E) High-strength base of the cylinder/bottle/canister to enable withstanding blows and being placed in transport vehicles.

**Figure 22.-** Shows the invention installed in tanks / deposits with a floating body.
Side cutaway diagram of a movable ceiling for tanks / deposits / storage with movable ceilings.

A. Base of the floating ceiling made of metal or aluminium
B. Filling area for mesh, net or spheres.
C. Special protective surface of at least 40 cm for the external protection at any point against ignition or static charge.

D. Cornice particularly manufactured for impeding and being fitted to the deposit and for filtering, eliminating or reducing vaporisation through the sides, limiting the possibility of the creation of sparks due to rubbing, due to the raising, lowering movement of the platform of said walls against the tank.

E. Anti-flotation and anti-rubbing barrier to prevent sparks or rubbing, between the panel and the tank.

**Figure 23.**-Shows a schematic section depiction corresponding to a panel, wall for the construction carried out according to the object of the present invention.

**Figure 24-** Shows a perspective detail of a portion corresponding to one of the layers of mesh which are embedded in the panel of the preceding figure

**Figure 25.-** Shows an inner surface diagram of a panel designed exclusively in a circular format, being able to make panels having any shape. It shows a detail of a circular-shaped panel with a corresponding visible proportion showing the layers of the aluminium alloy in net, mesh, laminar format inside the panel having an architecturally individual shape or irregular shapes.

**Figure 26-** Shows a detail of a rectangular-shaped panel coupled in a continuous manner for the installation thereof in any wall, floor, ceiling, to achieve a complete and tight closure against magnetic fields or radiations, electromagnetic pulses from outside in a natural, unforeseen, human, industrial or war-related manner.

**Figure 27.**-Shows a detail of a rectangular panel, wall, barrier for its placement in the floor, ceiling, or walls of a space having regular shapes and easy to install due to its standardised measurements, its use meeting the finally need for protection against all types of electromagnetism, radiations, fires, heat, solar radiations, acoustics, etc.

**Figure 28.-** Shows an image of the pipe referred to as "original"

A) Outer pipe referred to as "second safety"

B) Duct or pipe referred to as "original pipe"

C) Space between 2 centimetres to 50 centimetres between the 2 pipes to be filled with the alloyed body in ball/ net or sphere format.

D) Inlet and outlet of liquid hydrocarbons only.

E) Spheres, balls manufactured from Teflon, rubber or any material required for keeping both pipes separated in the firmest manner possible / being self-centering. So that the alloyed body or the two pipes of the diagrams are never crushed due to any external movement.

F) Teflon rubber gasket or a gasket of any other material in which there is integrated therein a system for passage, filling / draining between sections of the one-way duct, particularly designed for cases in which the pumping stations or sub-stations cannot or do not have special deposits for refilling liquids. In the event that there is a puncture between gaskets in a section of the pipe and there is a loss of liquid, said section could be filled according to the chosen direction of the fluid, filling the section again from a sub-station and even from the head of any of the two sides of the pipe, for example liquid could be filled from the refinery or from the discharge terminal, according to the reserves / deposits of liquids in the event of not being able to access auxiliary deposits in the entire pipe. Since the gasket is one-way, there can never be a return of the filling liquid.

**Figure 29 A.-** Shows the transverse image of the pipe referred to as "secondary-safety".

A) Duct or pipe referred to as "pipe original"

B) Space between 2 centimetres to 50 centimetres between the 2 pipes to be filled with the alloyed body in ball/ net or sphere format.

C) The joining of the outer pipe referred to as secondary or safety pipe could be done by welding or also by means of modern joining systems or technologies by means of glues, hot or cold adhesive, screws of any type or form very similar to what is used in the industry of plumbing PVC pipe joints. However, for safety reasons, it is recommended that the joining is done with welding systems which are commonly used in the petrochemical industry. The best option can be chosen according to the end need.

D) Inlet and outlet of liquid hydrocarbons only.

**Figure 29B.-** Shows the detail of the transverse image of the pipe referred to as "secondary-safety".

A) Outer pipe

B) Inner pipe

C) Net / mesh alloyed body

D) Inlet of the flow of hydrocarbons gases or liquids inside the pipe

E) Alloyed body surrounded by liquid / water / glycol.

**Figure 29 C.-** Shows the image of the placement of the gasket inside the inner / outer Teflon, rubber pipe or a pipe of any other non-return material used to enable refilling a penetrated / attacked section. The filling of the altered section could be done from pumping sub-stations of pumping or from the heads or terminals of the ducts (refineries, storage deposits, discharge terminal, where there is a water deposit to enable refilling the circuit.

A) Pipe
B) Valve for filling the pipe from outside or from a tanker truck.
C) The joining of the outer pipe referred to as secondary or safety pipe could be done by welding or also by means of modern joining systems or technologies by means of glues, hot or cold adhesive, screws of any type or form very similar to what is used in the industry of plumbing PVC pipe joints. However, for safety reasons, it is recommended that the joining is done with welding systems which are commonly used in the petrochemical industry. The best option can be chosen according to the end need.
D) Net / mesh alloyed body
E) Ventilation / vaporisation / emergency valve system in extreme cases of heating of the liquids / glycol between the two pipes. Although with the alloyed body this application will not be necessary, but it is a double passive safety.

**Figure 30.-** Shows a detail of a duct / pipe (gas pipeline /oil pipeline) which has independent supports to enable crossing inhospitable areas; lakes, rivers, hills, valleys,... bridges, viaducts...

A) Outside of pipe B
B) Fastening system for outdoor locations, land locations, bridges, viaducts, between hills, Mountains or for crossing rivers, lakes or areas in which the pipe cannot be buried for any reason.
C) Joints for one-way liquid filling/ passage, for single passage, non-return.
D) Teflon or rubber bags for damping / separating the two pipes.
E) Filling the alloyed body with or without marking liquids
F) Outer pipe
G) Liquefied products with markers

**Figure 31.-** Shows a section view of the pipes, introducing 1 or several balls made of Teflon which cushions and self-centres the outer and inner pipe.
**Figure 32.**-Shows an anti-explosive system / barrier for sewers, particularly designed for cities or metropolises, to prevent explosions, deflagrations, accumulations and chain reaction explosions in the subsoil, in tunnels, sewers.

A) Lid of a sewer manufactured in metal, concrete, resistant plastic with flow systems of safety or without safety. Particularly with anti-theft systems, if desired.
B) Nut and bolt system for coupling the lid of the sewer to the field system of the invention.
C) Hooking area to enable lifting the sewer.
D) Ventilation holes of the sewer.
E) Base of the filter of the basket or fastening of the basket / filter in which there are 4 security screws, with 4 bars that are the same as those that are screwed from the lid of the invention outside the sewer, to enable accessing the sewer from the street or to enable exiting from inside the sewer to the street. If the outlet is from the underground part, the 4 security screws would come unscrewed and push the entire basket upwards, including the lid.
The basket filled with the alloyed body (Figure 16A and Figure 16B) will have an approximate filling thickness of 50 to 100 cm. The total weight will not exceed 20 kg, therefore it is recommendable for the lid to be made of high resistance and lightweight PVC / plastic, to enable exiting by pushing the entire body in case of emergency, or if having external assistance, which is not common as these areas are classified as dangerous. However, operators can remove the lid, take out the basket by pulling up on it or with someone's help, Pushing from below, to proceed with the maintenance, inspection and cleaning plan of the alloyed body with a compressed pressure gun to thus enable removing the sand-type particle, mud, leaves,...
F) The lower part or body of the fastening of the basket or alloyed body will be fastened so that the alloyed body will not fall through a grating or fence so that in the event of rain or street cleaning by means of water / liquids, said water would pass through the ventilation holes of the cover and the outer liquid could thus go through the alloyed body like in the chimney of Figure 18, and thus continue working as a sewer and thus allowing the passage of the outer liquids into the underground water system.
G) Inlet or outlet of explosive or harmful vapours which, upon reaching the alloyed body in this basket format, the gases are prevented from getting out, but they are extremely filtered.

**Figure 33.-** Shows a movable barrier that can move both towards the sides or walls of the mine from right to left by means of a system of channels, paths or rollers, to allow the passage of large-sized machinery or a heavy transit of personnel to in the active areas of a mine. A protection barrier particularly designed for all types of underground mines.

A) Barrier using the alloyed body in mesh / net / or ball format completely closing access to tunnels or paths in mines.
B) Normal inlet / outlet system to enable inserting a hose for degassing the area behind the barrier.
C) This valve / filter inlet could also be accessed from both sides, having a closure system, if required, by means of a security lock or screws.
D) Valve the protection barrier goes through from one side to the other side in which, when removed, there is inserted a discharge / filling head having the exact dimensions which goes from one side to the other to enable extracting the gases behind the barrier.
E) Gas level warning sensor. An alarm systems analysing and warning about the type of gases by means of visual systems, an alarm and display. This can be found on both sides of the barrier.
F) Access /exit door on both sides of the barrier so as to not have to move the entire barrier unnecessarily.
G) Area touching the ceiling of the mine
H) Right side completely attached to the wall of the mine
I) Left side completely attached to the wall of the mine
J) Lower side completely attached to the wall of the mine
K) System of rollers/slide or a path, in which the entire barrier can be moved manually or mechanically all the way to the right or left side on a system of rollers on the path. The line is only completely moved where there is not a high transit of personnel or the machinery thereof would not be able to get through the door designed in the centre.
L) Hose inserted in a fume extraction point.

**Figure 34.-** Shows a semi-fixed barrier which is not commonly used, but it allows access on both sides of the barrier for small machines and personnel, but without the possibility of moving the barrier completely as it is attached to the walls, ceiling and floor of the tunnel. It is recommendable for inactive and little used mines). It has the same safety and degassing measures as the movable barrier, but the unit does not move, but it does have an access door on both sides.

A) Barrier using the alloyed body in mesh / net / or ball format completely closing access to tunnels or paths in mines.
B) Normal inlet / outlet system to enable inserting a hose for degassing the area behind the barrier.
C) This valve / filter inlet could also be accessed from both sides, having a closure system, if required, by means of a security lock or screws.
Valve which goes through the protection barrier from one side to the other side, in which, when removed, there is inserted a discharge / filling head having the exact dimensions which goes from one side to the other to enable extracting the gases behind the barrier.
D) Gas level warning sensor. An alarm systems analysing and warning about the type of gases by means of visual systems, an alarm and display. This can be found on both sides of the barrier.
E) Access /exit door on both sides of the barrier so as to not have to move the entire barrier unnecessarily.
F) Area touching the ceiling of the mine
G) Right side completely attached to the wall of the mine
H) Left side completely attached to the wall of the mine
I) Lower side completely attached to the wall of the mine

**Figure 35.-** Fixed high-safety barrier, for access restricted to authorised personnel only and small machinery in areas that are normally used very little or not all. In addition to benefiting from all the preceding advantages, it is completely fixed, but resistant against theft or unauthorised accesses, such as in mines with minerals having a high strategic or economic value: gold mines, diamond mines, uranium mines...

A) Barrier using the alloyed body in mesh / net / or ball format completely closing access to tunnels or paths in mines.
B) Normal inlet / outlet system to enable inserting a hose for degassing the area behind the barrier.
C) This valve / filter inlet could also be accessed from both sides, having a closure system, if required, by means of a security lock or screws.
D) Valve the protection barrier goes through from one side to the other side in which, when removed, there is inserted a discharge / filling head having the exact dimensions which goes from one side to the other to enable extracting the gases behind the barrier.
E) Gas level warning sensor. An alarm systems analysing and warning about the type of gases by means of visual systems, an alarm and display. This can be found on both sides of the barrier.
F) Access /exit door on both sides of the barrier so as to not have to move the entire barrier unnecessarily.
G) Area touching the ceiling of the mine
H) Right side completely attached to the wall of the mine
I) Left side completely attached to the wall of the mine
J) Lower side completely attached to the wall of the mine

**Figure 36.-** Shows a partially or completely removable, collapsible, movable barrier for immediate use for being urgently placed in areas and thus protect an area in as little time possible until the barrier of the type described above is placed. Figure 33, Figure 34, Figure 35. It has the same degassing systems: alarm and gas level warning systems, but for immediate emergency use.

A) Frame of the mine. The entire frame has tunnel cutting parts. It has to be filled with the alloyed body. The anchors of the frame are made of steel for the fastening thereof.
B) Filling of the alloyed body
C) Anchors to the wall of the mine
D) Access /exit door on both sides of the barrier so as to not have to move the entire barrier unnecessarily.
E) Valve the protection barrier goes through from one side to the other side in which, when removed, there is inserted a discharge / filling head having the exact dimensions which goes from one side to the other to enable extracting the gases behind the barrier.
F) Gas level warning sensor. An alarm systems analysing and warning about the type of gases by means of visual systems, an alarm and display. This can be found on both sides of the barrier.
G) Wall

**Figure 37.-** Shows a partially or completely removable, collapsible, movable barrier for immediate use for being urgently placed in areas and thus protect an area in as little time possible, with the same features as Figure 36, but it also incorporates a technology and system for filling, refilling with the alloyed body around the frames / frameworks of said barriers.
The type of machinery normally used in a mineral mine does not allow the walls, ceilings, floors, to be perfectly angular, therefore the framework/ framing/frame of the barrier will be manufactured adhering as strictly as possibly to the measurements of said tunnel. Between the frame and framework of the barrier and some or all of the locations of the tunnel, several can be found having a larger or smaller size. This entire area will have to be filled with the alloyed body, with net, mesh or sphere. It will have the exact depth dimensions of the barrier and will be fastened, screwed, placed on the walls of the tunnel towards the frame and the door, with fencing, mesh, grating so that the gases cannot get through any point of the dimensions or forms of the tunnel, providing complete safety to any type of the installed barriers. Figures 33, 34, 35 and 36.
Said frame or framework of the barrier will have on each side several fastening screw systems from the frame to the wall, being introduced at least 20-50 cm into the wall of the tunnel, so that the frame, framework, is completely fixed and withstands any type of shock wave. The structure of the frame of the door in contact with the alloyed body of the barrier will have a lightweight but highly resistant structure so as to also withstand the shock waves in a safe and effective manner, therefore the width of the barrier will depend on the distance from the barriers of a tunnel and an estimate of the hazard and gas accumulation levels in said areas. Therefore the barrier will be thicker, so there is a higher risk of the distance between barriers.

A) Inlet, valve, access to the ceiling system for the injection and ventilation stale air like those used in air conditioners in ceilings or walls in buildings, where the air can even be heated or cooled inside the tunnels. This system will be connected to machines for the air conditioning / filtration / heating / decalcification /extraction of all types of air through all the necessary tunnels. Said machinery can be started up / operated / from a movable unit, such as a tanker truck for tunnels / mines or the circuit of these fixed pipes can reach the outside thereof to enable performing the operation from a station or sub-station for the air conditioning /climate control /extraction /gassing of the mine.

This system can be a double return system in which there can be a fixed pipe in the ceiling injecting clean air and another pipe on one side extracting dirty air, which is particularly important for taking the filtered and clean air to the deepest and hottest areas thereof and at the same time using the other fixed pipe, which can go through the pipe or on a side to extract polluted air, air with suspended dust particles, reduce the heat of the air therein and thus care for and protect the health of operators.
At the heads of these ventilation systems, it is possible to couple air quality control systems so that signals can be sent to the main station to vary / change / adapt both inflows and outflows of the air per minute / per hour, and even warning about the existence of explosive, hazardous harmful gases, particularly in the tunnelling heads, which are the first to unforeseeably / accidentally / intentionally be pierced and unexpectedly find a gas pocket, which increases the reduction of the risk of exposure at all levels in the mine
**Figure 38.-** Shows a diagram or figure of the cloths used for manufacturing a protective blanket. For protection on one hand.

A) Impermeable cloth / layer
B) Anti-thermal/ fire prevention cloth/ layer
C) Layer of the alloyed body in mesh / net / sphere format

D) Layer of bulletproof aromatic polyamides, levels III to VI

E) Impermeable Layer

**Figure 39.-** Shows a diagram or figure of the cloths used for manufacturing a protective blanket. Having a double protection face Diagram of the aromatic polyamide blanket cloth for protection

A) Impermeable cloth / layer

B) Anti-thermal/ fire prevention cloth/ layer

C) Layer of the alloyed body in mesh / net / sphere format

D) Layer of bulletproof aromatic polyamides levels III to VI

E) Layer of bulletproof aromatic polyamides levels III to VI

F) Layer of the alloyed body in mesh / net / sphere format

G) Anti-thermal / fire prevention cloth/ layer

H) Impermeable cloth / layer

**Figure 40.-** Layer of the body of the invention filled with a viscous liquid for the amortisation and protection for use as a sleeping bag in extreme uses.

**Figure 41.-** Shows a layer of camouflage in 3D. This cloth / layer of camouflage in 3D can be attached, glued or adhered always to layer A (Figure 39) to increase the levels of camouflage of the entire cloth / blanket. It can be placed on both sides or on one side only, according to the needs of the user

**Figure 42.-** Shows a layer / blanket of the alloyed body filled with a viscous liquid for the damping and protection for use as a sleeping bag or in extreme uses

**Figure 43.-** Shows a layer / blanket, with an outer anti-penetration design of the pipe / duct with or without anti-penetration explosive heads with a protective head filled with an anti-explosive anti-penetration system. Anti-penetration design / shape manufactured in solid form for introducing a system of explosives to be used as an external penetration reduction system

A) Filling of the alloyed body

B) Hydrocarbons /gases

C) Teflon balls separating the two pipes.

D) Bulletproof /anti-thermal,...

E) Virtually anti-armament external protection seating, penetration machinery

F) Protective head filled with an anti-penetration explosive system. This anti-penetration design / shape can be manufactured in hollow form for introducing a system of explosives to be used as an external penetration reduction system.

**Figure** 44.- Shows a layer / blanket, with an outer anti-penetration design of the pipe / duct with or without anti-penetration explosive heads with a protective head filled with an anti-explosive anti-penetration system. Anti-penetration design / shape manufactured in hollow form for introducing a system of explosives to be used as an external penetration reduction system.

A) Filling of the alloyed body

B) Hydrocarbons /gases

C) Teflon balls separating the two pipes.

D) Bulletproof /anti-thermal,...

E) Virtually anti-armament external protection seating, penetration machinery

F) Protective head filled with an anti-penetration explosive system. This anti-penetration design / shape can be manufactured in hollow form for introducing a system of explosives to be used as an external penetration reduction system.

**Figure 45.-** External layer having special shapes/designs for dissipating / protecting / enclosing the penetration of shrapnel, bullets, impacts...

**Figure 46.-** Shows the representation of a protection / safety door. This door has introduced therein a textile, anti-thermal, fire retardant, anti-acoustic, anti-electromagnetic and bulletproof blanket.

A. Structure of the same material of the door of the invention in solid bar format, to create the interior structure of the door with the maximum resistance and properties of the invention. Mesh/net filling of the anti-thermal, fire prevention, anti-acoustic, heatproof, anti-electromagnetic blanket.

B. Frame of the door

C. Hinge.

D. Latches: the latches can be of any size, dimensions and of any material of any architectural shape, with and without openings. In the case of doors in dwellings, offices, places where it is not mandatory to use safety doors, fire prevention, emergency exits, evacuation, they will have the same bars or opening and closing systems according to the law in force in each country in relation to said safety measures.

E. High-strength steel lock, comes out of the door, goes through the frame and is incorporated in the wall

F. Shielded bar closure, entering the frame or the wall. Each of the doors, in the case of the interior doors of an office, of a dwelling or place with low levels of safety, the door can have a normal domestic lock. In the case of locks in safety doors in areas with a high risk of penetration / attack / delinquency / terrorism / sabotage, There can be an unlimited number of locks for locking in any direction of the frame, upwards, towards the side of the latches between the hinges and even going through the frame / ground to achieve a complete and immovable safety door, having to destroy the steel anchors from the wall to the frame or to the door to penetrate it.

In the case of locks in shops, dwellings, garages, garage doors opening into the street, the number of locks can be less than what is usually found in dwellings with a double lock, double anchor to the frame of the door. Inside the structure of the door there will be a high-strength metal structure, bars, interlocking sections so that the door is firm and integral on any of its faces, but said bars can be manufactured of the same outer material of the doors: metal, steel, but the interior filling will be of the alloyed body in net / mesh / sphere format, which will be in direct contact with the metal part of the door so that the properties of dissipation, reduction, elimination, protection with respect to shock waves, heat waves, thermal waves, acoustic waves, are effective.

G) Barrier interposed or interlocked for fastening the ball/mesh format filled with interconnected marker liquids to the net/frame/hinge. The tube for the liquid passes through the wall, frame / door, interconnected bags of water inside the door with liquid and another tube for water goes inside the hinge of the door of steel. When a thief wants to try to break the hinge with a blowtorch or drill, halfway through the thief will run into the pipe filling the door, when said pipe explodes, the delinquent will be marked and possibly stop trying to break through the door because of the permanent marking with methylene blue, or methyl orange.

H) Coded integrated/ automation system for opening the door by means of visual, voice, iris, fingerprint recognition sensors,...

I) Normal or high-safety frames, with a system incorporated in the frame / panel with iris, voice, visual, fingerprint recognition, automation, coding, encryption. Or with an integrated coded sensor system inside the door to achieve a higher level of safety, as the wiring goes through the inside of the door.

K) Optional ventilation: grate system filled with the alloyed body to enable filtering air between low-risk rooms, compartments or inside offices / dwellings, with the option of being able to close said openings by means of coupling a fixed / movable door or grate system with automatic or manual closure.

L) Grate system of the doors: Placing two grates in said doors, in the upper and lower parts of the doors filled with the alloyed body and being an integral part of the system, increases interior cooling of the door due to movements of the air by convection.

M) Tube connected to the water deposit / system of the dwelling which internally goes through the hinges of the safety door to enable keeping the flow of the liquid, pressure on the inner part of the door constant, so that in the event of penetration of the interior layer, this liquid/water mixed with markers /glycol shoots out under pressure from the point of penetration of the door, being a door protection / safety system.

The attacker / delinquent will try to cut, penetrate the hinges of the door, but this tube connected to /for the filling of liquids is located in the inner part of said hinges. When this tube / duct with the marker liquid is broken / penetrated, said liquid will be projected toward the delinquent /attacker as if they had penetrated any other part of the door, offering safety and protection, both to the door and to the hinges thereof. This tube will be integrally inside the hinge and will be manufactured for continuous daily use of the integral part of the door protection system.

N) Anchors protecting electrical wiring, automation and water system toward the door.

**Figure 47.-** Shows the representation of a protection / safety door. It has the same features as Figure 45, but it additionally incorporates:

a) A safety anchor, which is incorporated according to the desired security level, having different dimensions, according to the possibilities of the installation thereof in walls, ceilings and floors.

b) An inlet duct from the water system going through the high-security frame, hinge, which is incorporated for filling the inner part of the door with the protection / safety liquids.

c) Electrical wiring connected to and from the door, for supplying light, automation, computers, installations,

d) High-safety resistance structure. It is T-shaped, in which there is incorporated / welded /attached the frame of the safety door, there can be incorporated in the inner part pipes, wiring and communication lines from and to the door through the frame / dwelling of the building. This therefore prevents the attacker from being able to cut, with a radial /industrial cutting instrument, the outer part of the frame, and thus prevents the safety/protection measures of the frame and of the door. With this type T-shaped anchor, the attacker will not be able to cut the communication (automation) lines, system of protection liquids from / to the door of the dwelling.

**Figure 48**.-Shows the representation of a door with a security opening bar.

A) Structure of the same material of the door of the invention in solid bar format, to create the interior structure of the door with the maximum resistance and properties of the invention. Mesh/net filling of the anti-thermal, fire prevention, anti-acoustic, heatproof, anti-electromagnetic blanket.
B) Frame of the door
C) Hinges
D) Safety opening bars.
E) High-strength steel lock, comes out of the door, goes through the frame and is incorporated in the wall.
F) Closures: Shielded bar closure, entering the frame or the wall. Each of the doors, in the case of the interior doors of an office, of a dwelling or place with low levels of safety, the door can have a normal domestic lock. In the case of locks in safety doors in areas with a high risk of penetration / attack / delinquency / terrorism / sabotage, There can be an unlimited number of locks for locking in any direction of the frame, upwards, towards the side of the latches between the hinges and even going through the frame / ground to achieve a complete and immovable safety door, having to destroy the steel anchors from the wall to the frame or to the door to penetrate it.

**Figure 49.** Shows a representation of the front view of the rectangular design of a cage, case, box for the storage, safekeeping, protection of alloys in mesh, roll, sphere, packet, capsule formats.

A. Telescopic crane which can move the cage to any location with the content of the alloys with the safety properties incorporated therein.
B. Hooking between the cable system, the cage and the telescopic crane.
C. Cables for fastening and for moving the cages.
D. Point of hooking to enable hooking the cables letter C with letter B and being moved and placed by letter A.
E. Point of hooking, Connection between cages laterally, horizontally, at the top and at the bottom, having these points to achieve the exact and secure placement of the cages with respect to one another the same as letters D and K.
F. Structure of any format and made with any material to achieve the desired structure for creating the technical viability of the cage.
G. Rolls of mesh containing the alloy with which said cage has been created to enable using a large amount of alloys and achieve their physical and integral protection to be used in any location, but particularly inside fuel tanks such as those referred to as jumbo tanks.
H. Lower part, floor of the cage which will be the point of attachment between cages.
I. Structure of any format and made with any material to achieve the desired structure for creating the technical viability of the cage.
J. Point of hooking to enable hooking the cables letter C with letter B and being moved and placed by letter A.
K. Point of hooking to enable hooking the cables letter C with letter B and being moved and placed by letter A.

**Figure 50.-** Shows a representation of the front view of the semicircular design of a cage, case, box for the storage, safekeeping, protection of alloys in mesh, roll, sphere, packet, capsule formats.

A. Telescopic crane which can move the cage to any location with the content of the alloys with the safety properties incorporated therein.
B. Hooking between the cable system, the cage and the telescopic crane.
C. Cables for fastening and for moving the cages.
D. Point of hooking to enable hooking the cables letter C with letter B and being moved and placed by letter A.
E. Point of hooking, Connection between cages laterally, horizontally, at the top and at the bottom, having these points to achieve the exact and secure placement of the cages with respect to one another the same as letters D and K.
F. Structure of any format and made with any material to achieve the desired structure for creating the technical viability of the cage.
G. Rolls of mesh containing the alloy with which said cage has been created to enable using a large amount of alloys and achieve their physical and integral protection to be used in any location, but particularly inside fuel tanks such as those referred to as jumbo tanks.
H. Lower part, floor of the cage which will be the point of attachment between cages.
I. Structure of any format and made with any material to achieve the desired structure for creating the technical viability of the cage.
J. Point of hooking to enable hooking the cables letter C with letter B and being moved and placed by letter A.
K. Point of hooking to enable hooking the cables letter C with letter B and being moved and placed by letter A.

**Figure 51.-** Shows a representation of the front view of the rectangular design with sections for pipes and external cables of a cage, case, box, for the storage, safekeeping, protection of alloys in mesh, roll, sphere, packet, capsule formats.

A. Ducts, pipes for any liquid, gas, fluid.
B. Duct, ducting for any type of cables
C. Structure adapted to enable incorporating any type of cables or ducting so that the invention, cage can surround, protect any type of duct but at the same time maintain the necessary dimensions, therefore it is possible to add, attach other cages on any side, on the top, lower area according to design requirements.
D. Point of hooking to enable moving, lifting the cage and at the same time serving as a point of fastening and anchoring between several cages.
E. Point of hooking to enable moving, lifting the cage and at the same time serving as a point of fastening and anchoring between several cages.
F. Structure of any format and made with any material to achieve the desired structure for creating the technical viability of the cage.
G. Structure adapted to enable incorporating any type of cables or ducting so that the invention, cage can surround, protect any type of duct but at the same time maintain the necessary dimensions, therefore it is possible to add, attach other cages on any side, on the top, lower area according to design requirements.
H. Lower part, floor of the cage which will be the point of attachment between cages.
I. Structure of any format and made with any material to achieve the desired structure for creating the technical viability of the cage.
J. Point of hooking to enable hooking the cables letter C with letter B and being moved and placed by letter A.
K. Point of hooking to enable moving, lifting the cage and at the same time serving as a point of fastening and anchoring between several cages.
L. Point of hooking to enable moving, lifting the cage and at the same time serving as a point of fastening and anchoring between several cages.

**Figure 52.-** Shows an aerial representation of the location of a number of cages, cases which are all filled with rolls of alloys, seeing that the exact location of said cages can be in a rectangular, square and semicircular format, depending on the final location area.

A. Outer wall which demarcates the space for surrounding the object of protection, in this case a fuel tank referred to with letter B.
B. Aerial image of a fuel tank which is surrounded by the cages of the invention.
C. Wall of the fuel tank circular in shape.
D. Rectangular type cages and points of connection, joining between cages inside the perimeter between letter A and B.
E. Cages attached to the fuel tank letter B in semicircular shape.

**Figure 53.-** Shows a representation of the front/lateral view of a cage with a square design which has located therein a roll of alloy in mesh form.

A. Alloy in roll of mesh form.
B. Point of anchoring for cable systems and for the safe attachment, connection systems between cages
C. Point of anchoring for cable systems and for the safe attachment, connection systems between cages
D. Structure of any format and made with any material to achieve the desired structure for creating the technical viability of the cage.

**Figure 54.-** Shows a representation of the joining between the panels in the corner sections.

1.- Inner layer of protection by means of the binding, mixing, composition of all types of alloys to achieve technical, structural, physical properties, including and not limited to anti-electromagnetic, anti-static, anti-thermal, heatproof, anti-acoustic properties, etc.
2.- Filling with layers of any material of organic and/or inorganic origin.
3.- Layer of the interior panel for fastening the system of panels of the invention.
4.- Layer of protection, blocking, dissipating of all types of frequencies, waves, vibrations.
5.- Layer for fastening, protecting and increasing of the level of blocking to support point 4.
6.- Filling, interior area which can be manufactured by filling with any material of an organic, Inorganic origin with technical, physical, structural properties for carrying out the invention in a uniform manner to achieve the highest possible operating properties.
7.- Interior section which can be a layer of cloth, material with technical, anti-frequency, anti-wave, anti-electromagnetic properties and/or with properties of fastening, filling, solidifying structures without being limited to any use and/or application in this invention.
8.- Interior coverage, protection for being used to increase firmness of the panel, invention and at the same time being able to be used as an interior layer for receiving paint, aesthetic decorations, etc.
9.-Section incorporated in the interior structural part of the panel of the invention which is externally protected by means of number 12 and internally protected by means of number 2.

10.- Point of joining between straight panels rectos at an angular point, corner to enable being joined together by means of the using adhesive, glue systems, screws, screws made of polymers, of organic, nanotechnological products and or materials, with anti-electromagnetic properties, where this point of joining between the sections of the panel of the invention is not limiting.

11.- Gasket of the inner panel to additionally enable adding automation systems, sensors, detectors for collecting, analysing, validating, levels of all types of frequencies, waves, thermal variations, heat variations, vibrations, structural variations, etc.

12.- Fastening coverage panel similar to point 5 for being used to increase rigidity, unity, composition, level of protection of the panel of the invention and its technical qualities.

13.-Outer layer acting as an outer layer means, with corners, angular, straight to enable protecting, being moulded to all the panels of the invention with physical properties to enable increasing rigidity, unity, protection, technical levels, blocking, dissipating all types of waves, frequencies.

14.- Point of joining between section 13 and the outer part of the panel to achieve a physical and structural joining of the invention in an angular, straight form or according to the design of this section of joining between panels, barriers with properties highlighted in this invention.

15.- Point of joining between sections 13, 14 and the outer part of the panel to achieve a physical and structural joining of the invention.

**Figure 55.-** Shows a representation of the joining between the panels in the corner sections.

1.- Inner layer of protection by means of the binding, mixing, composition of all types of alloys to achieve technical, structural, physical properties, including and not limited to anti-electromagnetic, anti-static, anti-thermal, heatproof, anti-acoustic properties, etc.

2.- Filling with layers of any material of organic and/or inorganic origin.

3.- Layer of the interior panel for fastening the system of panels of the invention.

4 - Layer of protection, blocking, dissipating of all types of frequencies, waves, vibrations.

5.- Layer for fastening, protecting and increasing of the level of blocking to support point 4.

8.- Inner coverage, protection for being used to increase firmness of the panel, invention and at the same time being able to be used as an interior layer for receiving paint, aesthetic decorations, etc.

11.- Gasket of the panel interior to also enable adding automation systems, sensors, detectors for collecting, analysing, validating, levels of all types of frequencies, waves, thermal variations, heat variations, vibrations, structural variations, etc.

12.- Fastening coverage panel similar to point 5 for being used to increase rigidity, unity, composition, level of protection of the panel of the invention and its technical qualities.

13.-Outer layer acting as an outer layer means, with corners, angular, straight to enable protecting, being moulded to all the panels of the invention with physical properties to enable increasing rigidity, unity, protection, technical levels, blocking, dissipating all types of waves, frequencies.

14.- Point of joining between section 13 and the outer part of the panel to achieve a physical and structural joining of the invention in an angular, straight form or according to the design of this section of joining between panels, barriers with properties highlighted in this invention.

15.- Point of joining between sections 13, 14 and the outer part of the panel to achieve a physical and structural joining of the invention.

**Figure 56.-** Shows a representation of the joining between the panels in the corner sections.

1.- Inner layer of protection by means of the binding, mixing, composition of all types of alloys to achieve technical, structural, physical properties, including and not limited to anti-electromagnetic, anti-static, anti-thermal, heatproof, anti-acoustic properties, etc.

2.- Filling with layers of any material of organic and/or inorganic origin.

3.- Layer of the interior panel for fastening the system of panels of the invention.

5.- Layer for fastening, protecting and increasing of the level of blocking to support point 4.

7.- Interior section which can be a layer of cloth, material with technical, anti-frequency, anti-wave, anti-electromagnetic properties and/or with properties of fastening, filling, solidifying structures without being limited to any use and/or application in this invention.

12.- Fastening coverage panel similar to point 5 for being used to increase rigidity, unity, composition, level of protection of the panel of the invention and its technical qualities.

13.-Outer layer acting as an outer layer means, with corners, angular, straight to enable protecting, being moulded to all the panels of the invention with physical properties to enable increasing rigidity, unity, protection, technical levels, blocking, dissipating all types of waves, frequencies.

15.- Point of joining between sections 13, 14 and the outer part of the panel to achieve a physical and structural joining of the invention.

30.-Point of joining to the section for joining, cushioning, fastening the invention in this form, design for corner, angular locations for the incorporation, joining, fastening of the panels of the invention.

**Figure 57.-** Shows a representation of the panels joined together and creating the formation of the protection barrier.

16.-Outer layer of the panel of the invention which can be incorporated inside a rigid, flexible, movable, semi-rigid structure, the application or integration thereof not be limited.

17.- Outer layer of the panel of the invention which can be incorporated inside a rigid, flexible, movable, semi-rigid structure, the application or integration thereof not be limited as described in number 16.

18.-Inner layer having technical and/or structural properties to achieve the protection, dissipation, removal, blocking, reduction, of all types of waves, frequencies, acoustic, thermal, shock, heat waves, etc.

19.-Anti-electromagnetic panel and/or panel with any type of technical property previously described which can be filled, mixed, attached, incorporated to any organic, inorganic material, substance, metal, polymers without any limitation of use, amount and/or final application.

20.-Outer/inner layer according to the location of the panel with the technical properties of the invention and with the possibility of being used for decoration on the outer/inner part thereof according to the final location of the panel of the invention.

21.-Male tab of the panel of the invention which could be physically attached and/or attached with the help of adhesive substances, such as glues, magnets, fabrics, cloths, chemical products, physical systems, etc.

22.-Female slot of the panel of the invention which could be physically attached and/or attached with the help of adhesive substances, such as glues, magnets, fabrics, cloths, chemical products, physical systems, etc.

23.-System of mechanical, adhesive joining, and/or by means of physical joining system to increase the level of joining, fastening, operative closure, integrity of the invention in its structural incorporation, joining, integration in a fixed, flexible, movable, semi-flexible medium, etc.

**Figure 58**.- Shows a representation of the panels joined together and creating the formation of the protection barrier

24.-Filling section with technical properties of the invention previously described.

25.- Filling section with technical properties of the invention previously described with technical properties of the anti-electromagnetic, thermal, acoustic type, etc.

26.-Layer having properties of binding the panel with the possibility of the integration of layers, sections, fillings with materials, alloys, chemical, metallic, organic, inorganic compositions, substances, without a limitation of compositions and/or of their placement inside the panel of the invention.

27.-Engagement of the male -female joining system with the possibility and without the physical limitation of increased support for this point of engagement by means of adhesion systems using chemical substances, compositions, glue systems, and/or using mechanical joining systems.

28.-Inner part of the system of male -female joining system with the possibility and without limitation of supporting this point of engagement-joining by means of systems of adhesion using chemical substances, compositions, glue systems, and/or using mechanical joining systems.

29.-Head of the section for joining the panels in a mechanical, physical manner and with the possibility of supporting, fastening by means of organic adhesive systems, compositions, formulations with and without the adhesive support referenced in numbers 27 and 28.

**Figure 59.-** Shows a representation of the joining between the panels in the corner sections.

1.- Inner layer of protection by means of the binding, mixing, composition of all types of alloys to achieve technical, structural, physical properties, including and not limited to anti-electromagnetic, anti-static, anti-thermal, heatproof, anti-acoustic properties, etc.

2.- Filling with layers of any material of organic and/or inorganic origin.

3.- Layer of the interior panel for fastening the system of panels of the invention.

5.- Layer for fastening, protecting and increasing of the level of blocking to support point 4.

7.- Interior section which can be a layer of cloth, material with technical, anti-frequency, anti-wave, anti-electromagnetic properties and/or with properties of fastening, filling, solidifying structures without being limited to any use and/or application in this invention.

12.- Fastening coverage panel similar to point 5 for being used to increase rigidity, unity, composition, level of protection of the panel of the invention and its technical qualities.

13.-Outer layer acting as an outer layer means, with corners, angular, straight to enable protecting, being moulded to all the panels of the invention with physical properties to enable increasing rigidity, unity, protection, technical levels, blocking, dissipating all types of waves, frequencies.

15.- Point of joining between sections 13, 14 and the outer part of the panel to achieve a physical and structural joining of the invention.

16.-Male-female connection incorporated inside the panel for joining the panels and at the same time for being able to create a blocking, protection system against electromagnetic fields based on Faraday operating technology and systems

17.-Male-female connection incorporated inside the panel for joining the panels and at the same time for being able to create a blocking, protection system against electromagnetic fields based on Faraday operating technology and systems.

30.-Point of joining to the section for joining, cushioning, fastening the invention in this form, design for corner, angular locations for the incorporation, joining, fastening of the panels of the invention.

**Figure 60.-** Shows a representation of the side image in which there can be visually seen the connection system for being able to connect cables, wires, mesh reinforcement, mesh, electrical, electromagnetic conductors in a panel.

A. Construction panel filled with anti-electromagnetic alloys in mesh, sphere format or of any other design to achieve the functionality of this invention and adding an unlimited number of male-female connections laterally, vertically, horizontally to achieve the blocking of waves of any type including, thermal, shock, electromagnetic, acoustic waves.

B. Construction panel filled with anti-electromagnetic alloys in mesh, sphere format or of any other design to achieve the functionality of this invention and adding an unlimited number of male-female connections laterally, vertically, horizontally to achieve the blocking of waves of any type including, thermal, shock, electromagnetic, acoustic waves,

C Pre-cable connection, wire, mesh and/or with electrical current transmitting properties, and even for the blocking, protection of any type of wave, particularly electromagnetic waves

D. Pre-cable connection, wire, mesh and/or with electrical current transmitting properties, and even for the blocking, protection of any type of wave, particularly electromagnetic waves

E. Male-female connection

F. Male-female connection

G. Particles, fibres, hairs, cloths, which project into the panel in any direction or in any format or number which, when joining panel A with panel B it connects, increases the joining of the anti-electromagnetic alloys to enable achieving a unit, panel, object that is as physically, chemically and operatively interconnected as possible to enable creating a wall with properties which are, in addition to anti-electromagnetic, also fire retardant, anti-acoustic, anti-thermal,...

**Figure 61.-**Shows the three-dimensional side representation in which the laterally introduced male-female interconnection system can be observed.

A. Construction panel filled with anti-electromagnetic alloys in mesh, sphere format or of any other design to achieve the functionality of this invention and adding an unlimited number of male-female connections laterally, vertically, horizontally to achieve the blocking of waves of any type including, thermal, shock, electromagnetic, acoustic waves.

B. Construction panel filled with anti-electromagnetic alloys in mesh, sphere format or of any other design to achieve the functionality of this invention and adding an unlimited number of male-female connections laterally, vertically, horizontally to achieve the blocking of waves of any type including, thermal, shock, electromagnetic, acoustic waves.

C. Male-female connection for internal and/or external, interior lateral connection according to the final design.

D. Wiring, mesh, cable, mesh reinforcement with properties of transmitting and/or blocking all types of waves, and particularly electromagnetic waves

E. Male-female connection for internal and/or external, interior lateral connection according to the final design.

F. Particles, fibres, hairs, cloths, which project into the panel in any direction or in any format or number which, when joining panel A with panel B it connects, increases the joining of the anti-electromagnetic alloys to enable achieving a unit, panel, object that is as physically, chemically and operatively interconnected as possible to enable creating a wall with properties which are, in addition to anti-electromagnetic, also fire retardant, anti-acoustic, anti-thermal,...

**Figure 62**.-Shows a representation of the panels joined together and creating the formation of the protection barrier.

16.-Outer layer of the panel of the invention which can be incorporated inside a rigid, flexible, movable, semi-rigid structure, the application or integration thereof not be limited.
17.- Outer layer of the panel of the invention which can be incorporated inside a rigid, flexible, movable, semi-rigid structure, the application or integration thereof not be limited as described in number 16.
18.-Inner layer having technical and/or structural properties to achieve the protection, dissipation, removal, blocking, reduction, of all types of waves, frequencies, acoustic, thermal, shock, heat waves, etc.
19.-Anti-electromagnetic panel and/or panel with any type of technical property previously described which can be filled, mixed, attached, incorporated to any organic, inorganic material, substance, metal, polymers without any limitation of use, amount and/or final application.
20.-Outer/inner layer according to the location of the panel with the technical properties of the invention and with the possibility of being used for decoration on the outer/inner part thereof according to the final location of the panel of the invention.
21.-Male tab of the panel of the invention which could be physically attached and/or attached with the help of adhesive substances, such as glues, magnets, fabrics, cloths, chemical products, physical systems, etc.
22.-Female slot of the panel of the invention which could be physically attached and/or attached with the help of adhesive substances, such as glues, magnets, fabrics, cloths, chemical products, physical systems, etc.
23.-System of mechanical, adhesive joining, and/or by means of physical joining system to increase the level of joining, fastening, operative closure, integrity of the invention in its structural incorporation, joining, integration in a fixed, flexible, movable, semi-flexible medium, etc.
24.-Male-female connection in an integral, lateral manner to achieve the connection, joining of cables, mesh, circuits, and thus achieving the removal, blocking, protection against any type of electromagnetic wave.
25.-Male-female connection in an integral, lateral manner to achieve the connection, joining of cables, mesh, circuits, and thus achieving the removal, blocking, protection against any type of electromagnetic wave.

**Figure 63.-** Shows a representation of the panels joined together and creating the formation of the protection barrier.

24.-Filling section with technical properties of the invention previously described.
25.- Filling section with technical properties of the invention previously described with technical properties of the anti-electromagnetic, thermal, acoustic type, etc.
26.-Layer having properties of binding the panel with the possibility of the integration of layers, sections, fillings with materials, alloys, chemical, metallic, organic, inorganic compositions, substances, without a limitation of compositions and/or of their placement inside the panel of the invention.
27.-Engagement of the male -female joining system with the possibility and without the physical limitation of increased support for this point of engagement by means of adhesion systems using chemical substances, compositions, glue systems, and/or using mechanical joining systems.
28.-Inner part of the system of male -female joining system with the possibility and without limitation of supporting this point of engagement-joining by means of systems of adhesion using chemical substances, compositions, glue systems, and/or using mechanical joining systems.
29.-Head of the section for joining the panels in a mechanical, physical manner and with the possibility of supporting, fastening by means of organic adhesive systems, compositions, formulations with and without the adhesive support referenced in numbers 27 and 28.
30.-Male-female connection in an integral, lateral manner to achieve the connection, joining of cables, mesh, circuits, and thus achieving the removal, blocking, protection against any type of electromagnetic wave.
31.-Male-female connection in an integral, lateral manner to achieve the connection, joining of cables, mesh, circuits, and thus achieving the removal, blocking, protection against any type of electromagnetic wave.

**Figure 64.-** Shows a representation of the fastening device for all types of panels, preferably, of materials for the covering, protection, construction insulation, mainly for edifications, bunkers, safety rooms, of the type made up of a series of longitudinal and transverse profiles forming the structure of the building, chamber, room, bunker itself.

1.-first part having a larger section than the other two, which is press fit onto a metallic profile (4) in an appropriate form, said parts are manufactured and filled with metals, alloys, minerals for the transmission and/or of reduction, removal, blocking of any type of waves for creating a "Faraday" type protection system on which it has been previously arranged in the previous panel, such that the wiring, cables, mesh, alloys are trapped between the profile (4) and the part.

2.-a second part (2) having a smaller section than the first part (1) on which it is press fit, where there were previously placed the fabric and a third part (3) which is also press fit, exactly, on the free upper section of the second part (2), this third part being the part which fixes the entire assembly of the device so that it cannot be moved or extracted from the panel, brick, roofing tile, material, cloth, alloy accidentally.

3.-the third part (3) has a hole (31) which goes through the entire length of said part (3), such that it allows introducing an element for the extraction thereof. It has a series of lateral teeth (32) with metallic/plastic properties which fit tightly with plastic/metallic teeth (22) of the inner part of the second part (2).

4.-metallic profile (4) has a shape such that it fits with the part (1), introducing it inside the profile (4) and the part (1) the panel, part, material format for construction, with properties for the protection, blocking, removal of any type of waves, including electromagnetic waves.

**Figure 65**.-Shows a representation of the panel for anti-electromagnetic, fire retardant, acoustic, thermal insulation for facades, walls, partitions, barriers, dividers, separators on the outside and/or inside having a coating, filled with alloys with said properties according to P201130628, P201330057, U201330074, manufactured with metals, alloys, cloths that are expanded or any other type of format, where it can be manufactured by moulding or machining, of the type which is grooved by main channels.

1.- Panel (1) for anti-electromagnetic, fire retardant, acoustic, thermal insulation for facades, walls, partitions, barriers, dividers, separators on the outside and/or inside having a coating, filled with alloys with said properties according to P201130628, P201330057, U201330074, manufactured with metals, alloys, cloths that are expanded or any other type of format, where it can be manufactured by moulding or machining, of the type which is grooved by main channels.

2.- manufactured by moulding or machining, of the type which is grooved by main channels (2) in which the ribs (9) of the tiles are housed.

3.- manufactured by moulding or machining, of the type which is grooved by main channels (2) in which the ribs (9) of the tiles (7) are housed, panels, or ceramic plates (6) plus the adhesive cement (5), plaster, cement, gypsum, materials of a recyclable origin, including polymers, inorganic and organic fibres enclosing them, and characterised in that it is furthermore configured with other secondary channels (3).

4 - between the panel and the parts of construction materials, such as gypsum, plaster, cements, ceramics, and in that projections (4) emerge from the side faces of the main channels (2) in the form of devices for holding the tiles, panels and/or ceramic plates aligned with the insulating panel during the adhesive cement setting time.

**Figure 66.-** Shows a representation of the panel (1) for anti-electromagnetic, fire retardant, acoustic, thermal insulation for facades, walls, partitions, barriers, dividers, separators on the outside and/or inside having a coating filled with alloys with said properties, manufactured with metals, alloys, cloths that are expanded or any other type of format, where it can be manufactured by moulding or machining, of the type which is grooved by main channels.

1.-Panel (1) for anti-electromagnetic, fire retardant, acoustic, thermal insulation for facades, walls, partitions, barriers, dividers, separators on the outside and/or inside having a coating, filled with alloys with said properties according to P201130628, P201330057, U201330074, manufactured with metals, alloys, cloths that are expanded or any other type of format, where it can be manufactured by moulding or machining, of the type which is grooved by main channels.

5.-Ceramics plus the adhesive cement (5).

6.-Plates (6).

9.- Manufactured by moulding or machining, of the type which is grooved by main channels (2) in which the ribs (9) are housed.

**Figure 67.-**

5.-Ceramics plus the adhesive cement (5).

6.-Plates (6).

**Figure 68.-**

1.-Panel (1) for anti-electromagnetic, fire retardant, acoustic, thermal insulation for facades, walls, partitions, barriers, dividers, separators on the outside and/or inside having a coating, filled with alloys with said properties according to P201130628, P201330057, U201330074, manufactured with metals, alloys, cloths that are expanded or any other type of format, where it can be manufactured by moulding or machining, of the type which is grooved by main channels.

7.-Tiles (7).

9.- Manufactured by moulding or machining, of the type which is grooved by main channels (2) in which the ribs (9) are housed.

**Figure 69.-** Shows the representation of the insulation panel creating a protection barrier with tiles.

5.-Ceramics plus the adhesive cement (5).

7.-Tiles (7).

**Figure 70.-**

10.-Panel (1.2) for anti-electromagnetic, fire retardant, acoustic, thermal insulation for facades, walls, partitions, barriers, dividers, separators on the outside and/or inside according to claim 1, characterised in that one of its edges is channeled (10).

12.-Panel (1) for anti-electromagnetic, fire retardant, acoustic, thermal insulation for facades, walls, partitions, barriers, dividers, separators on the outside and/or inside having a coating, filled with alloys with said properties according to P201130628, P201330057, U201330074, manufactured with metals, alloys, cloths that are expanded or any other type of format, where it can be manufactured by moulding or machining, of the type which is grooved by main channels.

## Claims

**1.** Alloyed body in a laminar or other format, which eliminates all types of vaporisation and emission, **characterised by** forming cloths of perforated material, that are provided by at least one arc having a plurality of polygonal openings, and at least one of said polygonal openings being irregular with respect to at least one contiguous polygonal opening and having a surface area per unit of volume that is approximately 3,500 times the contact surface of any flammable fluids contacted, the alloyed body having a heat conduction capacity of at least approximately 0.020 cal/ cm-s.

**2.** Alloyed body, according to the first claim, **characterised in that** the inner peripheral length of at least one of said openings, differs from the peripheral length of at least one contiguous opening.

**3.** Alloyed body, according to claim 2, **characterised by** its incorporation, mixture, application in all types of materials, textiles, construction, minerals, protection and safety, wherein the material has a density ranging from 2.8 g/cm3 to approximately 19.5 g/em3.

**4.** Alloyed body, according to claim 3, **characterised by** its incorporation, mixture, application in all types of materials, textiles, construction, minerals, protection and safety, wherein it has a spheroidal or cylindrical shape.

**5.** Alloyed body, according to claim 4, **characterised in that** its incorporation in tanks reduces the thickness thereof to 1.7mm or lower, preventing explosion even when exceeding 100 bar.

**6.** Alloyed body, according to claim 5, **characterised by** its incorporation, mixture, application in all types of materials, textiles, construction, minerals, protection and safety, wherein the sheet or sheets have a compression field no greater than 7%.

**7.** Alloyed body, according to claim 6, **characterised by** its incorporation, mixture, application in all types of materials, textiles, construction, minerals, protection and safety, wherein the sheet or sheets produce a fuel reduction of 50%-65%.

**8.** Alloyed body, according to claim 7, **characterised by** its incorporation, mixture, application in all types of materials, textiles, construction, minerals, protection and safety, wherein it has a weight is 27 to 33 grams per litre of the alloyed body.

**9.** Alloyed body, according to claim 8, **characterised by** being able to have many shapes and manners concerning the design, manufacture of, mineral, metal, organic, inorganic, nanotechnological material, having a design of the alloyed body which only occupies a volume of 0.9% in a net format or in a mesh format and a volume of up to 1.4% in a ball or sphere format.

**10.** Alloyed body, according to claim 9, **characterised by** being able to have said many shapes and manners concerning the design, manufacture of, mineral, metal, organic, inorganic, nanotechnological material, having a design of the alloyed body in which at exposure to temperatures greater than 1200°C, the deposits do not sustain structural loss.

**11.** Alloyed body, according to claim 10, **characterised by** entailing the increase of the alloy in its design and of the materials used and installed which act as an antistatic galvanic anode.

**12.** Alloyed body, according to claim 11, **characterised in that** the melting temperature of the material components is between 650°C and 1054°C.

**13.** Alloyed body, according to claim 12, **characterised by** its incorporation, mixture, application in all types of materials, textiles, construction, minerals, protection and safety, wherein the sheet or sheets have a 100% gaseous pollutant filtering performance.

**14.** Alloyed body, according to claim 13, **characterised by** entailing the increase of the alloy in its design and of the materials used and installed which act by solving the freezing of the tanks, energy loss and power loss.

2
2
1

Figure 1

1

Figure 2

10
T
4
P
P
12
14
12
12
12
12
14
14
14
5
5
4
12
14
12
14
14
12
14
12
P
P
P
P
P

Figure 3

10
12
12
14
14
12
12

Figure 4

10
12
12
12
12
14
14
14

Figure 5

T
7
7
20
22
22
22

Figure 6

22
22
20

Figure 7

9
22c
22b
22a
22e
22d
22
22
22f
9
20

Figure 8

22
22b
22a
22c
22f
20

Figure 9

11
12
12
11
22
42
40
42

Figure 10

40
22
22

Figure 11

40
42

Figure 12

100

Figure 13

B
C
D
E
A
F

Figure 14

A
D
C
B
C

Figure 15

A
A

Figure 16A

A

E
A
C
B
E
D

Figure 17

B
J
K
I
Exchanger
H
Fumes
A
H2O
C
Neutralizer
E
D
Thickener
L
F
G

Figure 18

Figure 19

E
C
D
B
A

Figure 20

C
D
A
B
E

Figure 21A

Figure 21B

Figure 21C

D
C
E
B
A

Figure 22

2
1

Figure 23

2
3

Figure 24

Figure 25

Figure 26

Figure 27

A
E
C
D
D
F
B

Figure 28

A
B
D
D
C
A
B
D
C
E
A
B
E
D
C

Figure 29A

Figure 29B

Figure 29C

C
D
A
E
F
G
B

Figure 30

Figure 31

A
B
C
D
E
F
G

Figure 32

G
E
B
I
A
H
J
F
K
C
L
D

Figure 33

F
B
H
G
A
I
E
D
C

Figure 34

B
G
E
H
I
A
J
F
C/D

Figure 35

A
B
C
D
E
F

Figure 36

A

Figure 37

A
+
B
+
C
+
D
+
E

Figure 38

A
+
B
+
C
+
D
+
D
+
C
+
B
+
A

Figure 39

Figure 40

Figure 41

Figure 42

Figure 43

E
A
D
B
E
C

E
A
D
B
E
C

Figure 44

A

Figure 45

C
I
B
A
H
D
E
G
F

Figure 46

C
B
A
H
D
E
G
F

Figure 47

C
B
A
E
D
F

Figure 48

A
B
C
L
J
D
F
I
H
K
G
E

Figure 49

A
B
C
L
J
D
F
I
H
K
G
E

Figure 50

L
J
D
J
F
K
H
C
A
B
G
E

Figure 51

A
B
C
D
E

Figure 52

C
D
A
B

Figure 53

2
1
2
3
3
5
12
4
7
9
15
10
14
13
11
10
9
8
2
3
6
2
1
3

Figure 54

2
5
4
3
15
14
13
1
2
12
7
11
2
2
11
8
1
2
3

Figure 55

1
5
3
15
13
30
12
7
2
2
1
2
3

Figure 56

20
19
22
23
20
19
18
18
19
20
16
21
23
20
17

Figure 57

26
27
24
29
27
28
25

Figure 58

17
16
2
5
4
3
15
14
13
1
2
12
7
11
2
2
11
8
1
2
3

Figure 59

A
B
F
C
E
D
G
F
C
D


Figure 60

B
C
A
F
E
D
D
E
F
F
C

Figure 61

20
19
22
24
23
20
19
18
18
19
20
16
21
25
23
20
17

Figure 62

26
30
31
27
24
29
27
28
25

Figure 63

3
2
1
4

Figure 64

1
2
3
8
A
B

Figure 65

9
1
6
5

Figure 66

5
6
1

Figure 67

9
1
7

Figure 68

7
5
1

Figure 69

12
10

Figure 70

# INTERNATIONAL SEARCH REPORT

International application No.
PCT/ES2016/070425

A. CLASSIFICATION OF SUBJECT MATTER

***B01D39/10*** (2006.01)

According to International Patent Classification (IPC) or to both national classification and IPC

B. FIELDS SEARCHED

Minimum documentation searched (classification system followed by classification symbols)
B01D

Documentation searched other than minimum documentation to the extent that such documents are included in the fields searched

Electronic data base consulted during the international search (name of data base and, where practicable, search terms used)

EPODOC, INVENES, WPI

C. DOCUMENTS CONSIDERED TO BE RELEVANT

| Category* | Citation of document, with indication, where appropriate, of the relevant passages | Relevant to claim No. |
|---|---|---|
| X | ES 2524013 A2 (TECHNOKONTROL CAT GLOBAL SL TECHNOKONTROL-CAT GLOBAL SL) 03/12/2014, the whole document. | 1-14 |
| X | ES 1084806U U (TECHNOKONTROL CAT GLOBAL SL) 11/07/2013, the whole document. | 1-14 |
| X | US 6089325 A (YASSIN ALHAMAD SHAIKH GHALEB M) 18/07/2000, claims; abstract; figures. | 1-14 |
| X | ES 2390438 A1 (JUMPTUNE LTD ET AL.) 13/11/2012, the whole document. | 1-14 |
| X | US 2009184504 A1 (GREENWOOD GEORGE ET AL.) 23/07/2009, claims; abstract; figures. | 1-14 |

☒ Further documents are listed in the continuation of Box C. ☒ See patent family annex.

* Special categories of cited documents:

"A" document defining the general state of the art which is not considered to be of particular relevance.

"E" earlier document but published on or after the international filing date

"L" document which may throw doubts on priority claim(s) or which is cited to establish the publication date of another citation or other special reason (as specified)

"O" document referring to an oral disclosure use, exhibition, or other means.

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other documents , such combination being obvious to a person skilled in the art

"&" document member of the same patent family

| Date of the actual completion of the international search | Date of mailing of the international search report |
|---|---|
| 24/02/2017 | **(27/02/2017)** |
| Name and mailing address of the ISA/<br><br>OFICINA ESPAÑOLA DE PATENTES Y MARCAS<br>Paseo de la Castellana, 75 - 28071 Madrid (España)<br>Facsimile No.: 91 349 53 04 | Authorized officer<br>R. Reyes Lizcano<br><br>Telephone No. 91 3495527 |

Form PCT/ISA/210 (second sheet) (January 2015)

## INTERNATIONAL SEARCH REPORT

International application No. PCT/ES2016/070425

| C (continuation). DOCUMENTS CONSIDERED TO BE RELEVANT | | |
|---|---|---|
| Category * | Citation of documents, with indication, where appropriate, of the relevant passages | Relevant to claim No. |
| A | EP 1008497 A1 (NIPPON KAYAKU KK ET AL.) 14/06/2000, paragraphs [0010 - 0033]; figures. | 1-14 |
| A | EP 0543075 A1 (KANTHAL GMBH) 26/05/1993, column 4, line 3 - column 6, line 1; figures. | 1-14 |

Form PCT/ISA/210 (continuation of second sheet) (January 2015)

## INTERNATIONAL SEARCH REPORT

Information on patent family members

International application No.
PCT/ES2016/070425

| Patent document cited in the search report | Publication date | Patent family member(s) | Publication date |
|---|---|---|---|
| ES2524013 A2 | 03.12.2014 | NONE | |
| ES1084806U U | 11.07.2013 | ES1084806Y Y | 08.10.2013 |
| US6089325 A | 18.07.2000 | US6054088 A | 25.04.2000 |
| | | US6116347 A | 12.09.2000 |
| | | US5738175 A | 14.04.1998 |
| | | US5845715 A | 08.12.1998 |
| | | US2001042628 A1 | 22.11.2001 |
| | | US6412567 B2 | 02.07.2002 |
| | | US5207756 A | 04.05.1993 |
| | | US5402852 A | 04.04.1995 |
| | | US5794707 A | 18.08.1998 |
| | | US2004018340 A1 | 29.01.2004 |
| | | US5097907 A | 24.03.1992 |
| | | US5871857 A | 16.02.1999 |
| | | US5142755 A | 01.09.1992 |
| | | US5095597 A | 17.03.1992 |
| | | US6216791 B1 | 17.04.2001 |
| | | US6117062 A | 12.09.2000 |
| | | US5794706 A | 18.08.1998 |
| | | US2001001986 A1 | 31.05.2001 |
| | | US6349774 B2 | 26.02.2002 |
| | | US5816332 A | 06.10.1998 |
| | | US5788110 A | 04.08.1998 |
| | | US5638662 A | 17.06.1997 |
| | | US5652066 A | 29.07.1997 |
| | | US5576511 A | 19.11.1996 |
| | | US5001017 A | 19.03.1991 |
| | | US5575339 A | 19.11.1996 |
| | | US5563364 A | 08.10.1996 |
| | | US6699563 B1 | 02.03.2004 |
| | | US5540285 A | 30.07.1996 |
| | | US5500037 A | 19.03.1996 |
| | | US6105676 A | 22.08.2000 |
| | | US6062316 A | 16.05.2000 |
| | | US5297416 A | 29.03.1994 |
| | | JPH02249563 A | 05.10.1990 |
| | | JP2650447B B2 | 03.09.1997 |
| | | GR3036055T T3 | 28.09.2001 |
| | | GR3023779T T3 | 30.09.1997 |
| | | GR940300020T T1 | 29.04.1994 |
| | | ES2162803T T3 | 16.01.2002 |
| | | ES2157209T T3 | 16.08.2001 |
| | | ES2048705T T1 | 01.04.1994 |
| | | ES2048705T T3 | 16.07.1997 |
| | | EP0560465 A2 | 15.09.1993 |
| | | EP0560465 A3 | 19.01.1994 |
| | | EP0558163 A2 | 01.09.1993 |
| | | EP0558163 A3 | 19.01.1994 |
| | | EP0377397 A2 | 11.07.1990 |

Form PCT/ISA/210 (patent family annex) (January 2015)

**INTERNATIONAL SEARCH REPORT**

Information on patent family members

International application No.
PCT/ES2016/070425

| Patent document cited in the search report | Publication date | Patent family member(s) | Publication date |
|---|---|---|---|
| | | EP0377397 A3 | 05.09.1990 |
| | | DE377397T T1 | 28.04.1994 |
| | | DE68929325T T2 | 13.03.2003 |
| | | DE68929291T T2 | 31.10.2001 |
| | | DE68927879T T2 | 09.10.1997 |
| | | AT205738T T | 15.10.2001 |
| | | AT200634T T | 15.05.2001 |
| | | AT150327T T | 15.04.1997 |
| ES2390438 A1 | 13.11.2012 | NONE | |
| US2009184504 A1 | 23.07.2009 | HUE028752T T2 | 28.12.2016 |
| | | ES2566384T T3 | 12.04.2016 |
| | | JP2015164727 A | 17.09.2015 |
| | | JP6046762B B2 | 21.12.2016 |
| | | EP2985065 A1 | 17.02.2016 |
| | | EP2985067 A1 | 17.02.2016 |
| | | CN104606981 A | 13.05.2015 |
| | | CN104606981B B | 07.09.2016 |
| | | JP2014144455 A | 14.08.2014 |
| | | JP5844836B B2 | 20.01.2016 |
| | | JP2014004630 A | 16.01.2014 |
| | | JP5730962B B2 | 10.06.2015 |
| | | JP2012520767 A | 10.09.2012 |
| | | CN102672036 A | 19.09.2012 |
| | | CN102672036B B | 02.12.2015 |
| | | KR20120066052 A | 21.06.2012 |
| | | KR101191521B B1 | 15.10.2012 |
| | | US2012067015 A1 | 22.03.2012 |
| | | KR20120000092 A | 03.01.2012 |
| | | CN102355932 A | 15.02.2012 |
| | | CN102355932B B | 11.02.2015 |
| | | EP2441628 A1 | 18.04.2012 |
| | | JP2010504218 A | 12.02.2010 |
| | | JP4759087B B2 | 31.08.2011 |
| | | JP2011156591 A | 18.08.2011 |
| | | JP5335838B B2 | 06.11.2013 |
| | | US2011061436 A1 | 17.03.2011 |
| | | WO2010107956 A1 | 23.09.2010 |
| | | EP2411112 A1 | 01.02.2012 |
| | | EP2411112 A4 | 03.04.2013 |
| | | DE07842835T T1 | 07.01.2010 |
| | | KR20090083893 A | 04.08.2009 |
| | | KR101202935B B1 | 19.11.2012 |
| | | CN101535095 A | 16.09.2009 |
| | | CN101535095B B | 13.06.2012 |
| | | EP2073999 A2 | 01.07.2009 |
| | | EP2073999 A4 | 11.11.2009 |
| | | WO2008036788 A2 | 27.03.2008 |
| | | WO2008036788 A3 | 19.06.2008 |

Form PCT/ISA/210 (patent family annex) (January 2015)

**INTERNATIONAL SEARCH REPORT**

Information on patent family members

International application No. PCT/ES2016/070425

| Patent document cited in the search report | Publication date | Patent family member(s) | Publication date |
|---|---|---|---|
| EP1008497 A1 | 14.06.2000 | KR20010020550 A | 15.03.2001 |
| | | JPH1143007 A | 16.02.1999 |
| | | WO9906248 A1 | 11.02.1999 |
| | | DE19882581T T1 | 21.09.2000 |
| EP0543075 A1 | 26.05.1993 | JPH05296026 A | 09.11.1993 |
| | | DE4138426 A1 | 27.05.1993 |

Form PCT/ISA/210 (patent family annex) (January 2015)